(19) Europäisches Patentamt
European Patent Office
Office européen des brevets

(11) **EP 4 752 699 A1**

(12) **EUROPEAN PATENT APPLICATION**
published in accordance with Art. 153(4) EPC

(43) Date of publication:
**03.06.2026 Bulletin 2026/23**

(21) Application number: **24890439.3**

(22) Date of filing: **21.10.2024**

(51) International Patent Classification (IPC):
**G06F 3/04842** (2022.01)

(52) Cooperative Patent Classification (CPC):
**G06F 3/04842**

(86) International application number:
**PCT/CN2024/126082**

(87) International publication number:
**WO 2025/103081 (22.05.2025 Gazette 2025/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 17.11.2023 CN 202311544834
23.11.2023 CN 202311580872
23.11.2023 CN 202311580640
23.11.2023 CN 202311589348

(71) Applicant: Honor Device Co., Ltd.
Shenzhen, Guangdong 518040 (CN)

(72) Inventors:
• LIU, Huaxing
Shenzhen, Guangdong 518040 (CN)
• LUO, Hongfeng
Shenzhen, Guangdong 518040 (CN)
• ZHAO, Yanzhe
Shenzhen, Guangdong 518040 (CN)
• ZHAO, Huimin
Shenzhen, Guangdong 518040 (CN)

(74) Representative: Gill Jennings & Every LLP
The Broadgate Tower
20 Primrose Street
London EC2A 2ES (GB)

(54) **VISUAL MEDIA SEARCH METHOD, ELECTRONIC DEVICE AND STORAGE MEDIUM**

(57) Embodiments of this application provide a visual media search method, an electronic device, and a storage medium. The method includes: displaying an interface of an image application including an input box, where the input box includes a text, and the interface includes a thumbnail of a video and a thumbnail of an image. In this way, a matched image and video can be presented to a user based on a text entered by the user, to satisfy a user requirement, thereby improving user experience.

FIG. 3a(1)

TO FIG. 3a(2)

**(Cont. next page)**

EP 4 752 699 A1

EP 4 752 699 A1

FIG. 3a(2)

2

## Description

This application claims priorities to Chinese Patent Application No. CN202311544834.4 filed with the China National Intellectual Property Administration on November 17, 2023 and entitled "VIDEO SEARCH METHOD, ELECTRONIC DEVICE, AND STORAGE MEDIUM", Chinese Patent Application No. CN202311580640.X filed with the China National Intellectual Property Administration on November 23, 2023 and entitled "VISUAL MEDIA SEARCH METHOD AND ELECTRONIC DEVICE", Chinese Patent Application No. CN202311580872.5 filed with the China National Intellectual Property Administration on November 23, 2023 and entitled "VISUAL MEDIA SEARCH METHOD AND ELECTRONIC DEVICE", and Chinese Patent Application No. CN202311589348.4 filed with the China National Intellectual Property Administration on November 23, 2023 and entitled "GALLERY-BASED IMAGE SEARCH METHOD AND ELECTRONIC DEVICE", all of which are incorporated herein by reference in their entireties.

## TECHNICAL FIELD

This application relates to the field of terminal technologies, and in particular, to a visual media search method, an electronic device, and a storage medium.

## BACKGROUND

With continuous improvement of shooting capabilities of electronic devices, many users use electronic devices to shoot pictures and videos. Users also use electronic devices to download various pictures and videos from a network and receive pictures, videos, and the like shared by another device. The electronic devices store the obtained pictures and videos locally. With use of the electronic devices, more pictures and videos are stored in the electronic devices.

Generally, a gallery application (a gallery for short below) of the electronic device can provide pictures and videos stored in the electronic device to a user. The user can find, in a user interface provided by the gallery, the pictures and videos stored in the electronic device. As time goes by, there are more pictures and videos in the gallery, making it difficult to search.

How to provide a convenient and quick search method for users to help them accurately find a needed picture or video in a large quantity of pictures and videos is a problem that needs to be resolved.

## SUMMARY

This application provides a visual media search method, an electronic device, and a storage medium, to help users find a needed picture, video, or the like in a gallery more conveniently, thereby improving user experience of picture and video searching in the gallery.

To achieve the foregoing objective, the following technical solutions are used in this application:

According to a first aspect, this application provides a visual media search method, applied to an electronic device. The electronic device may be a device including a gallery application, such as a mobile phone, a tablet computer, or a notebook computer. The visual media search method includes: The electronic device displays a first interface of the gallery application. For example, the first interface may be an album display interface, a photo display interface, a time point display interface, a creation display interface, or the like of the gallery application. The first interface includes an input box, which supports a function of searching for a picture/video in the gallery application. The input box of the first interface includes a first text. The first text is a search text entered by a user, for example, a "girl doing yoga" or a "boy standing near a bridge". The first interface includes a first thumbnail of a first video, and the first thumbnail corresponds to a video frame in the first video. The first thumbnail includes a first time point, and the first time point is a timestamp in the first video. After the user performs a trigger operation, for example, a tap/click operation, on the first thumbnail, the electronic device starts to play the first video from the first time point.

The electronic device displays a second interface of the gallery application. The second interface includes the input box. The input box includes a second text. The second interface includes a second thumbnail of the first video, the second thumbnail includes a second time point, and the second time point is later than the first time point. After the user performs a trigger operation on the second thumbnail, the electronic device starts to play the first video from the second time point. In other words, after the user triggers the first thumbnail or the second thumbnail, the electronic device plays the first video in both cases, but start playback time points are different, that is, video frames starting to be presented to the user are different.

Based on the first text entered by the user, the electronic device may find the first video. After the user performs the trigger operation on the first thumbnail, the electronic device may play the first video from the first time point, where image content starting to be played from the first time point satisfies a user requirement. Based on the second text entered by the user, the electronic device may find the first video. After the user triggers the second thumbnail, the electronic device starts to play the first video from the second time point later than the first time point, where played image content meets a user requirement. That is, after the user enters a text, a video search result displayed on the electronic device can satisfy a user requirement. In this way, the electronic device can accurately display a video corresponding to a user requirement, which reduces user operations, and improves user experience of the electronic device.

In a possible implementation, the first text entered by the user in the search box is different from the second text. For example, the first text may be a "boy standing on a riverside", and the second text may be a "boy standing near a bridge". The first video matches the first text. For example, the first video includes image content about the "boy standing on a riverside". The first video matches the second text. For example, the first video includes image content about the "boy standing near a bridge". In this way, based on a search text entered by the user, the electronic device can display a video matching the search text, to satisfy a user requirement, where the user does not need to perform a manual search, thereby improving user experience of the electronic device.

In a possible implementation, the first video includes a first video frame and a second video frame, and the second video frame is after the first video frame, that is, when the first video is played, the first video frame is first played, and then the second video frame is played. The first thumbnail corresponds to the first video frame, that is, the displayed first thumbnail is the first video frame of the first video. The second thumbnail corresponds to the second video frame, that is, the displayed second thumbnail is the second video frame of the first video. That the first text matches the first video further includes: the first text matches the first video frame. For example, the first text is a "boy standing on a riverside", and image content of the first video frame includes a boy standing on a riverside. That the second text matches the first video further includes: the second text matches the second video frame. For example, the second text is a "boy standing near a bridge", and image content of the second video frame may include a boy standing near a bridge.

In this way, a search text entered by the user matches image content presented in a video frame corresponding to a thumbnail. Because the search text reflects a user requirement, the electronic device can find a video that accurately corresponds to the user requirement, thereby improving accuracy of video searching and improving user experience.

In a possible implementation, after the user triggers the first thumbnail of the first video, when the electronic device starts to play the first video from the first time point, the electronic device may start to play the first video from the first video frame or a first start frame, where the first start frame is before the first video frame. In other words, the electronic device may start playing from the first video frame matching the first text, or may start playing from the first start frame, and then play the first video frame matching the first text.

Similarly, after the user triggers the second thumbnail of the first video, when the electronic device starts to play the first video from the second time point, the electronic device may start playing from the second video frame matching the second text, or may start playing from a second start frame before the second video frame, and then play the second video frame, where the second start frame is after the first video frame.

After the user triggers a thumbnail, the electronic device may start playing from a video frame matching a search text, or may start playing from a previous video frame. In addition, the second start frame is before the second video frame and is after the first video frame, and the first video frame and the second video frame respectively match the first text and the second text that are different from each other. That is, after the user triggers the second thumbnail, the electronic device does not present the first video frame matching the first text to the user, but may start playing from the second start frame closer to the second video frame. Image content presented in the second start frame is more associated with image content presented in the second video frame than that in the first video frame. In this way, image content presented in a video played to the user not only can be more coherent, but also can more accurately correspond to a user requirement, thereby further improving user experience.

In a possible implementation, the visual media search method further includes: The electronic device displays a third interface of the gallery application. The third interface includes the input box. The input box includes a third text. The third text is different from the first text. For example, the first text may be a "boy standing on a riverside", and the third text may be a "boy standing outdoors". The third interface includes the first thumbnail of the first video. After the user performs a trigger operation on the first thumbnail, the electronic device starts to play the first video from the first time point.

During actual application, different users may have different text descriptions for a same video, and a same user may also have different text descriptions for a same video, that is, the user enters different search texts, but may want to search for a same video search result. In this application, the first video may be found by using the first text, the first video may be found by using the third text, and the electronic device displays the first thumbnail in both cases. In other words, the electronic device may find a same video search result based on different search texts. In this way, the electronic device can find, based on different search texts, a same video that accurately corresponds to a user requirement, thereby improving accuracy of video searching and improving user experience.

In a possible implementation, the first interface further includes a third thumbnail of the first video, and the third thumbnail includes a third time point. The visual media search method further includes: After the user triggers the third thumbnail, the electronic device starts to play the first video from the third time point. The first text matches a third video frame corresponding to the third thumbnail, and the third time point is later than the second time point. As mentioned above, the first text may also match the first video frame corresponding to the first thumbnail. That is, different video frames of a same video may be found by using a same search text. In this way, different video frames in a video can be found based on a same search text. Therefore, in this application, based on a search text, a search result accurately corresponding to the search text can be displayed, thereby improving accuracy of video searching and improving user experience.

In a possible implementation, after the user triggers the third thumbnail of the first video, when the electronic device starts to play the first video from the third time point, the electronic device may start playing from the third video frame matching the first text, or may start playing from a third start frame before the third video frame, so that the electronic device may play the third video frame, where the third start frame is after the second video frame.

In this way, the first video may start to be played from the third start frame that is more associated with the third video frame, or the first video may start to be played directly from the third video frame. In both cases, image content matching the first text can be presented to the user, to satisfy a user requirement and improve user experience.

In a possible implementation, the first interface further includes a fourth thumbnail of a second video, and the fourth thumbnail includes a fourth time point. The visual media search method further includes: After the user triggers the fourth thumbnail, the electronic device starts to play the second video from the fourth time point. The first text matches a fourth video frame corresponding to the fourth thumbnail. In this way, based on a same search text entered by the user, different video frames of different videos that match the search text can be found, thereby improving accuracy of video searching and improving user experience.

In a possible implementation, the visual media search method further includes: The electronic device displays a leftmost screen interface. The leftmost screen interface includes a search box. The search box supports an online search and a search in local files of the electronic device. The search box includes the first text. The leftmost screen interface includes the first thumbnail of the first video, and the first thumbnail includes the first time point. After the user triggers the first thumbnail, the electronic device may start to play the first video from the first time point.

In this way, in this application, the user can search for a video by using the search box of the gallery application, and the user can search for a video by using the search box of the leftmost screen interface, thereby further improving user experience.

According to a second aspect, this application provides a visual media search method, applied to an electronic device. The electronic device may be a device including a gallery application, such as a mobile phone, a tablet computer, or a notebook computer. The visual media search method includes: The electronic device displays a first interface of the gallery application. For example, the first interface may be an album display interface, a photo display interface, a time point display interface, a creation display interface, or the like of the gallery application. The first interface includes an input box, which supports a function of searching for a picture/video in the gallery application. The input box of the first interface includes a first text. The first text is a search text entered by a user, for example, a "boy standing outdoors" or a "girl dancing indoors". The first interface includes a first thumbnail of a first video. The first thumbnail includes a first time point, and the first time point is a timestamp in the first video. The first text is matched with a first video frame corresponding to the first thumbnail by using a CLIP model, that is, a text semantic meaning of the first text is matched with a visual semantic meaning of the first video frame. The CLIP model is a pre-trained neural network model for matching an image and a text, that is, may match the first text entered by the user and the first video frame. After the user performs a trigger operation, for example, a tap/click operation, on the first thumbnail, the electronic device starts to play the first video from the first time point.

The electronic device displays a second interface of the gallery application. The second interface includes the input box. The input box includes a second text. The second interface includes a second thumbnail of the first video, the second thumbnail includes a second time point, and the second time point is later than the first time point. The second text is matched with a second video frame corresponding to the second thumbnail by using the CLIP model, that is, a text semantic meaning of the second text is matched with a visual semantic meaning of the second video frame. After the user performs a trigger operation on the second thumbnail, the electronic device starts to play the first video from the second time point. In other words, after the user triggers the first thumbnail or the second thumbnail, the electronic device plays the first video in both cases, but start playback time points are different, that is, video frames starting to be presented to the user are different.

In this way, based on a search text entered by the user, a video frame matching the search text can be found. A text semantic meaning of the search text is fully associated with a visual semantic meaning of the video frame, so that fusion and interaction between the search text and image content presented in the video frame can be implemented, thereby improving accuracy of video searching and improving user experience.

In a possible implementation, some video segments may be obtained by dividing a video. The first video frame is in a first video segment of the first video, and the second video frame is in a second video segment of the first video. The first video frame and the second video frame may be determined through the following steps: First, the electronic device performs first processing on the first video, for example, performs frame splitting processing on the first video, to obtain a plurality of video frames of the first video and a classification tag of each video frame. The classification tag is a category of an object presented in the video frame. For example, the classification tag may be a person, a plant, an animal, a building, natural scenery, or the like. Then, the electronic device performs second processing on the first video based on classification tags respectively corresponding to the plurality of video frames, for example, performs segmentation processing on the first video, to divide the first video into a plurality of video segments, so as to obtain a plurality of video segments including the first video segment and the second video segment. Subsequently, the electronic device determines a video frame of the first video segment as the first video frame, that is, determines the first video frame as a representative frame of the first video segment, which may be used to represent the first video segment; and the electronic device determines a video frame of the second video segment as the second video frame, and determines the second video frame as a representative frame of the second video segment, which may be used to represent the second video segment.

In this way, if this solution is implemented on the electronic device, not all video frames of a video need an index to be constructed, which avoids increasing a latency required for search matching. Instead, an index of the first video segment may be constructed based on the first video frame, and an index of the second video segment may be constructed based on the second video frame, which greatly reduces a quantity of indexes and accelerates video searching, thereby further improving user experience and reducing costs consumed during index construction.

In a possible implementation, that the electronic device performs the second processing on the first video based on the classification tags respectively corresponding to the plurality of video frames further includes: The electronic device performs the second processing on the first video based on a difference between image parameters respectively corresponding to adjacent video frames of the plurality of video frames of the first video and a difference between classification tags respectively corresponding to the adjacent video frames of the plurality of video frames. The image parameter is a presentation characteristic of the video frame, for example, a jitter degree, a definition, or a pixel value. For example, the electronic device may perform the second processing on the first video based on a difference between definitions respectively corresponding to adjacent video frames such as the $1^{st}$ video frame and the $2^{nd}$ video frame of the first video and a difference between classification tags respectively corresponding to the adjacent video frames such as the $1^{st}$ video frame and the $2^{nd}$ video frame. In this way, the plurality of video segments including the first video segment and the second video segment are obtained.

In this way, a category change in objects presented in the plurality of video frames may be determined based on the classification tags, and a quality change in images presented in the plurality of video frames may be determined based on the image parameters. Video frames presenting more similar image content may be put into one video segment, to help to determine a video frame that may represent the video segment, so that representative frames respectively corresponding to a plurality of video segments of one video can completely represent image content presented in the video.

In a possible implementation, that the electronic device determines a video frame of the first video segment as the first video frame, that is, the representative frame that may represent the first video segment, further includes: The electronic device determines a first start frame, that is, the $1^{st}$ video frame, of the first video segment, a first end frame, that is, the last video frame, of the first video segment, a random video frame in a plurality of video frames of the first video segment, or a video frame corresponding to a time point at a first position as the first video frame. The time point at the first position may be obtained based on an average value of a start time point and an end time point of the first video segment, that is, an intermediate time point of the first video segment is obtained, and a video frame corresponding to the intermediate time point is an intermediate frame of the first video segment. In this way, any video frame of a video segment may represent the video segment, which makes it convenient for the electronic device to construct an index for the video segment.

In a possible implementation, that the electronic device determines a video frame of the first video segment as the first video frame further includes: The electronic device determines the first video frame based on image parameters respectively corresponding to the plurality of video frames of the first video segment and classification tags respectively corresponding to the plurality of video frames of the first video segment. A video frame more representative of the first video segment is determined based on image quality of the video frames and categories of objects presented in the video frames. In this way, accuracy of an index subsequently constructed based on the representative frame can be improved, thereby further improving accuracy of video searching and improving user experience.

In a possible implementation, that the first text is matched with the first video frame corresponding to the first thumbnail by using the CLIP model further includes: The electronic device inputs the first text into a text encoder of the CLIP model, to obtain a text semantic vector of the first text, which can represent a semantic feature of the entire first text. Then, the electronic device inputs the first video frame into an image encoder of the CLIP model, to obtain a visual semantic vector of the first video frame, which can represent a semantic feature of the first video frame. Subsequently, the electronic device matches the first text and the first video frame based on the text semantic vector and the visual semantic vector.

In this way, the first video frame may be used to represent the first video segment, and therefore, the visual semantic vector of the first video frame is fully associated with the first video segment. The electronic device obtains the visual semantic vector of the first video frame through matching based on the text semantic vector of the first text, so that fusion and interaction between the search text and image content presented in the representative frame can be implemented, thereby improving accuracy of video searching and improving user experience.

In a possible implementation, a first vector similarity between the text semantic vector of the first text and the visual semantic vector of the first video frame is greater than or equal to a first threshold. In this way, the first threshold is set to determine the visual semantic vector of the first video frame having a high vector similarity, so that a more accurate video search result is displayed to the user.

In a possible implementation, an inverted index database includes a plurality of visual semantic vectors, and the electronic device may cluster the visual semantic vectors to determine a plurality of cluster center points and clusters respectively corresponding to the plurality of cluster center points. The visual semantic vector of the first video frame belongs to a first cluster corresponding to a first cluster center point. Therefore, a second vector similarity between the text semantic vector of the first text and a vector of the first cluster center point in the inverted index database is greater than or equal to a second threshold. A third vector similarity between the text semantic vector of the first text and the visual semantic vector is greater than or equal to a third threshold.

In this way, when search matching is performed based on a text semantic vector of a search text, the electronic device may first match the text semantic vector with the plurality of cluster center points, and then match the text semantic vector with a visual semantic vector of a cluster of a determined cluster center point, to avoid matching with all indexes in the index database. This further reduces a search latency and improves efficiency of video searching, thereby improving user experience.

In a possible implementation, an entity of the first text matches an entity of an attribute tag of the first video segment. In this way, based on a search text entered by the user, the electronic device not only performs search matching based on a text semantic vector, but also performs search matching based on an entity in the search text. That is, the electronic device may perform a vector recall and an entity recall, and can present a video search result that is a vector recall result and an entity recall result to the user, thereby further improving accuracy of video searching and improving user experience.

In a possible implementation, the first interface displayed on the electronic device further includes a third thumbnail of a second video, and a third video frame corresponding to the third thumbnail is in a third video segment of the second video. The entity of the first text matches an entity of an attribute tag of the third video segment. In this way, in addition to a vector recall, the electronic device may further perform an entity recall, to present an entity recall result and a vector recall result to the user, which improves comprehensiveness of a video search result, thereby further improving accuracy of video searching and improving user experience.

In a possible implementation, the first interface displayed on the electronic device further includes a fourth thumbnail of the first video, the first text matches a fourth video frame corresponding to the fourth thumbnail, the fourth video frame is in a fourth video segment of the first video, and the entity of the first text matches an entity of an attribute tag of the fourth video segment. Moreover, the entity of the first text matches the entity of the attribute tag of the first video segment, and the first text matches the first video frame. In the first interface displayed on the electronic device, the first thumbnail is presented before the fourth thumbnail.

A presentation order between the first thumbnail and the fourth thumbnail may be determined through the following steps: The electronic device determines a first comprehensive matching degree between the first thumbnail and the first text based on the first vector similarity between the visual semantic vector of the first video frame and the text semantic vector of the first text and a first matching degree between the attribute tag of the first video segment and the entity of the first text. Then, the electronic device determines a second comprehensive matching degree between the second thumbnail and the first text based on a second vector similarity between a visual semantic vector of the fourth video frame and the text semantic vector of the first text and a second matching degree between the attribute tag of the fourth video segment and the entity of the first text. Then, the electronic device presents the first thumbnail before the fourth thumbnail in descending order of the comprehensive matching degrees, that is, the first comprehensive matching degree is greater than the second comprehensive matching degree, and a thumbnail with a higher comprehensive matching degree is presented in front.

In this way, video search results are sorted based on comprehensive matching degrees, to ensure that a video search result ranked at a better position is a result that better matches a search text of the user, thereby further improving user experience.

According to a third aspect, this application provides a visual media search method. The method is performed by an electronic device, and the method includes: displaying a first interface, where the first interface includes a search box; receiving a first operation of entering a search text in the search box by a user, where the search text includes first information representing a person relationship; and displaying a first search result in response to the first operation, where the first search result corresponds to a first video, the first video includes a first person, a relationship between the first person and a central person is consistent with the first information, and the central person is a person at a social center of persons included in visual media stored in the electronic device.

In the visual media search method provided in the third aspect, when the search text entered by the user includes the first information representing the person relationship, the electronic device can display, in response to the operation of the user, the first video including a person relationship matching the first information. In this way, a search result includes a video, so that a more comprehensive search result is provided for the user, thereby improving user experience. In addition, the user can find a matched video by using a person relationship, so that a search manner in more dimensions is provided for the user, thereby improving user experience.

In a possible implementation, the method further includes: displaying a second search result in response to the first operation. The second search result corresponds to a first image. The first image includes a second person, and a relationship between the second person and the central person is consistent with the first information.

In other words, a search result not only includes a video, but also includes an image. In this way, more search results and more comprehensive search results are provided for the user, thereby improving user experience.

In a possible implementation, the first video includes a plurality of second video segments, the plurality of second video segments include at least one hit video segment, and the hit video segment is a video segment including the first person in the plurality of second video segments.

In this implementation, a video is segmented to obtain a plurality of video segments. Because videos are dynamic, one video usually has many scene changes. Different scenes are separated through video segmentation, so that a plurality of image semantic meanings and a plurality of person relationships in the video can be recognized, and information obtained from the video is more comprehensive and accurate. Moreover, for each video segment, interference from unrelated information can be reduced, and accuracy of searching can be improved.

In a possible implementation, the method further includes: receiving a second operation of tapping/clicking the first search result by the user; and starting to play the first video from the 1st frame of image of a first hit video segment or starting to play the first video from a representative frame of image in response to the second operation. The first hit video segment is one of the at least one hit video segment, the representative frame of image is a frame of image in the first hit video segment, and the representative frame of image includes the first person.

In this implementation, the user taps/clicks the first search result, that is, the user taps/clicks the first video, and the first video starts to be played from a frame of a hit video segment in response to the tapping/clicking of the user. In this way, the first video can start to be played directly from a position related to the search text, so that the user can directly see a hit video segment related to the search text, and the user does not need to wait during the playing or drag a playback progress bar to find the hit video segment, thereby improving user experience.

In a possible implementation, displaying the first search result includes: displaying a thumbnail of a cover frame of image. The cover frame of image is a frame of image in the first video, a first playback moment is displayed in the thumbnail, and the first playback moment is within a closed interval formed by a start playback moment and an end playback moment of the first hit video segment.

In this implementation, the first playback moment is displayed in the thumbnail of the cover frame of image, so that the user can intuitively learn of a position of the hit video segment in the first video, thereby improving user experience.

In a possible implementation, the first playback moment is the start playback moment of the first hit video segment, the end playback moment of the first hit video segment, an intermediate playback moment of the first hit video segment, or a playback moment corresponding to the representative frame of image.

In a possible implementation, the cover frame of image is the 1st frame of image of the first video, or the 1st frame of image of the first hit video segment, or the representative frame of image.

In this implementation, the cover frame is the 1st frame of image or the representative frame of image of the first hit video segment, so that the user can intuitively learn of an image related to the search text in the video by using the cover frame, thereby improving user experience.

According to a fourth aspect, this application provides a visual media search method. The method is performed by an electronic device, and the method includes: displaying a first interface, where the first interface includes a search box; receiving a first operation of entering a search text in the search box by a user; recognizing, in response to the first operation, first information representing a person relationship in the search text; searching a plurality of videos for a first video based on the first information, where the first video includes a plurality of second video segments, the plurality of second video segments include at least one hit video segment, person relationship information corresponding to the hit video segment is consistent with the first information, the person relationship information is used to represent a relationship between a person included in visual media and a central person, and the central person is a person at a social center of persons included in visual media stored in the electronic device; and displaying a first search result corresponding to the first video.

In the visual media search method provided in the fourth aspect, after the user enters the search text, the electronic device can recognize information in the search text, including the first information representing the person relationship in the search text. Then, the electronic device can search video segments included in videos for a video corresponding to a video segment in which a person relationship is consistent with the first information, to obtain the first video. In the method, video searching can be implemented, to provide more search results and more comprehensive search results for the user, thereby improving user experience. In addition, the user can find a matched video by using a person relationship, so that a search manner in more dimensions is provided for the user, thereby improving user experience. Further, in the method, searching is performed based on a plurality of video segments of a video. Videos are dynamic, one video usually has many scene changes, and different video segments can represent different scenes. In this way, a plurality of image semantic meanings and a plurality of person relationships in the video can be recognized, and information obtained from the video is more comprehensive and accurate. Moreover, for each video segment, interference from unrelated information can be reduced, and accuracy of searching can be improved.

In a possible implementation, the method further includes: searching a plurality of images for a first image based on the first information, where person relationship information corresponding to the first image is consistent with the first information; and displaying a second search result corresponding to the first image.

In other words, a search result not only includes a video, but also includes an image. In this way, more search results and more comprehensive search results are provided for the user, thereby improving user experience.

In a possible implementation, the method further includes: performing natural language understanding processing on the search text, to recognize a first semantic subject and category information in the search text; and performing text semantic understanding on the search text, to obtain a text semantic vector. Searching the plurality of videos for the first video based on the first information includes: performing a plurality of recalls in an index database based on the first information, the first semantic subject, the category information, and the text semantic vector, to obtain a recall result, where the recall result includes the first video. The index database includes indexes of attribute information, person relationship information, and visual semantic vectors of a plurality of video segments and a plurality of images. The attribute information includes at least one of visual media obtaining time, a visual media obtaining location, a classification tag of visual media, and a semantic subject of the visual media.

In this implementation, matching is performed with the search text in a plurality of dimensions, that is, an all-round search is performed in a plurality of dimensions, so that a matching degree between a search result and the search text is greatly improved, thereby improving user experience. In addition, a plurality of recall results are sorted, so that the user can preferentially see visual media having a high matching degree with the search text, thereby improving user experience.

In a possible implementation, the method further includes: receiving a third operation of adding and/or modifying target visual media by the user, where the target visual media includes a target video and a target image; performing segmentation processing on the target video in response to the third operation, to obtain a plurality of third video segments; extracting a frame of image from each third video segment as a representative frame of image; obtaining person relationship information and visual semantic vectors of each target image and each representative frame of image; obtaining attribute information of each target image and attribute information of each target video; and constructing indexes of the attribute information, the person relationship information, and the visual semantic vectors of each target image and each third video segment in the index database based on the person relationship information and the visual semantic vectors of each target image and each representative frame of image and the attribute information of each target image and each target video.

In this implementation, processing such as person relationship analysis and semantic understanding is performed based on a representative frame extracted from each video segment. In this way, not all frames of images in the video segment need to be processed, so that noise information can be reduced, and computed content, stored content, and the like can be reduced, thereby reducing resource overheads.

In a possible implementation, obtaining the person relationship information and the visual semantic vectors of each target image and each representative frame of image includes: performing person relationship analysis on each target image and each representative frame of image, to obtain the person relationship information corresponding to each target image and the person relationship information corresponding to each representative frame of image; and performing image semantic understanding on each target image and each representative frame of image, to obtain the visual semantic vector of each target image and the visual semantic vector of each representative frame of image.

In a possible implementation, constructing the indexes of the attribute information, the person relationship information, and the visual semantic vectors of each target image and each third video segment in the index database based on the person relationship information and the visual semantic vectors of each target image and each representative frame of image and the attribute information of each target image and each target video includes: using person relationship information corresponding to a first representative frame of image as person relationship information corresponding to a fourth video segment, where the first representative frame of image is any representative frame of image, and the fourth video segment is a video segment to which the first representative frame of image belongs; using a visual semantic vector of the first representative frame of image as a visual semantic vector of the fourth video segment; and constructing the indexes of the attribute information, the person relationship information, and the visual semantic vectors of each target image and each third video segment in the index database based on the person relationship information and the visual semantic vectors of each target image and each third video segment and the attribute information of each target image and each target video.

In a possible implementation, performing image semantic understanding on each target image and each representative frame of image, to obtain the visual semantic vector of each target image and the visual semantic vector of each representative frame of image includes: searching information marked by the user for the target image and the target video for person relationship information, to obtain marked relationship information; recognizing a social circle and a type of the social circle based on a face image set, where the face image set includes a plurality of face images, the face image is an image including a face, the plurality of face images include a target face image and a face representative frame, the target face image is an image including a face in the target images, the face representative frame is an image including a face in the representative frames, the social circle is a set of persons that have a same social relationship with the central person, and the type of the social circle represents a type of the social relationship between a person in the social circle and the central person; and determining, based on the marked relationship information, the social circle, and the type of the social circle, the person relationship information corresponding to each target image and the person relationship information corresponding to each representative frame of image.

In a possible implementation, recognizing the social circle and the type of the social circle based on the face image set includes: performing face clustering processing on the plurality of face images, to generate a face clustering result, where the face clustering result represents a correspondence between the plurality of face images, a plurality of faces, and a plurality of persons; determining a person image heterogeneous graph based on the face clustering result, where the person image heterogeneous graph represents a correspondence between the plurality of face images and the plurality of persons; determining an intimacy between each two of the plurality of persons based on the person image heterogeneous graph, where the intimacy represents an association degree between the persons; recognizing the social circle based on the intimacy between each two persons and the person image heterogeneous graph; and determining the type of the social circle based on the person image heterogeneous graph.

In this implementation, first, the social circle and the type of the social circle can be recognized based on the face clustering result without relying on user marking, which achieves high intelligence, and improves user experience. Second, in the process, the central person can be accurately recognized without obtaining face unlocking or other information of the user, and then the social circle and the social circle type can be recognized, so that security of private information of the user is not affected, user experience is further improved. Third, the process is performed based on images in a gallery database, and may be completed offline without relying on a network. Compared with recognizing a social circle and a type of the social circle based on social behavior on a social network, the method is more applicable, and a recognition result is more targeted for the user of the electronic device, thereby further improving user experience. Fourth, in the process, the social circle is first recognized, and then based on a recognition result of the social circle, the type of the social circle is determined, and a type of a relationship between persons in the social circle is corrected. Compared with obtaining different social circles and types of the social circles separately by classifying relationships between persons, the method provided in this application is more accurate in recognizing the social circle and the type of the social circle, and provides better user experience.

In a possible implementation, the person image heterogeneous graph includes a plurality of image nodes and a plurality of person nodes, the plurality of image nodes are in one-to-one correspondence with the plurality of face images, and the plurality of person nodes are in one-to-one correspondence with the plurality of persons. Recognizing the social circle based on the intimacy between each two persons and the person image heterogeneous graph includes: removing the plurality of image nodes in the person image heterogeneous graph, and connecting, based on the intimacy between each two persons by using an edge, person nodes corresponding to two persons between which an intimacy is not 0, to obtain a person connection graph; recognizing the central person based on the person image heterogeneous graph; removing a person node corresponding to the central person in the person connection graph, to obtain a central person-removed connection graph; and performing community discovery on the central person-removed connection graph, to obtain the social circle.

In this implementation, the person image heterogeneous graph is simplified into the person connection graph, and a relationship between persons does not need to be searched for based on images in the gallery application, thereby simplifying a process of obtaining the person connection graph, and improving algorithm operation efficiency.

In a possible implementation, determining the type of the social circle based on the person image heterogeneous graph includes: inputting the person image heterogeneous graph into a graph neural network model, to extract a person feature vector of each of the plurality of persons and an image feature vector of each face image; inputting the person feature vector and the image feature vector into a multi-layer perceptron model, to predict a type of a social relationship between each of the plurality of persons and the central person; determining a quantity of persons corresponding to each social relationship type in the social circle; and determining a social relationship type corresponding to a largest quantity of persons as the type of the social circle.

In this implementation, a type of a social relationship between a person and the central person can be simply, quickly, and accurately predicted based on the pre-trained graph neural network model and multi-layer perceptron model, and then the type of the social circle is determined based on the type of the social relationship.

In a possible implementation, in the visual media stored in the electronic device, a time distribution divergence and a location distribution divergence of visual media including the central person satisfy a preset condition, the time distribution divergence is a distribution divergence of obtaining time of the visual media, and the location distribution divergence is a distribution divergence of an obtaining location of the visual media.

The central person is at a center of social interaction. For any person, a more even location distribution and a more even time distribution indicate a larger possibility that the person is the central person. In this implementation, the central person determined depending on whether the time distribution divergence and the location distribution divergence satisfy the preset condition is more accurate.

According to a fifth aspect, this application provides a visual media search method. The method is performed by an electronic device. The electronic device may be a device including a gallery application, such as a mobile phone, a tablet computer, or a notebook computer. The method includes: The electronic device displays a first interface of the gallery application. The first interface includes a search box. The electronic device receives a first operation of entering a first text in the search box by a user. The electronic device performs a search in response to the first operation, to obtain a plurality of hit results matching the first text. The plurality of hit results include at least one hit image and at least one hit video segment, and the at least one hit video segment is a video segment in at least one target video. The electronic device determines a matching score of each hit result. The matching score represents a matching degree between the hit result and the first text. The electronic device sorts the at least one hit image and the at least one target video based on the matching score of each hit result, to obtain a first sorting result. The electronic device displays the at least one hit image and the at least one target video based on the first sorting result.

The first interface may be, for example, an album interface, a photo interface, an interface of a moment function, or a creation interface of the gallery application. The first text is a search text entered by the user, for example, a "girl doing yoga" or a "boy standing near a bridge".

In this embodiment of this application, the hit results include an image (referred to as a hit image) and a video segment (referred to as a hit video segment). The electronic device scores a matching degree of each of the hit image and the hit video segment, to obtain a matching score. Then, the hit image and a video (referred to as a target video, and also referred to as a hit video) to which the hit video segment belongs are sorted based on matching scores. Optionally, a higher matching score indicates a higher matching degree between the hit image or the hit video segment and the first text. Optionally, the hit image and the target video may be sorted in descending order of the matching scores.

In the visual media search method provided in the fifth aspect, first, the method is not only applicable to image searching, but also applicable to video searching, to provide more search results and more comprehensive search results for the user, thereby improving user experience. Next, in the method, images and videos in a search result can be sorted together for presentation, to reflect matching degrees between the search text and different images or videos, which makes it easier for the user to find an image or a video that meets a search intention, thereby improving user experience.

With reference to the fifth aspect, in some implementations of the fifth aspect, sorting the at least one hit image and the at least one target video based on the matching score of each hit result, to obtain the first sorting result includes: for a first target video, using a highest score in matching scores of all first hit video segments as a matching score of the first target video, where the first target video is any one of the at least one target video, and the first hit video segment is a hit video segment in the first target video; and sorting the at least one hit image and the at least one target video based on matching scores, to obtain the first sorting result.

In other words, for any target video, a highest matching score of hit video segments included in the target video is used as a matching score of the target video, to participate in sorting.

One target video may include a plurality of hit video segments, and different hit video segments may correspond to different matching scores. In this implementation, the highest matching score of all the hit video segments is used as the matching score of the target video, so that a matching degree between the target video and the first text can be better reflected; and the target video participates in matching degree sorting based on the matching score, so that the obtained first sorting result is more accurate, and user experience can be further improved.

In a possible implementation, there are a plurality of first hit video segments, and the method further includes: sorting the plurality of first hit video segments based on matching scores, to obtain a second sorting result.

As described above, one target video may include a plurality of hit video segments. A plurality of hit video segments of a same target video may be sorted, and a sorting result is referred to as a second sorting result.

In a possible implementation, after the at least one hit image and the at least one target video are displayed based on the first sorting result, the method further includes: receiving a second operation of playing the first target video by the user; and playing the plurality of first hit video segments sequentially based on the second sorting result in response to the second operation.

For example, a target video includes a hit video segment 1, a hit video segment 2, and a hit video segment 3. A sorting result obtained by sorting the three hit video segments in descending order of matching scores is: the hit video segment 2, the hit video segment 3, and the hit video segment 1. Then, when the user taps/clicks to play the target video, the three hit video segments may be sequentially played in this order. In this way, a hit video segment having a high matching degree with the search text is preferentially presented to the user, which has a higher probability of matching a search intention of the user, thereby improving user experience.

In a possible implementation, displaying the at least one hit image and the at least one target video includes: displaying a thumbnail of each hit image and a thumbnail of each target video. A thumbnail of the first target video is a thumbnail of a frame of image in a second hit video segment, and the second hit video segment is a video segment having the highest matching score in all the first hit video segments. One or more of the following data is displayed in the thumbnail of the first target video: a start playback moment of the second hit video segment, an end playback moment of the second hit video segment, an intermediate playback moment of the second hit video segment, a total quantity of the first hit video segments, and a total quantity of video segments included in the first target video.

Optionally, the thumbnail of the first target video may be a frame of image in the hit video segment having the highest matching score, for example, a representative frame of the hit video segment having the highest matching score. The representative frame has a large probability of matching the search text (the first text), and the user can intuitively learn from the thumbnail that the target video includes content that the user wants to search for, thereby improving user experience.

In addition, the foregoing data is further displayed in the thumbnail, so that the user intuitively learns of information about the video and information about the hit video segment, thereby further improving user experience.

In a possible implementation, determining the matching score of each hit result includes: determining a plurality of matching dimensions based on the first text; determining a dimension score of each hit result in each matching dimension, where a dimension score of a first hit result in a first matching dimension represents a matching degree between the first hit result and the first text in the first matching dimension, the first hit result is any one of the at least one hit result, and the first matching dimension is any one of the plurality of matching dimensions; calculating a weight of each matching dimension based on the dimension score of each hit result in each matching dimension; and performing weighted summation on dimension scores of the first hit result in the matching dimensions based on the weight of each matching dimension, to obtain a matching score of the first hit result.

Optionally, the first text may be recognized for natural language understanding, and recognized information categories such as a semantic subject and a person relationship are respectively used as matching dimensions. In addition, a semantic vector is used as a matching dimension.

In this implementation, the matching score is calculated through weighted summation, so that contributions of information in different matching dimensions to a final matching degree are fully considered. Therefore, the obtained matching score better conforms to an actual situation and is more accurate. Moreover, a probability that matching scores of different hit results are the same is small, so that occurrence of cases in which matching degrees cannot be distinguished for hit results is reduced. In addition, in the method, no data set needs to be constructed, so that no user data needs to be acquired, thereby better protecting privacy security of the user, satisfying a user data "minimization" principle, and improving user experience.

In a possible implementation, calculating the weight of each matching dimension based on the dimension score of each hit result in each matching dimension includes: normalizing a dimension score matrix, to obtain a normalized matrix, where the dimension score matrix is a matrix formed by the dimension score of each hit result in each matching dimension; calculating information entropy of each matching dimension based on the normalized matrix; and calculating the weight of each matching dimension based on the information entropy of each matching dimension, where a weight of the first matching dimension is negatively correlated to information entropy of the first matching dimension.

In this implementation, the information entropy of each matching dimension is calculated, and the weight is determined based on the information entropy, so that no weight needs to be manually set. Moreover, the information entropy can quantitatively measure magnitudes of data variation degrees in different matching dimensions, to reflect contributions of data in different matching dimensions to a final matching score. Therefore, weights of different matching dimensions can be accurately allocated, thereby improving accuracy of matching score calculation. In addition, in the method, the dimensional score matrix is normalized, and the information entropy and the weight are calculated based on the normalized matrix obtained through normalization processing, which can ensure that matching degrees of hit results in different matching dimensions are measured in a same dimension, thereby improving accuracy of weight and matching score calculation.

According to a sixth aspect, this application provides a visual media search method. The method is performed by an electronic device, and the method includes: displaying a first interface of a gallery application, where the first interface includes a search box, the search box includes a first text, the first interface further includes a first thumbnail of a first target video, a first playback moment is displayed in the first thumbnail, and the first playback moment corresponds to a first target frame of image in the first target video; starting to play the first target video from the first playback moment in response to a trigger operation performed by a user on the first thumbnail; and displaying a playback progress bar, where first mark information marking the first playback moment and second mark information marking a second playback moment are displayed in the playback progress bar, the second playback moment corresponds to a second target frame of image in the first target video, and both the first target frame of image and the second target frame of image match the first text.

The first text is a search text entered by the user in the search box. The first target video is a video matching the first text, and is also referred to as a hit video.

The trigger operation on the first thumbnail may be, for example, tapping/clicking the first thumbnail. The first mark information and the second mark information may be video tags, or may be information such as texts or symbols.

In short, the first target video includes at least two frames of images matching the first text. One frame is referred to as the first target frame of image, and another frame is referred to as the second target frame of image. A playback moment corresponding to the first target frame of image is the first playback moment, and a playback moment corresponding to the second target frame of image is the second playback moment. The user taps/clicks the thumbnail of the first target video, and the electronic device starts to play the first target video from the first target frame of image, that is, starts to play the first target video from a frame of image matching the first text. In this way, the user can most quickly and directly see images that meet a search intention, without searching one by one by using the playback progress bar, thereby improving user experience.

In addition, the first mark information and the second mark information are displayed in the playback progress bar, so that the user intuitively learns of a position of content related to the search text in the video, thereby improving user experience.

With reference to the sixth aspect, in some implementations of the sixth aspect, the method further includes: starting to play the first target video from the second playback moment in response to an operation performed by the user on the second mark information.

For example, the user taps/clicks the second mark information, and the electronic device jumps a playback progress to the second playback moment, that is, jumps to the second target frame of image. The second target frame of image matches the first text. Therefore, in the method, the user can view, in one step, an image matching the search text, without dragging the playback progress bar to find related content, thereby facilitating user operations and further improving user experience.

In a possible implementation, the first target video further includes at least one third target frame of image, the third target frame of image is different from the first target frame of image and the second target frame of image, and the third target frame of image matches the first text. The first playback moment is an earliest one of the first playback moment, the second playback moment, and a playback moment corresponding to each third target frame of image. Alternatively, the first target frame of image is one having a highest matching degree with the first text in the first target frame of image, the second target frame of image, and the at least one third target frame of image.

In other words, the first target video includes a plurality of target frames of images matching the first text. In this case, in an implementation, a target frame of image having earliest playback time may be displayed in a thumbnail (that is, the first thumbnail) of the first target video. When the user taps/clicks for playing, the video starts to be played from the target frame of image having the earliest playback time. That is, the target frames of images matching the first text are sequentially played in a chronological order. In this way, display of images conforms to the chronological order, which helps the user recall a related scene of the video, thereby improving user experience.

In another implementation, a target frame of image having a highest matching degree with the first text may alternatively be displayed in the thumbnail of the first target video. When the user taps/clicks for playing, the video starts to be played from the target frame of image having the highest matching degree with the first text. In this way, an image that better matches a search intention of the user is preferentially displayed, thereby improving user experience.

In a possible implementation, sorting information of the first target frame of image, the second target frame of image, and the at least one third target frame of image is further displayed in the playback progress bar. The sorting information represents sorting of matching degrees between the first text and the frames of images.

Optionally, a sorting sequence number may be displayed in the playback progress bar. For example, digits "1", "2", and "3" are displayed. This helps the user intuitively learn of a matching degree between each target frame of image and the search text, thereby improving user experience.

In a possible implementation, the sorting information is represented by using one or more of a color, a text, a figure, and a symbol.

According to a seventh aspect, this application provides a visual media search method. The method is performed by an electronic device, and the method includes: displaying a first interface of a gallery application, where the first interface includes a search box, the search box includes a first text, the first interface further includes a first thumbnail of a first target video, and a first playback moment is displayed in the first thumbnail; starting to play the first target video from the first playback moment in response to a trigger operation performed by a user on the first thumbnail; and displaying a playback progress bar, where mark information of a first playback time period and mark information of a second playback time period are displayed in the playback progress bar, the first playback time period corresponds to a first video segment in the first target video, the first playback time period includes the first playback moment, the second playback time period corresponds to a second video segment in the first target video, at least one frame of image in the first video segment matches the first text, and at least one frame of image in the second video segment matches the first text.

In short, the first target video includes at least two video segments (referred to as hit video segments) matching the first text. One segment is referred to as the first video segment, and another segment is referred to as the second video segment. The user taps/clicks the thumbnail of the first target video, and the electronic device starts to play the first target video from a frame of image in the first video segment, that is, starts to play from a video segment matching the first text. In this way, the user can most quickly and directly see video segments that meet a search intention, without searching one by one by using the playback progress bar, thereby improving user experience.

With reference to the seventh aspect, in some implementations of the seventh aspect, starting to play the first target video from the first playback moment includes: starting to play the first video segment from the 1st frame of image of the first video segment; or starting to play the first video segment from a first target frame of image in the first video segment, where the first target frame of image matches the first text. Optionally, the first target frame of image may be, for example, a representative frame of the first video segment.

In other words, when a hit video segment is played, the hit video segment may start to be played from the 1st frame of image of the hit video segment. The video segment may be a result obtained by dividing the video based on scenes. Therefore, the hit video segment may include a plurality of frames of images matching the first text. The method can comprehensively present an image meeting a search intention to the user, thereby improving user experience.

Optionally, the hit video segment may alternatively start to be played from a target frame of image matching the first text in the hit video segment. In this way, an image meeting a search intention is intuitively presented to the user, thereby improving user experience.

In a possible implementation, the method further includes: playing the second video segment after the playing of the first video segment is completed.

That is, only the hit video segments may be played, and a non-hit video segment is skipped. In this way, user time can be saved, and user experience can be improved.

In a possible implementation, first mark information corresponding to the first video segment and second mark information corresponding to the second video segment are further displayed in the playback progress bar. The method further includes: playing the second video segment in response to an operation performed by the user on the second mark information.

For example, the user taps/clicks the second mark information, and the electronic device jumps a playback progress to the second video segment. At least one frame of image in the second video segment matches the first text. Therefore, in the method, the user can view, in one step, a video segment matching the search text, without dragging the playback progress bar to find related content, thereby facilitating user operations and further improving user experience.

In a possible implementation, playing the second video segment includes: starting to play the second video segment from the 1st frame of image of the second video segment; or starting to play the second video segment from a second target frame of image in the second video segment, where the second target frame of image matches the first text.

Beneficial effects of this implementation are similar to those of playing the first video segment, and details are not described herein again.

In a possible implementation, sorting information of the first video segment and the second video segment is further displayed in the playback progress bar, and the sorting information represents sorting of matching degrees between the first text and the video segments.

In a possible implementation, the sorting information is represented by using one or more of a color, a text, a figure, and a symbol.

For beneficial effects of the foregoing two implementations, refer to the method in the seventh aspect. Details are not described herein again.

According to an eighth aspect, a visual media search method is provided. The method includes: displaying a first user interface of a gallery application, where the first user interface includes thumbnails of a plurality of image resources (pictures or videos) in the gallery application; moving, in response to a sliding gesture of a user in the first user interface, positions of the thumbnails of the plurality of image resources along a direction of the sliding gesture, where a first button is further displayed in the first user interface, and the user may tap/click the first button; and displaying, in response to a tap/click operation performed by the user on the first button, a search interface including a first search box. The first search box is configured to receive text information entered by the user, so that the gallery application can be searched for an image resource based on the text information.

In the method, the electronic device displays the first user interface of the gallery application, and the interface is configured to present pictures and/or videos stored in the gallery application. When receiving a sliding gesture of the user in the first user interface (the user may manually search for a photo or a video), the electronic device displays the first button. The user can conveniently enter the search interface by tapping/clicking the first button, and enter text information in the search box of the search interface, to trigger the electronic device to automatically search the gallery for an image resource. The electronic device guides, by using the first button, the user to conveniently and quickly enter the search interface provided on the electronic device, and then the user can enter text information in the search box of the search interface, to automatically search for an image resource, thereby improving efficiency of the user searching for a picture or a video in the gallery application.

With reference to the eighth aspect, in a possible implementation, a second user interface is displayed after the sliding gesture performed by the user in the first user interface stops. The second user interface includes a second search box. The search interface is displayed in response to a tap/click operation performed by the user on the second search box.

In the method, after the user stops manually searching for a photo or a video (the sliding gesture stops), the mobile phone displays a search box, to prompt the user that text information may be entered to implement an automatic search. The user conveniently enters the search interface by tapping the search box, and enters text information in the search box of the search interface, to trigger the mobile phone to automatically search the gallery for an image resource. This provides the user with a manner of conveniently and quickly starting an automatic search.

In a possible implementation, it is determined that the sliding gesture performed by the user in the first user interface stops if a next sliding gesture is not detected within first duration after the sliding gesture is detected.

With reference to the eighth aspect, in a possible implementation, displaying the first user interface of the gallery application includes: displaying a third user interface of the gallery application, where the third user interface includes thumbnails of a plurality of image resources in the gallery application; and displaying the first user interface of the gallery application in response to a sliding gesture of the user in the third user interface, where the image resources included in the first user interface are different from the image resources included in the third user interface.

In the method, the third user interface of the gallery application is displayed in response to an operation of starting the gallery application by the user. The interface includes thumbnails (used to present image resources) of a plurality of image resources. The user may perform a sliding gesture in the third user interface, so that the thumbnails of the image resources roll along a direction of the sliding gesture, to view more image resources. For example, in response to the sliding gesture of the user in the third user interface, the electronic device displays the first user interface, where the first user interface includes the first button. That is, when the user manually views image resources through a sliding gesture, the electronic device displays the first button, to guide the user to quickly start an automatic search.

With reference to the eighth aspect, in a possible implementation, the third user interface includes the second search box, and the second search box is hidden in response to the sliding gesture of the user in the third user interface.

In this scenario, the third user interface includes the search box, the received sliding gesture of the user in the third user interface indicates that the user needs to manually search for an image resource, and the electronic device hides the second search box.

With reference to the foregoing possible implementations, the method provided in this application can achieve beneficial effects in the following scenario:

The electronic device displays the third user interface. The interface includes the search box, and the user may tap/click the search box to start an automatic search. If the user does not tap/click the search box but performs a sliding gesture to manually search for a needed picture or video, the electronic device hides the search box. When the user manually searches for the needed picture or video, the user may find that efficiency of the manual search is excessively low, and needs an automatic search. In the method provided in this embodiment of this application, the electronic device displays the first button to guide the user to quickly start an automatic search by tapping/clicking the first button, which makes it convenient for the user to search the gallery for an image resource.

With reference to the eighth aspect, in a possible implementation, a first search result interface is displayed in response to receiving first text information entered by the user in the first search box, where the first search result interface includes a first thumbnail of a first video, and the first thumbnail includes a first time point; and a second search result interface is displayed in response to receiving second text information entered by the user in the first search box, where the second search result interface includes a second thumbnail of the first video, the second thumbnail includes a second time point, and the second time point is later than the first time point.

In the method, based on text information entered by the user, the electronic device automatically searches the gallery for a video corresponding to the text information, and displays a thumbnail of the video in a search result interface. A video may have an image frame corresponding to the text information, and may have an image frame not corresponding to the text information. In the method, an image and a time point of the image frame corresponding to the text information are displayed in a thumbnail of the video. In this way, the user can conveniently obtain the video corresponding to the text information, and accurately learn of a specific video segment corresponding to the text information in the video.

With reference to the eighth aspect, in a possible implementation, an image of the first thumbnail is an image frame corresponding to the first time point in the first video, and an image of the second thumbnail is an image frame corresponding to the second time point in the first video.

With reference to the eighth aspect, in a possible implementation, the first video starts to be played from the first time point in response to a tap/click operation performed by the user on the first thumbnail; and the first video starts to be played from the second time point in response to a tap/click operation performed by the user on the second thumbnail.

In the method, after the user performs a trigger operation on the first thumbnail, the electronic device starts to play the first video from the first time point. After the user performs a trigger operation on the second thumbnail, the electronic device starts to play the first video from the second time point. In other words, after the user triggers the first thumbnail or the second thumbnail, the electronic device plays the first video in both cases, but start playback time points are different, that is, image frames starting to be presented to the user are different. The start time point is a time point corresponding to a specific video segment corresponding to the text information. That is, the electronic device directly presents, to the user, the video segment related to the text information entered by the user, and the user does not need to manually search the video, which improves user experience.

With reference to the eighth aspect, in a possible implementation, a first playback interface of the first video is displayed in response to a tap/click operation performed by the user on the first thumbnail. The first playback interface includes a plurality of mark points, and the mark point indicates a start position of a video segment corresponding to the first text information in the first video.

In the method, in a video, all video segments corresponding to the text information entered by the user can be marked in a video playback progress bar, so that the user can conveniently learn of start moments of all the video segments corresponding to the text information entered by the user. Further, the user may tap any mark point, so that the mobile phone starts to play the video from a position corresponding to the mark point, and the user can conveniently view a video segment that needs to be searched for.

With reference to the eighth aspect, in a possible implementation, the first text information is different from the second text information, the first video includes a first image frame and a second image frame, the first text information matches the first image frame corresponding to the first thumbnail, the second text information matches the second image frame corresponding to the second thumbnail, and the second image frame is after the first image frame.

The first text information is matched with the first image frame corresponding to the first thumbnail by using a CLIP model, and the second text information is matched with the second image frame corresponding to the second thumbnail by using the CLIP model.

That the first text is matched with the first image frame corresponding to the first thumbnail by using the CLIP model means that a text semantic meaning of the first text is matched with a visual semantic meaning of the first image frame. That the second text is matched with the second image frame corresponding to the second thumbnail by using the CLIP model means that a text semantic meaning of the second text is matched with a visual semantic meaning of the second image frame. In this way, based on text information entered by the user, an image frame matching the text information can be found. A text semantic meaning of the text information is fully associated with a visual semantic meaning of the image frame, so that fusion and interaction between the text information and image content presented in the image frame can be implemented, thereby improving accuracy of video searching and improving user experience.

With reference to the eighth aspect, in a possible implementation, that the first text information is matched with the first image frame corresponding to the first thumbnail by using the CLIP model includes: inputting the first text information into a text encoder of the CLIP model, to obtain a first text semantic vector; inputting the first image frame into an image encoder of the CLIP model, to obtain a first visual semantic vector; and matching the first text information and the first image frame based on the first text semantic vector and the first visual semantic vector. A vector similarity between the first text semantic vector and a vector of a first cluster center point in an inverted index database is greater than or equal to a first threshold, the first visual semantic vector belongs to a first cluster corresponding to the first cluster center point, a vector similarity between the first text semantic vector and the first visual semantic vector is greater than or equal to a second threshold, the inverted index database includes clusters respectively corresponding to a plurality of cluster center points, and the plurality of cluster center points are determined by clustering a plurality of visual semantic vectors in the inverted index database.

In this way, when search matching is performed based on a text semantic vector of text information entered by the user, the electronic device may first match the text semantic vector with a plurality of cluster center points, and then match the text semantic vector with a visual semantic vector of a cluster of a determined cluster center point, to avoid matching with all indexes in the index database. This further reduces a search latency and improves efficiency of video searching, thereby improving user experience.

With reference to the eighth aspect, in a possible implementation, the first search result interface further includes a third thumbnail of the first video, the first text information matches a third image frame corresponding to the third thumbnail, the first image frame is in a first video segment of the first video, the third image frame is in a third video segment of the first video, an entity of the first text information matches an entity of an attribute tag of the first video segment, the entity of the first text information matches an entity of an attribute tag of the third video segment, and the first thumbnail is presented before the third thumbnail.

In the method, the entity of the first text information matches the entity of the attribute tag of the first video segment, and the entity of the first text information matches the entity of the attribute tag of the third video segment. In this way, based on text information entered by the user, the electronic device not only performs search matching based on a text semantic vector, but also performs search matching based on an entity in the text information. That is, the electronic device may perform a vector recall and an entity recall, and can present a video search result that is a vector recall result and an entity recall result to the user, thereby further improving accuracy of video searching and improving user experience.

A presentation order between the first thumbnail and the third thumbnail is determined through the following steps:

determining a first comprehensive matching degree between the first thumbnail and the first text information based on the vector similarity between the first visual semantic vector and the first text semantic vector and a matching degree between the attribute tag of the first video segment and the entity of the first text information; determining a second comprehensive matching degree between the third thumbnail and the first text information based on a vector similarity between a third visual semantic vector (obtained by inputting the third image frame into the image encoder of the CLIP model) and the first text semantic vector and a matching degree between the attribute tag of the third video segment and the entity of the first text information; and presenting the first thumbnail before the third thumbnail in descending order of the comprehensive matching degrees.

In this way, video search results are sorted based on comprehensive matching degrees, to ensure that a video search result ranked at a better position is a result that better matches text information entered by the user, thereby further improving user experience.

With reference to the eighth aspect, in a possible implementation, recommendation information is displayed in the first search box. The recommendation information is generated based on at least one of shooting time, a shooting location, a person, a subject type, and an event of a first picture stored in the gallery application.

In the method, the electronic device presents the recommendation information to the user in the search box of the gallery. The recommendation information is a sentence that is generated based on the first picture in the gallery and that has a natural semantic meaning. The user may enter text information based on content and a format of the recommendation information for searching. For example, the user may perform searching by using the recommendation information as text information in the search box. Because the recommendation information is generated based on the first picture in the gallery, the electronic device can find, in the gallery based on the text information, the first picture and all image resources whose content is similar to that of the first picture, thereby improving a hit rate of searching. In addition, because the recommendation information is a sentence having a natural semantic meaning, the recommendation information can express a search objective of the user more accurately, thereby narrowing a range of search results, and helping the user find a needed picture or video more conveniently.

With reference to the eighth aspect, in a possible implementation, semantic analysis is performed on the first picture by using a semantic analysis algorithm, to obtain at least one of the person, the subject type, and the event of the first picture.

With reference to the eighth aspect, in a possible implementation, the first picture is a picture whose shooting time is within a preset time period. For example, the preset time period is time more than one month from today.

With reference to the eighth aspect, in a possible implementation, prompt information is displayed in the first user interface, and the prompt information is used to prompt the user to tap/click the first button to trigger searching of the gallery application for an image resource. In this way, the user can learn of a purpose of the first button based on the prompt information.

According to a ninth aspect, this application provides an electronic device. The electronic device includes a memory, a display screen, and a processor; the memory stores computer program code, and the computer program code includes computer instructions; the display screen provides a display function; and the one or more processors invoke the computer instructions, to enable the electronic device to perform the method according to any one of the first aspect to the eighth aspect.

According to a tenth aspect, this application provides a computer-readable storage medium. The computer-readable storage medium stores computer program code, and when the computer program code is executed by a processor, the method according to any one of the first aspect to the eighth aspect is implemented.

According to an eleventh aspect, this application provides a computer program product. The computer program product includes computer program code, and when the computer program code is run on an electronic device, the electronic device is enabled to perform the method according to any one of the first aspect to the eighth aspect.

**BRIEF DESCRIPTION OF DRAWINGS**

FIG. 1a is a diagram of a search result display interface according to an embodiment of this application;
FIG. 1b is a diagram of another search result display interface according to an embodiment of this application;
FIG. 1c(1), FIG. 1c(2), and FIG. 1c(3) are diagrams of an application scenario of a visual media search method example according to an embodiment of this application;
FIG. 1d is a diagram of an application scenario of another visual media search method example according to an embodiment of this application;
FIG. 1e(1), FIG. 1e(2), FIG. 1e(3), and FIG. 1e(4) are diagrams of an application scenario of another visual media search method example according to an embodiment of this application;
FIG. 2a is a diagram of composition of an electronic device according to an embodiment of this application;
FIG. 2b is an example diagram of a software structure of an electronic device according to an embodiment of this application;
FIG. 3a(1) and FIG. 3a(2) show an application scenario of a visual media search method according to an embodiment of this application;
FIG. 3b(1) and FIG. 3b(2) are diagrams of a video playback interface according to an embodiment of this application;

FIG. 3c is a diagram of a search interface according to an embodiment of this application;

FIG. 4a(1) and FIG. 4a(2) show an application scenario of another visual media search method according to an embodiment of this application;

FIG. 4b(1) and FIG. 4b(2) show an application scenario of still another visual media search method according to an embodiment of this application;

FIG. 4c(1), FIG. 4c(2), FIG. 4c(3), and FIG. 4c(4) are diagrams of interface changing of another visual media search method example according to an embodiment of this application;

FIG. 4d is a diagram of interface changing of a visual media search method example according to an embodiment of this application;

FIG. 4e is a diagram of a search result interface example according to an embodiment of this application;

FIG. 4f is a diagram of another search result interface example according to an embodiment of this application;

FIG. 4g is a diagram of still another search result interface example according to an embodiment of this application;

FIG. 4h is a diagram of still another search result interface example according to an embodiment of this application;

FIG. 4i(1), FIG. 4i(2), and FIG. 4i(3) are diagrams of interfaces in a video playback process example according to an embodiment of this application;

FIG. 4j is a diagram of interfaces in another video playback process example according to an embodiment of this application;

FIG. 4k is a diagram of interfaces in still another video playback process example according to an embodiment of this application;

FIG. 4l(1), FIG. 4l(2), and FIG. 4l(3) are diagrams of a search entry example according to an embodiment of this application;

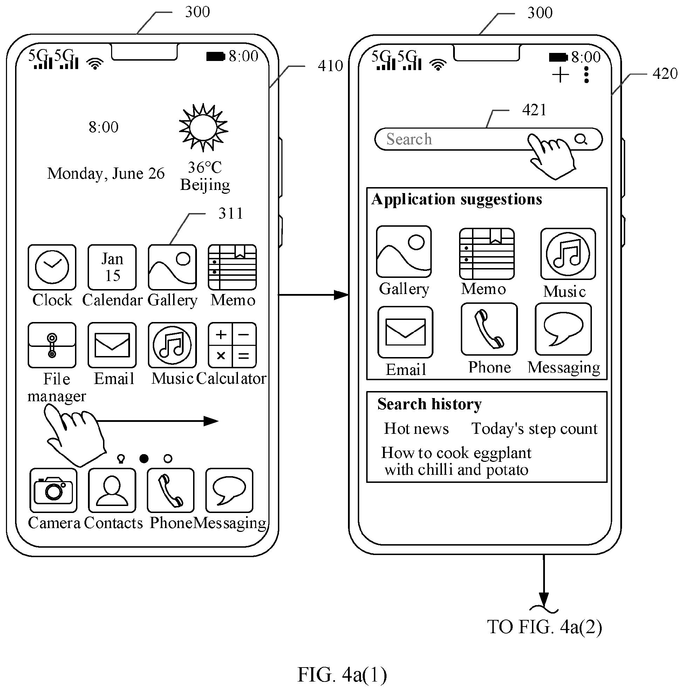

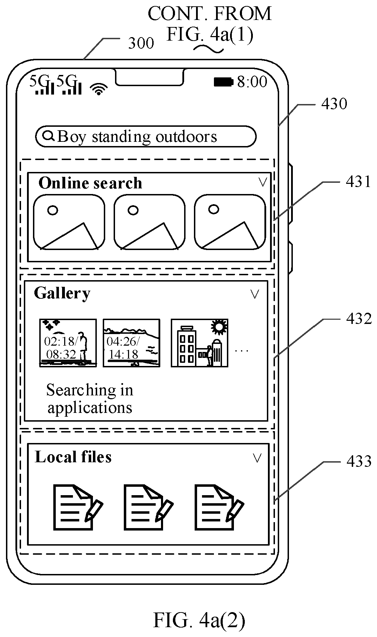

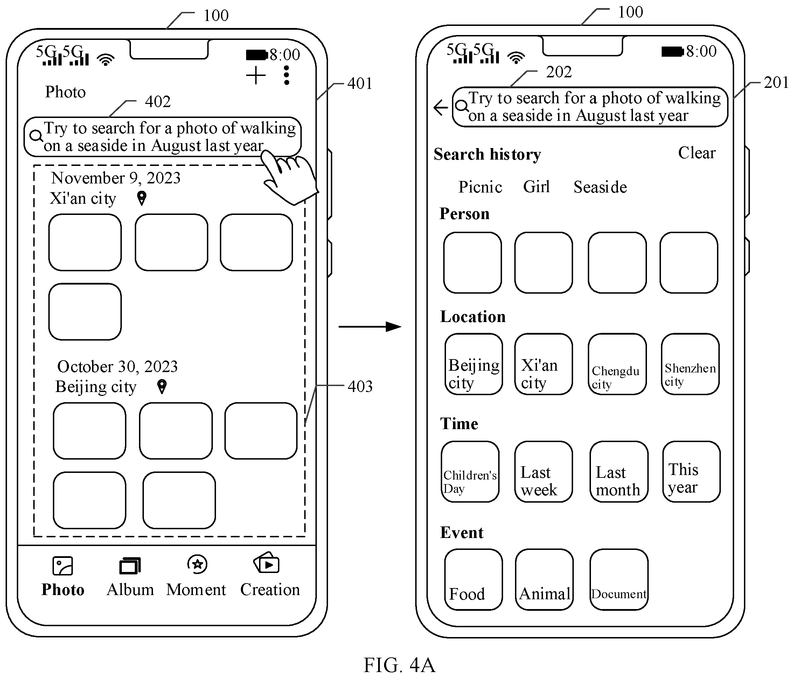

FIG. 4A is a diagram of a scenario instance of a visual media search method according to an embodiment of this application;

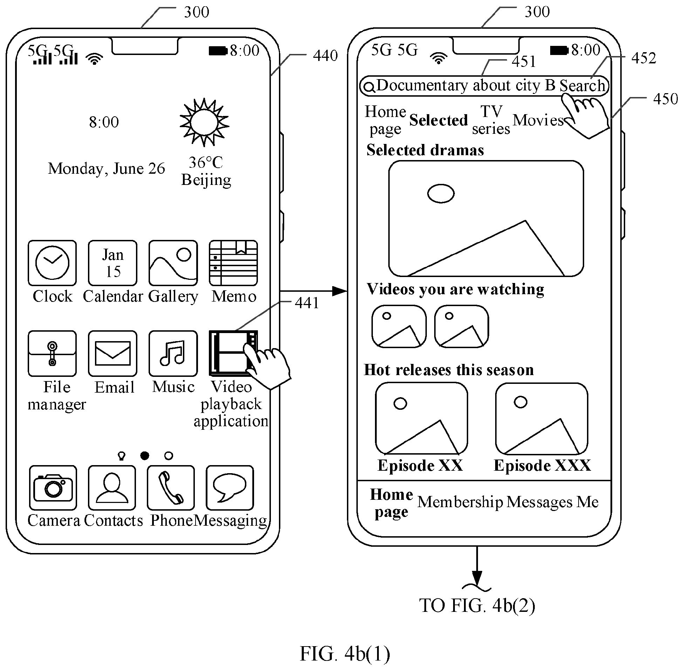

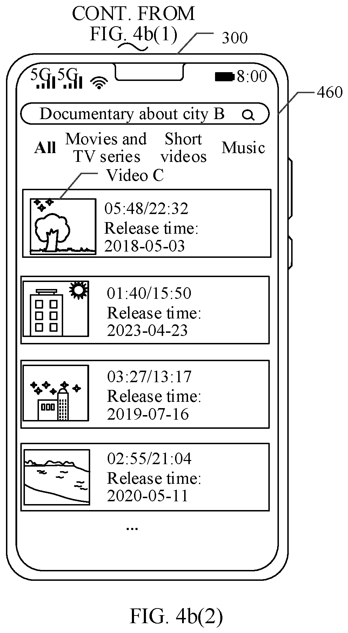

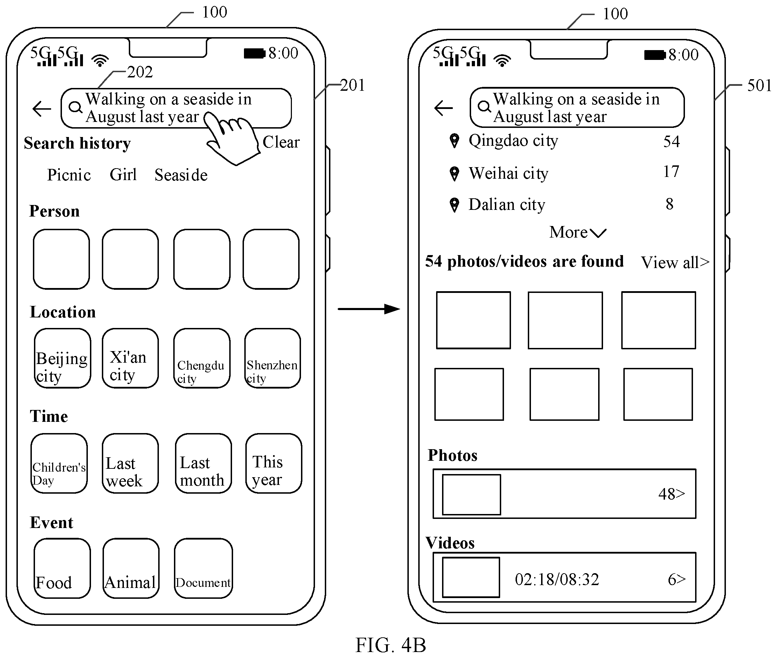

FIG. 4B is a diagram of a scenario instance of a visual media search method according to an embodiment of this application;

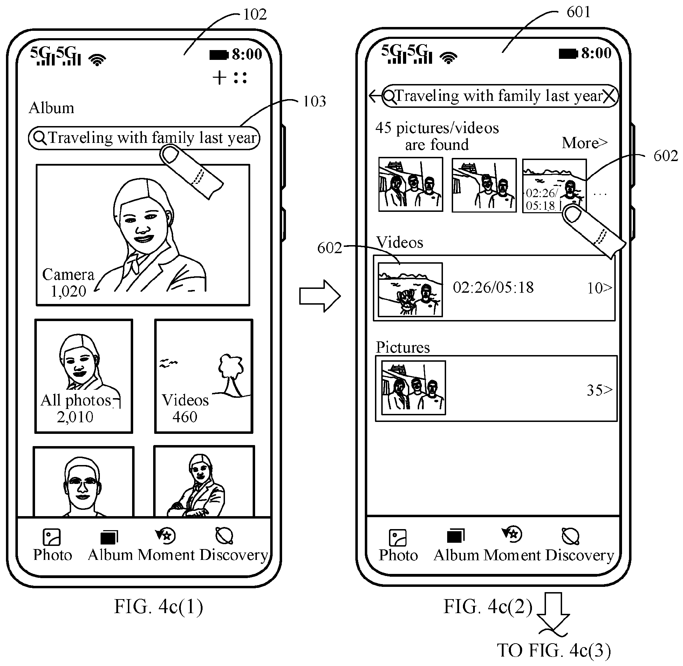

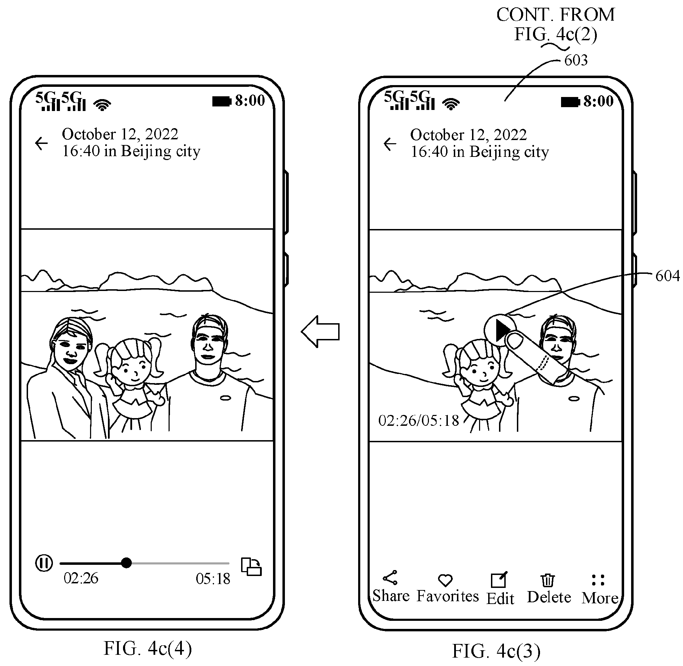

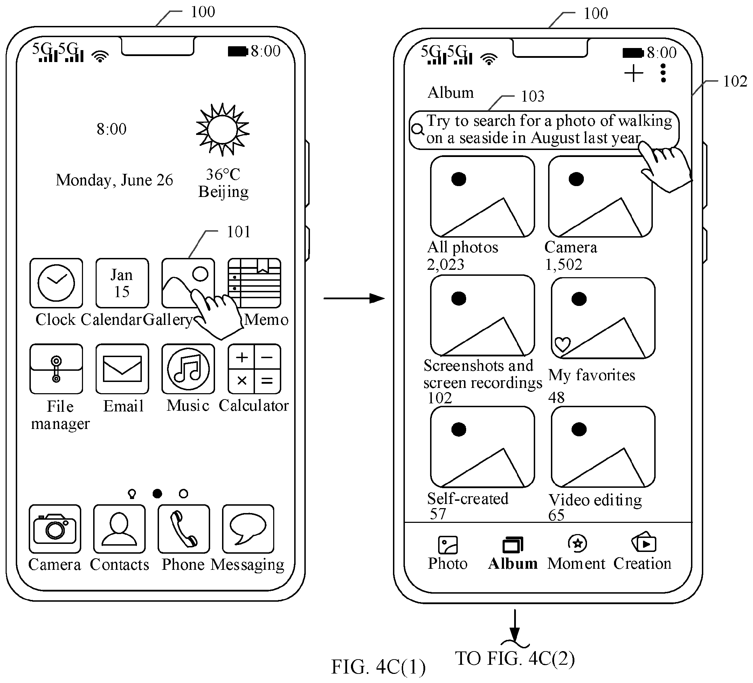

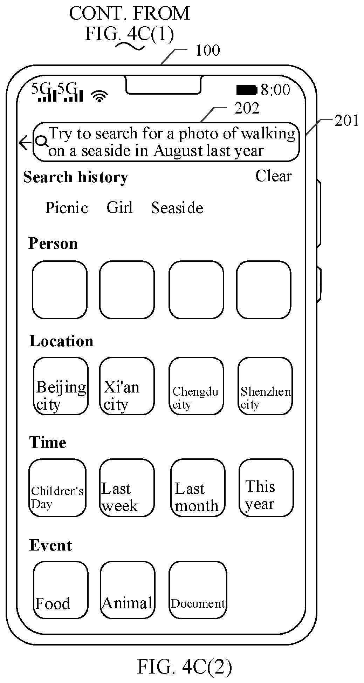

FIG. 4C(1) and FIG. 4C(2) are diagrams of a scenario instance of a visual media search method according to an embodiment of this application;

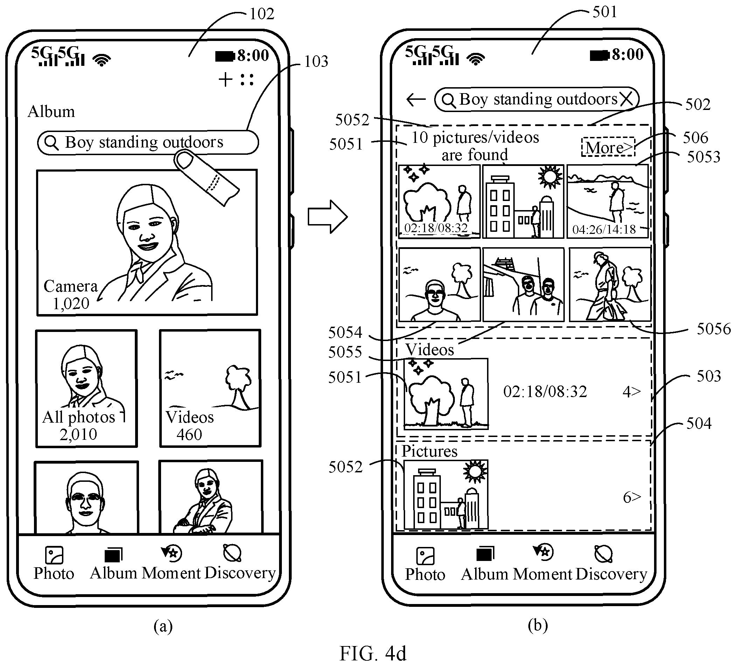

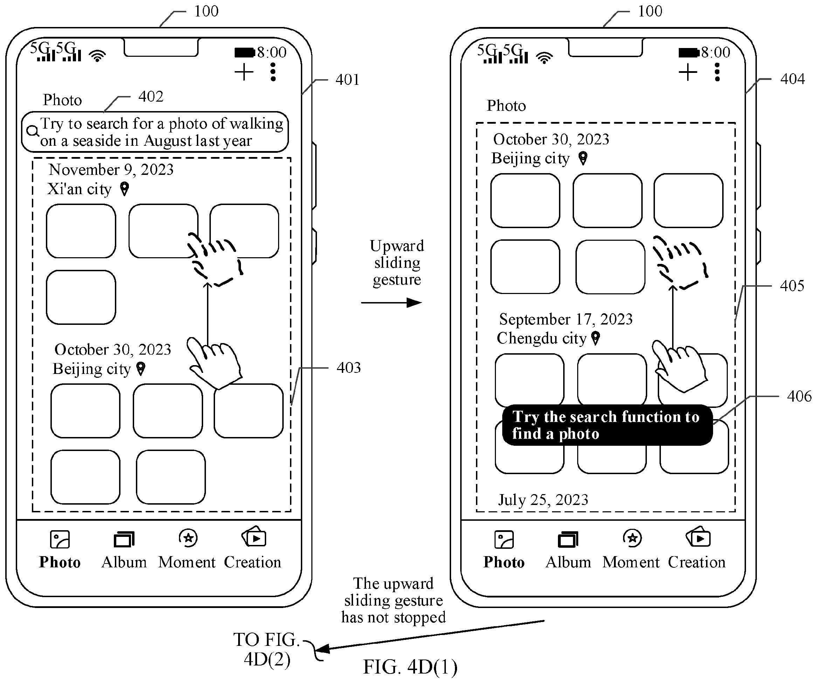

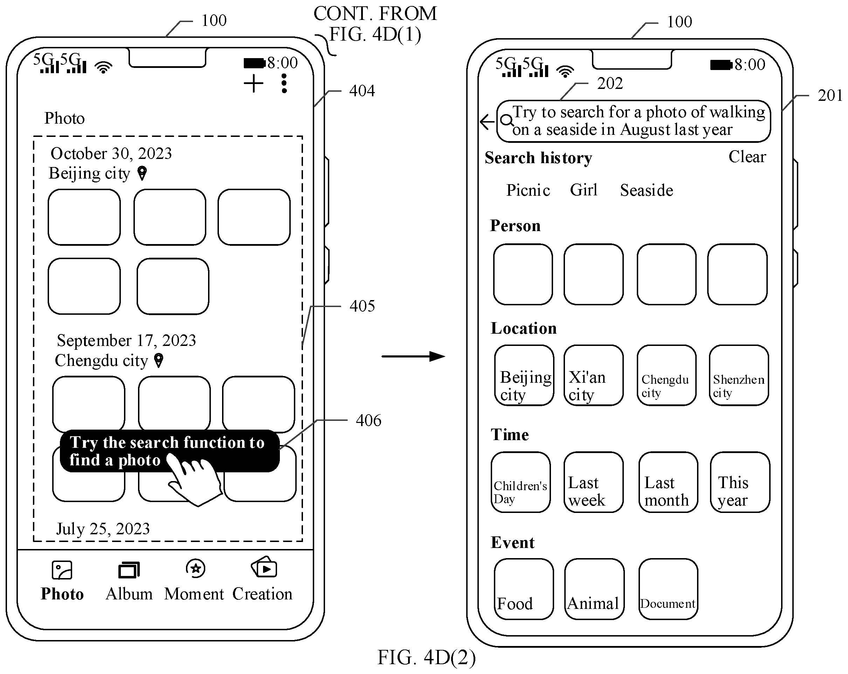

FIG. 4D(1) and FIG. 4D(2) are diagrams of a scenario instance of a visual media search method according to an embodiment of this application;

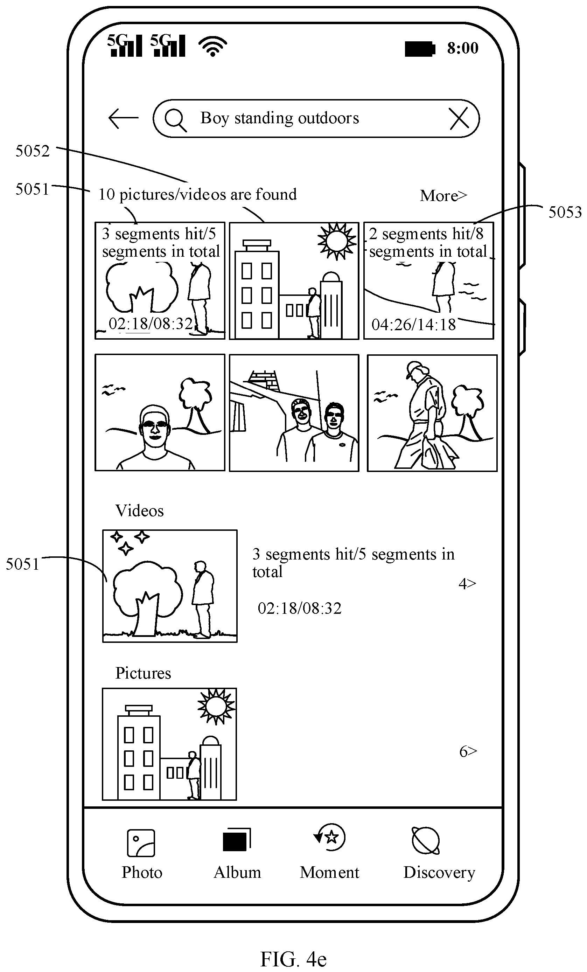

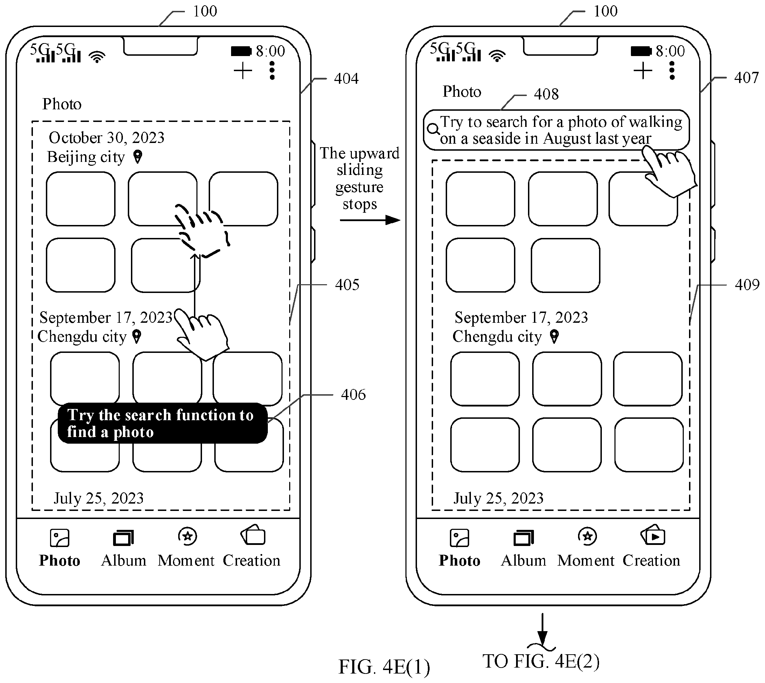

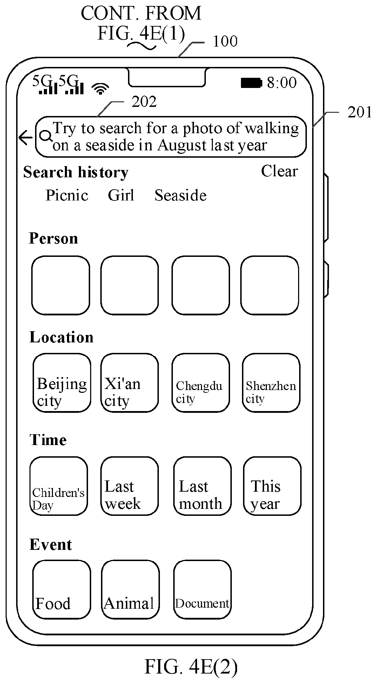

FIG. 4E(1) and FIG. 4E(2) are diagrams of a scenario instance of a visual media search method according to an embodiment of this application;

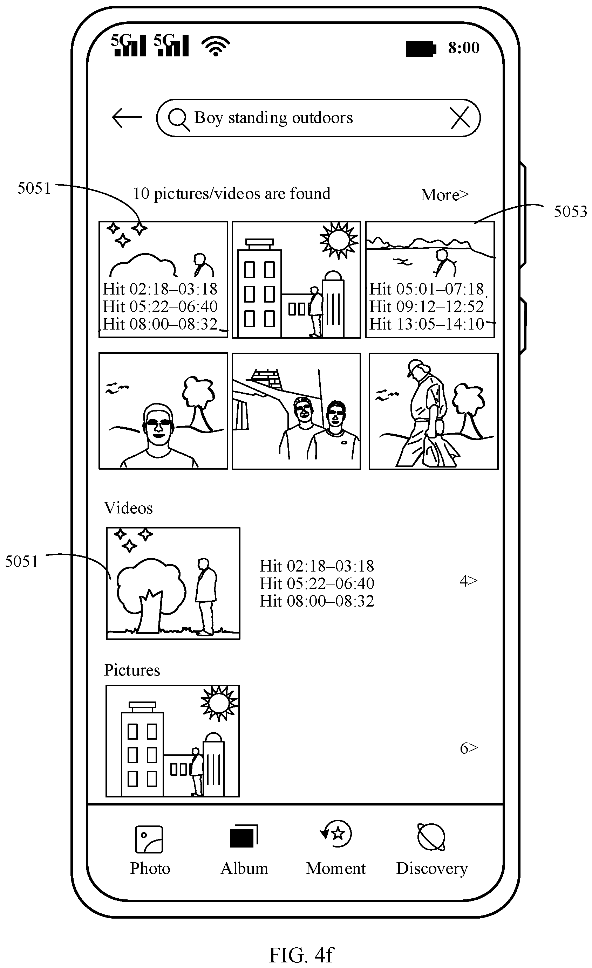

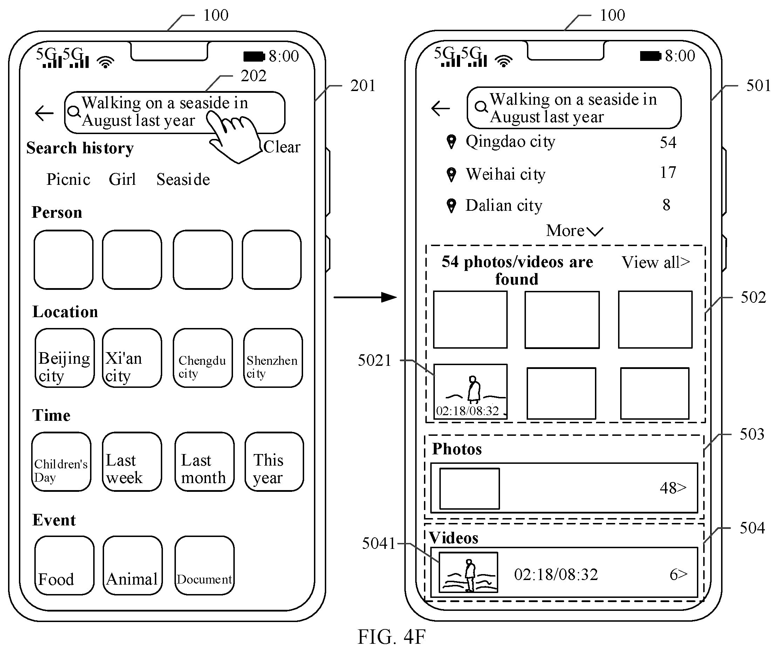

FIG. 4F is a diagram of a scenario instance of a visual media search method according to an embodiment of this application;

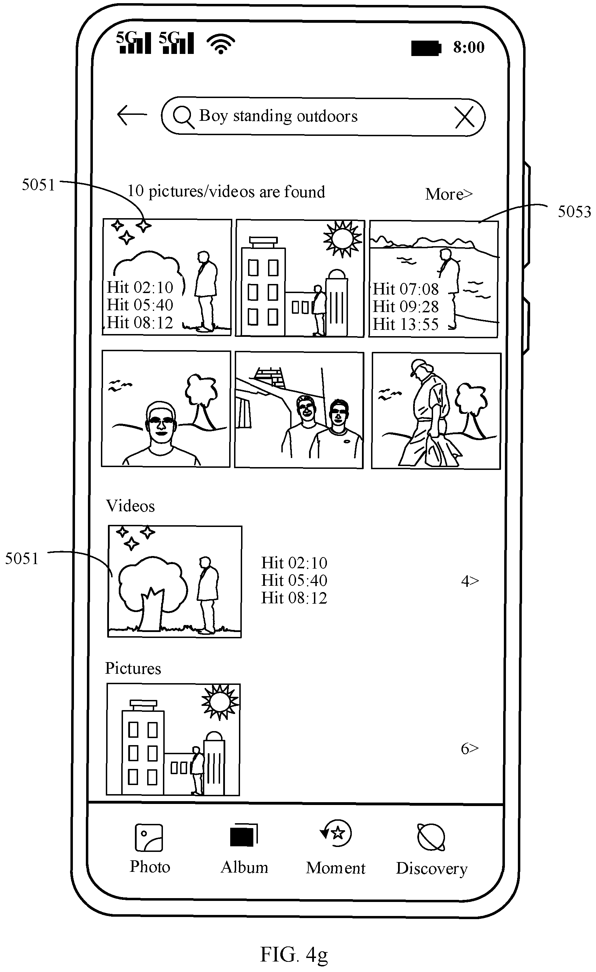

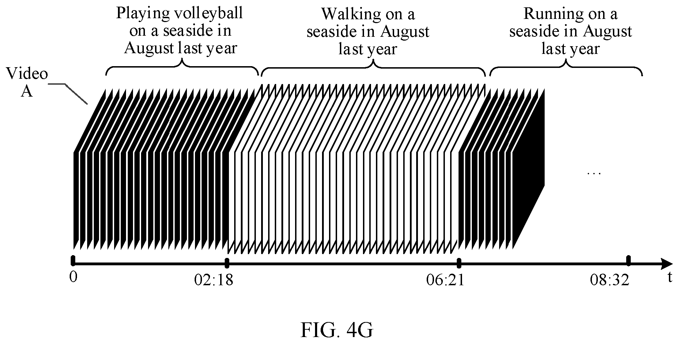

FIG. 4G is a diagram of a scenario instance of a visual media search method according to an embodiment of this application;

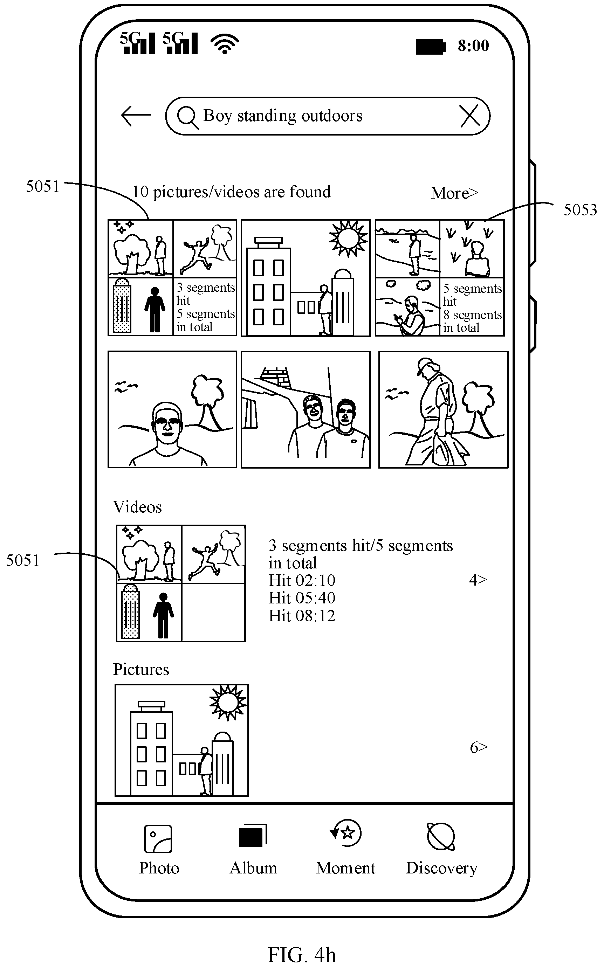

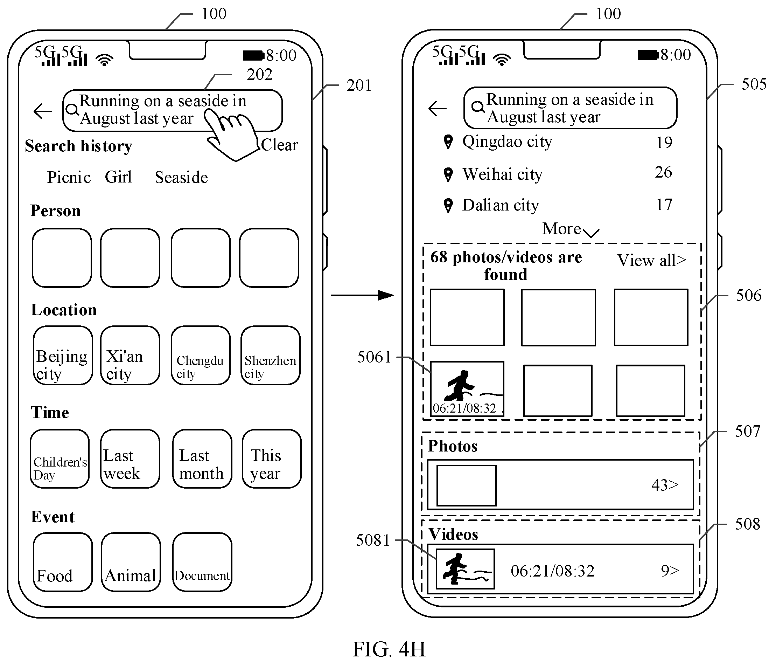

FIG. 4H is a diagram of a scenario instance of a visual media search method according to an embodiment of this application;

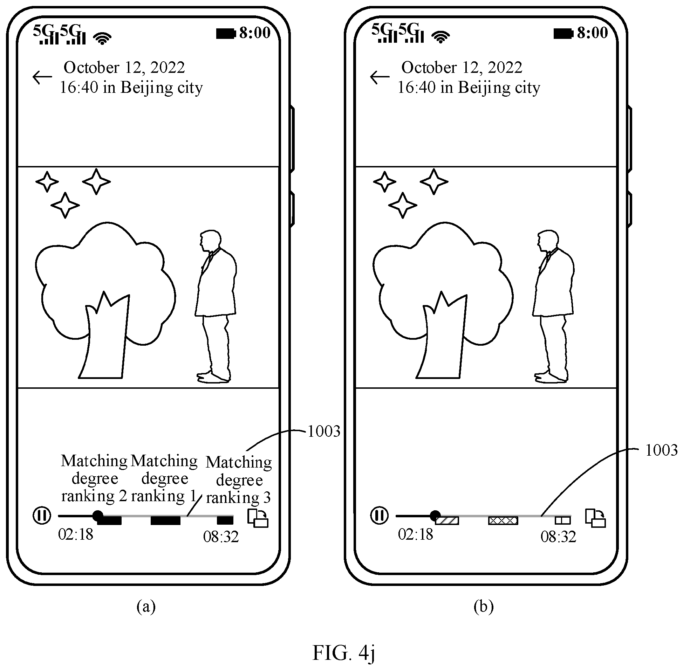

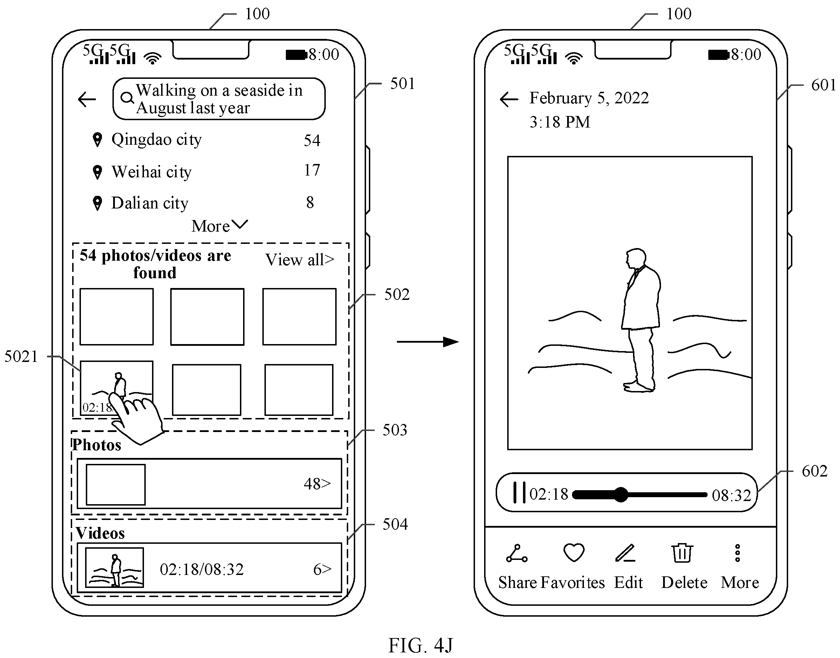

FIG. 4J is a diagram of a scenario instance of a visual media search method according to an embodiment of this application;

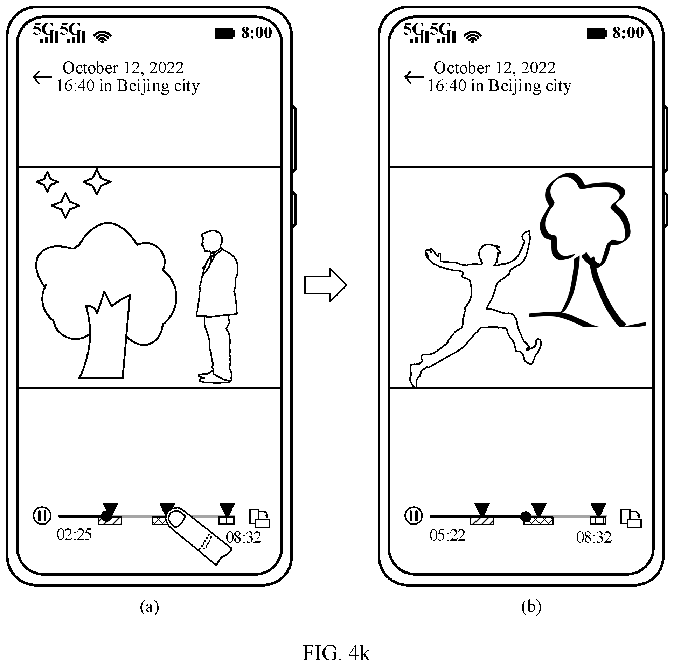

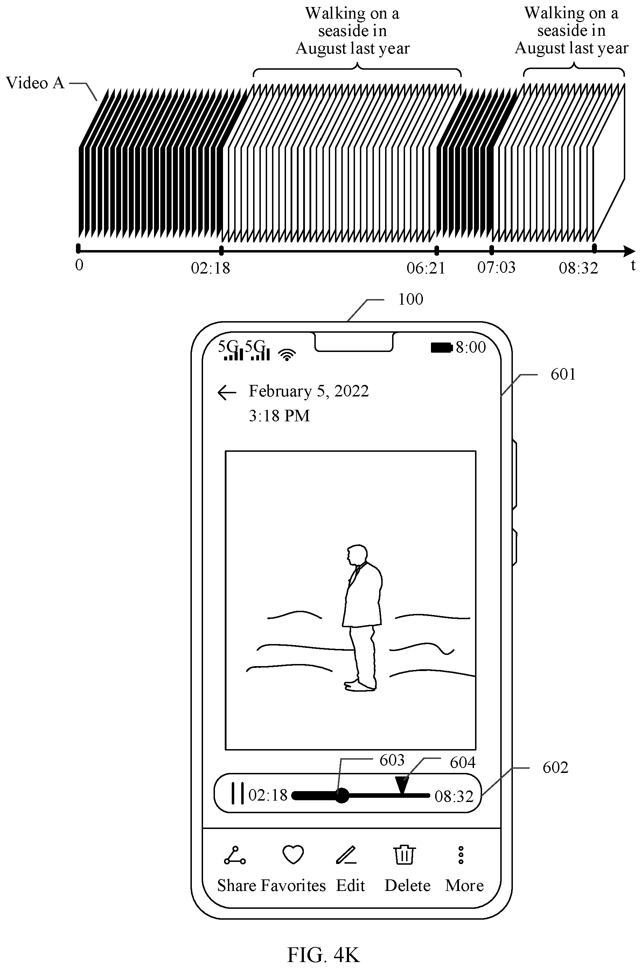

FIG. 4K is a diagram of a scenario instance of a visual media search method according to an embodiment of this application;

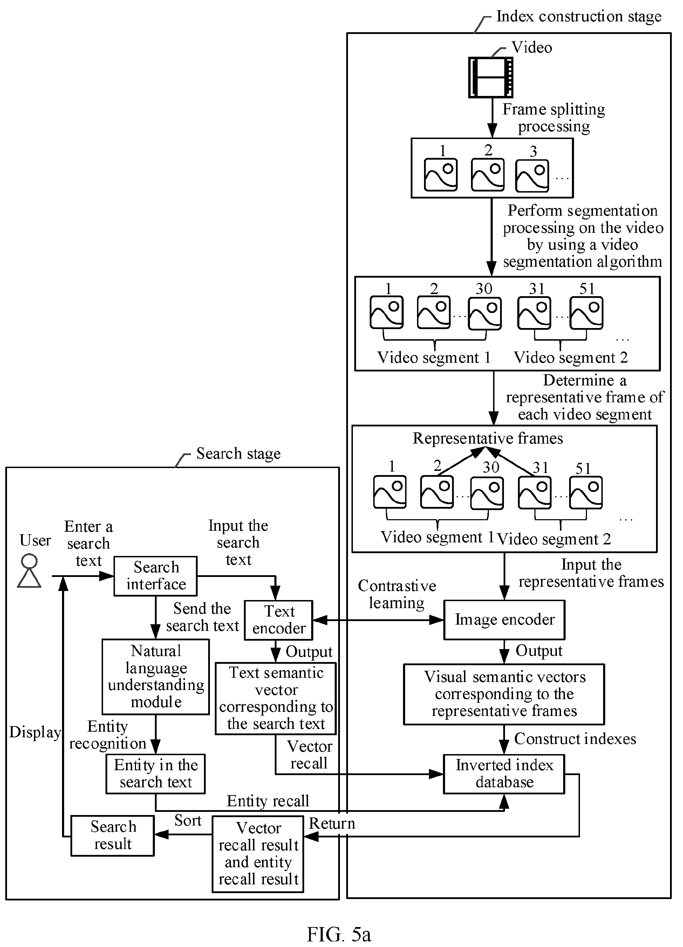

FIG. 5a is a diagram of a visual media search method according to an embodiment of this application;

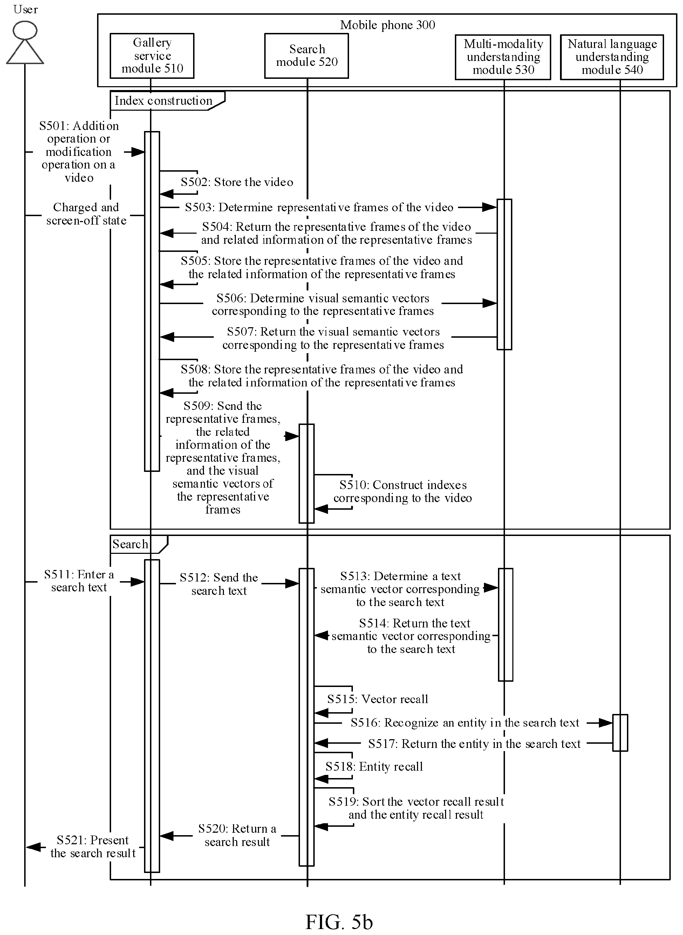

FIG. 5b is a signaling interaction diagram of a visual media search method according to an embodiment of this application;

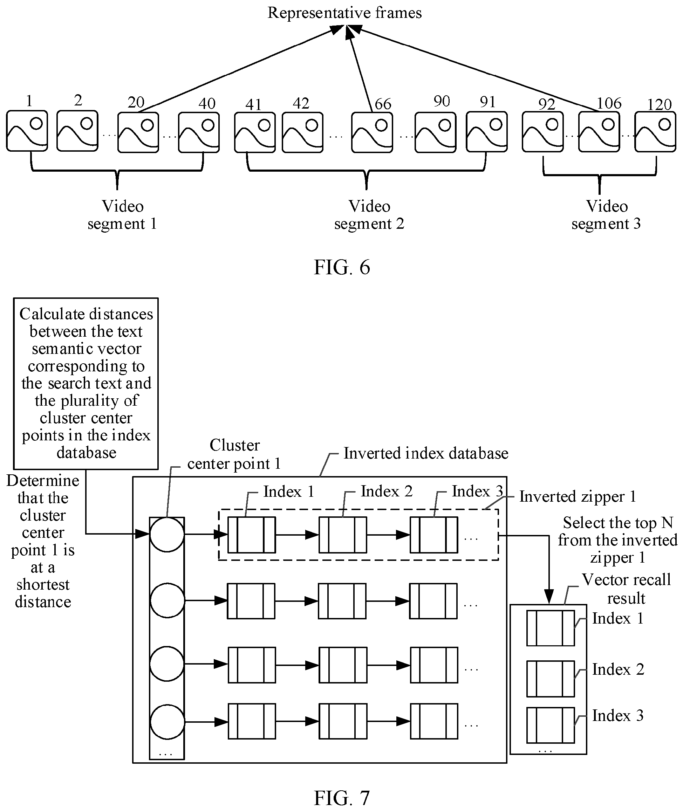

FIG. 6 is a diagram of a process of determining a representative frame according to an embodiment of this application;

FIG. 7 is a diagram of a vector recall process according to an embodiment of this application;

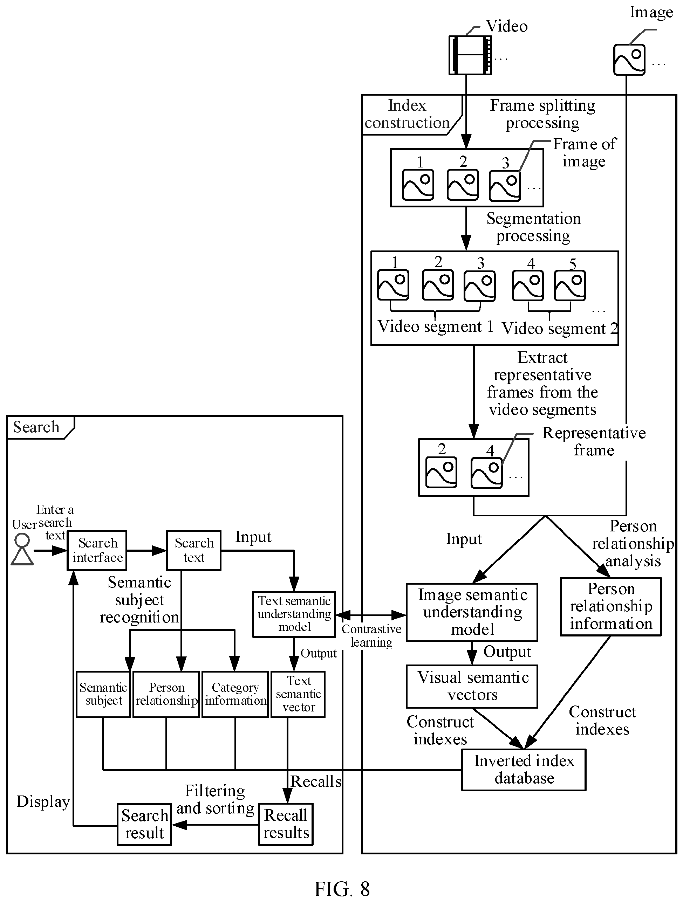

FIG. 8 is a principle diagram of a visual media search method example according to an embodiment of this application;

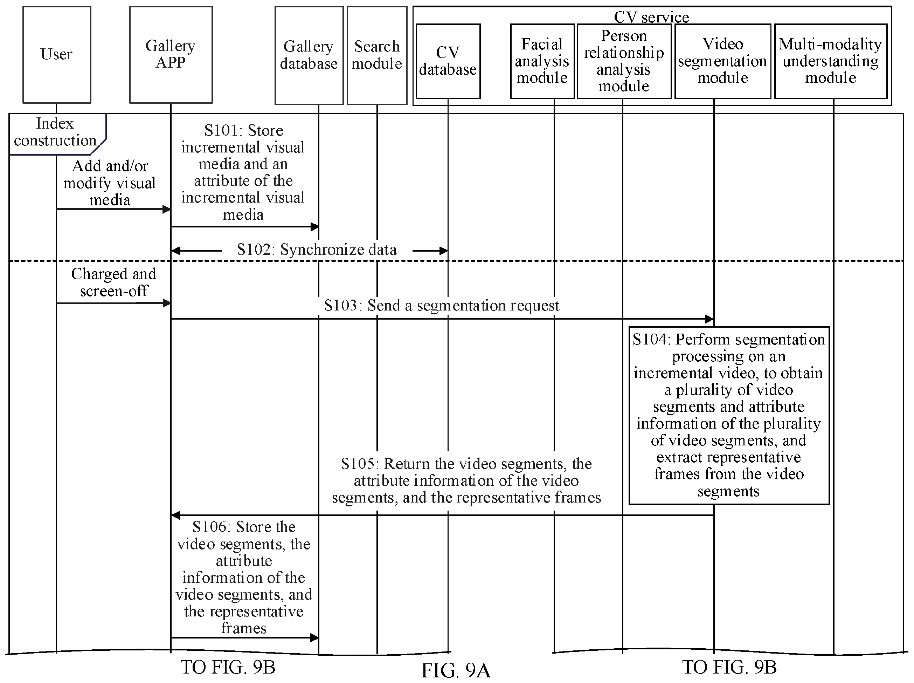

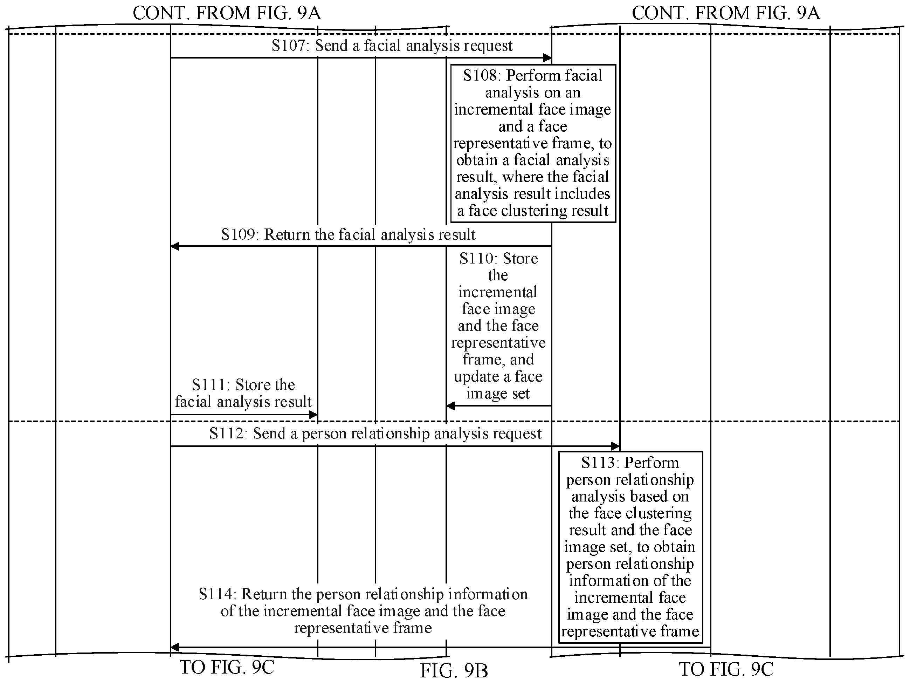

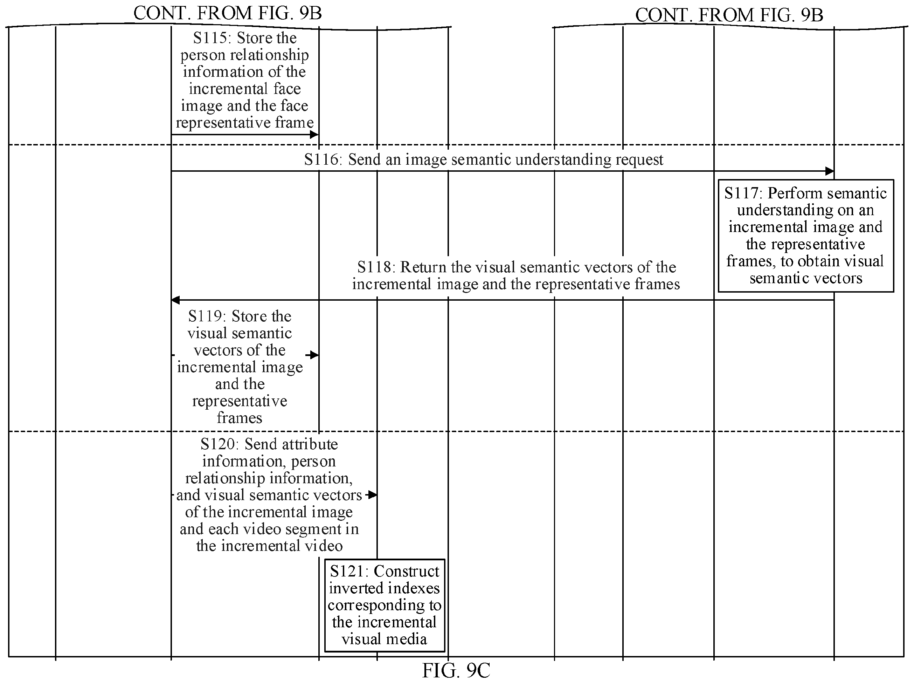

FIG. 9A, FIG. 9B, and FIG. 9C are an interaction flowchart of a visual media search method example according to an embodiment of this application; and

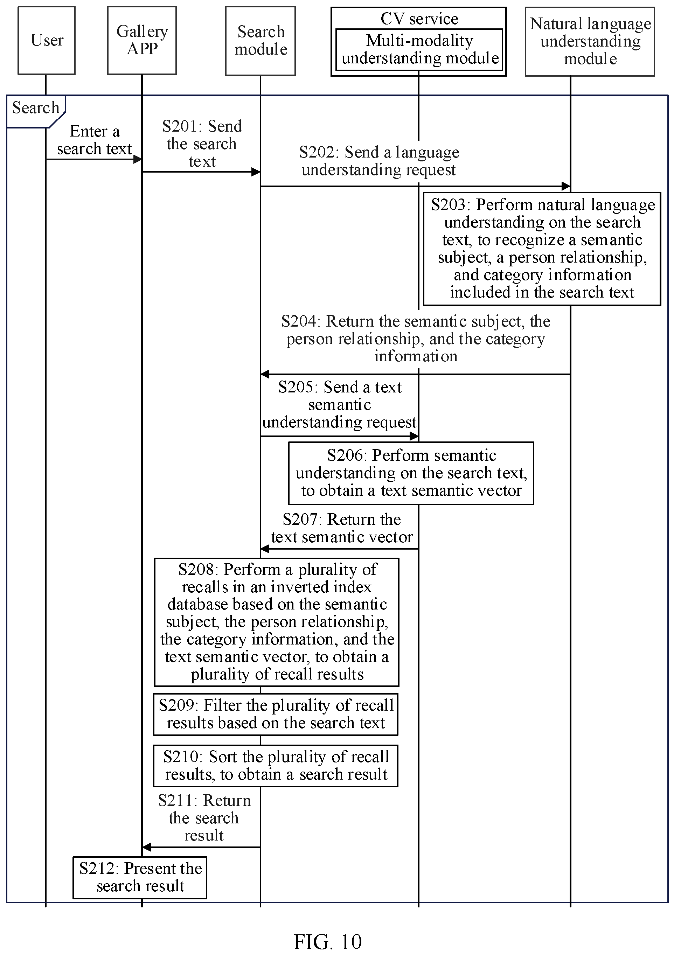

FIG. 10 is an interaction flowchart of another visual media search method example according to an embodiment of this application.

## DESCRIPTION OF EMBODIMENTS

Technical advantages of a visual media search method provided in this application are comparatively described below with reference to the related art. For ease of understanding, an example scenario is used for description. In this example scenario, an electronic device is a mobile phone, and a gallery application of the mobile phone stores a plurality of pictures and a plurality of videos.

First, terms in embodiments of this application are described. It may be understood that descriptions are provided for a clearer understanding of embodiments of this application, and do not necessarily constitute a limitation on embodiments of this application.

Video frame: It is also referred to as an image frame, and is any frame of a video. A frame is a still image in a video, and consecutive frames may form a video.

Video segment: It is a segment obtained by dividing a video. In some embodiments, frame splitting processing may be first performed on a video to obtain video frames of the video, and then segmentation processing is performed on the video including the plurality of video frames by using a video segmentation algorithm to obtain video segments. For a specific implementation, refer to descriptions in the following embodiment.

Representative frame: It is a video frame in a video segment, and may be used to represent the video segment. For example, the representative frame may be a start frame, an end frame, a random video frame, an optimal frame having a highest score, or the like of the video segment.

CLIP model: The CLIP (Contrastive Language-Image Pre-Training) model is a pre-trained neural network model for matching an image and a text. In some embodiments, contrastive learning may be performed based on a text encoder (Text Encoder) and an image encoder (Image Encoder) of the CLIP model to obtain, through training, a text encoder configured to output a text semantic vector of a text and an image encoder configured to output a visual semantic vector of an image or a video frame.

Text semantic vector: It is a vector that may be obtained by inputting a text into the text encoder and can represent a semantic feature of the entire text. For example, the text encoder may use a model such as a transformer commonly used in natural language processing (Natural Language Processing, NLP). This is not limited in this application. In embodiments of this application, a search text entered by a user may be input into the text encoder, to obtain a text semantic vector of the search text.

Visual semantic vector: It may be obtained by inputting an image or a video frame of a video into the image encoder. For example, the image encoder may use a CNN model or a VIT model. This is not limited in this application. In embodiments of this application, a representative frame of a video may be input into the image encoder, to obtain a visual semantic vector of the representative frame.

Vector similarity: It is used to describe a similarity between two vectors (for example, between a text semantic vector and a visual semantic vector). In embodiments of this application, a video frame matching a search text may be determined by obtaining a similarity between a text semantic vector of the search text and a visual semantic vector through comparison. For example, the vector similarity may be calculated by using a cosine similarity calculation formula, or certainly may be calculated in another manner.

Entity: It is a word having a specific meaning in a text. For example, the entity may include, but is not limited to, time, a location, a person name, an organization name, and a proper noun in the text. In some embodiments, the entity having the specific meaning in the text may be recognized by using a named entity recognition (Named Entity Recognition, NER) technology. This is not limited in this application.

Image parameter: It indicates a presentation characteristic of an image or a video frame. For example, the image parameter may include a jitter degree, a definition, a pixel value, and the like of the video frame. This is not limited in this application.

Attribute tag: It is information indicating an attribute of a video or a video segment. In embodiments of this application, the attribute tag of the video may include a video obtaining location, video obtaining time, a person name, a filename, a classification tag, or the like.

Visual content-related and visual content-unrelated: The visual content is content such as targets presented in visual media and a correlation between the targets. Computer vision can enable a computer to have capabilities similar to human vision, including perceiving, understanding, analyzing, and interpreting visual content. Currently, with a generative pre-trained transformer 4 (Generative Pre-trained Transformer 4, GPT-4) model, after an image is input into the model, a human natural language that describes important information in the image can be output.

In the visual media search background of this solution, information in a text and used to describe visual content in visual media is referred to as "visual content-related" information. The electronic device needs to use a text semantic understanding model to obtain the visual content-related information. Information in a text and unrelated to visual content of visual media is referred to as "visual content-unrelated" information. The visual content-unrelated information may be obtained through marking of the user, pre-recording of the electronic device, and analysis and recognition using a preset algorithm. In embodiments of this application, the visual content-unrelated information may include a location, time, a name, a file attribute, a person name, a tag, person relationship information, and the like. In the foregoing listed visual content-unrelated information, the obtaining time, the name, and the file attribute may be automatically recorded by the electronic device when the electronic device obtains visual media. The person name and the tag may be marked by the user. The person relationship information may be obtained through recognition by using a person relationship analysis algorithm.

For example, in "sky shot in Beijing this year", "this year" (time) and "Beijing" (location) are unrelated to visual content of visual media, and therefore, "this year" and "Beijing" are visual content-unrelated information; while an object corresponding to the "sky" can be perceived through human vision, and is information used to describe visual content in visual media, and therefore is visual semantic meaning-related information.

In the related art, when the gallery of the electronic device stores a video, the gallery also stores a shooting location or shooting time of the video, a keyword in a filename of the video, and the like as an attribute tag, and uses the attribute tag as an index of the video. Subsequently, the user may enter a simple search text such as time, a location, or a keyword in a filename in a search interface of the gallery, to perform search matching between the search text entered by the user and the index (attribute tag) of the video, thereby implementing a video search.

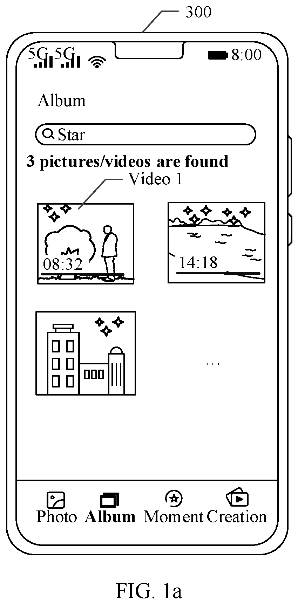

It is assumed that the electronic device is a mobile phone 300, whose gallery stores a video 1, and the video 1 is pre-allocated attribute tags "star" and "this year". For example, the "star" may be a filename manually configured by the user for the video 1, and "this year" is video obtaining time of the video 1. As shown in FIG. 1a, when a search text entered by the user in a search box of the gallery provided by the mobile phone 300 is a keyword "star", the mobile phone 300 may search for a video having the attribute tag "star", and display a search result including the video 1.

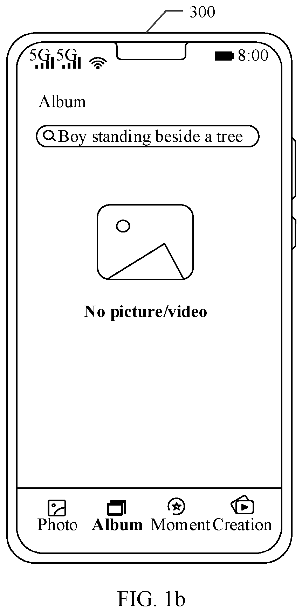

However, as shown in FIG. 1b, if the user enters a complex search text "boy standing beside a tree" in the search box of the gallery, the mobile phone 300 cannot find the video 1, and the user still needs to perform a manual search.

During actual application, the user may enter, based on image content presented in a video, a complex search text such as the "boy standing beside a tree" to describe a video that the user wants to obtain. However, in the related art, the electronic device supports only search matching based on a keyword such as an attribute tag. Consequently, the electronic device cannot display the video needed by the user, and the user still needs to manually slide a scroll bar of the gallery for searching, which is complex and affects user experience of the mobile phone 300.

To resolve the foregoing problem, an embodiment of this application provides a visual media search method. Based on a search text entered by a user, a video frame matching the search text can be found. A text semantic meaning of the search text is fully associated with a visual semantic meaning of the video frame, so that fusion and interaction between the search text and image content presented in the video frame can be implemented, thereby improving accuracy of video searching and improving user experience.

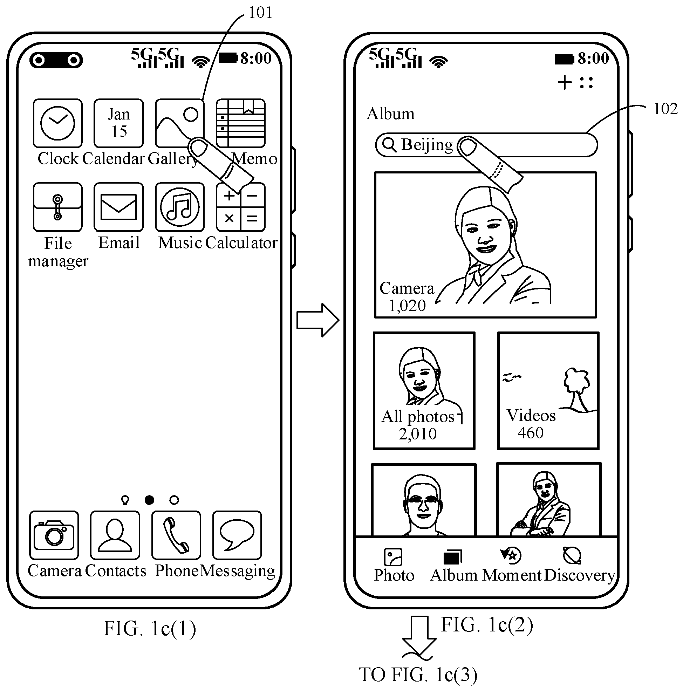

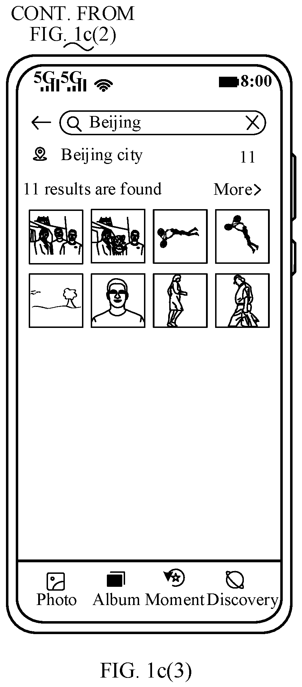

For example, FIG. 1c(1), FIG. 1c(2), and FIG. 1c(3) are diagrams of an application scenario of a visual media search method example according to an embodiment of this application. For example, the electronic device is a mobile phone. As shown in FIG. 1c(1), a home screen of the mobile phone includes an icon 101 of a gallery APP. The user taps the icon 101. In response to the tapping of the user, the mobile phone opens the gallery APP and displays an album interface shown in FIG. 1c(2). The album interface 102 includes a search box 103. The user may enter search content in the search box 103. For example, the user may enter "Beijing" in the search box 103. In response to the operation of the user, the mobile phone may search the gallery for an image whose shooting location is "Beijing", and display a search result, as shown in FIG. 1c(3).

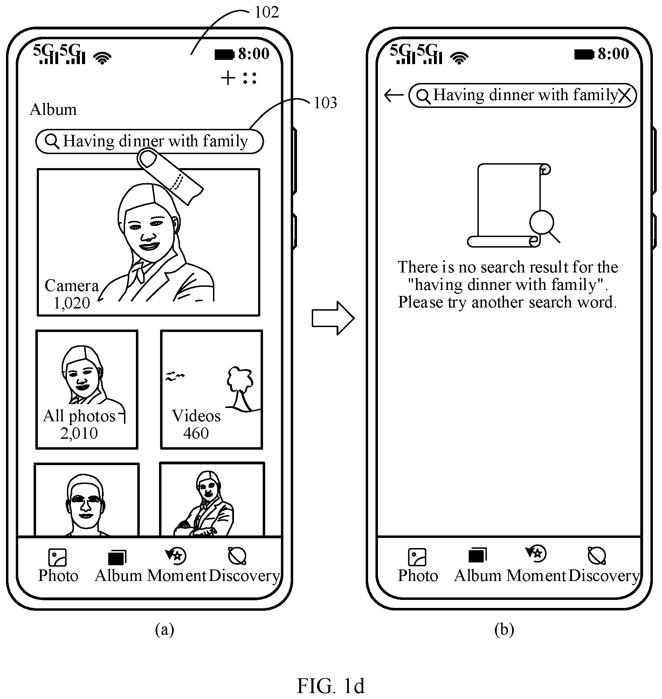

In the related art, the search function is applicable only to image searching but not applicable to video searching. Specifically, as shown in FIG. 1c(3), the search result does not include a video. Moreover, in the related art, searching is mainly performed based on a shooting location or a shooting moment of an image, a person name or another tag marked by the user for the image, or the like, and content that is not marked with a tag cannot be found. Consequently, the search result is not accurate, and user experience is not desirable. In addition, in the related art, an image or a video cannot be searched for based on a person relationship, and search experience brought to the user needs to be improved. For example, as shown in (a) in FIG. 1d, the user enters "having dinner with family" in the search box 103 of the album interface 102. Even if the gallery includes an image matching the phrase, the mobile phone still cannot find a result, as shown in (b) in FIG. 1d.

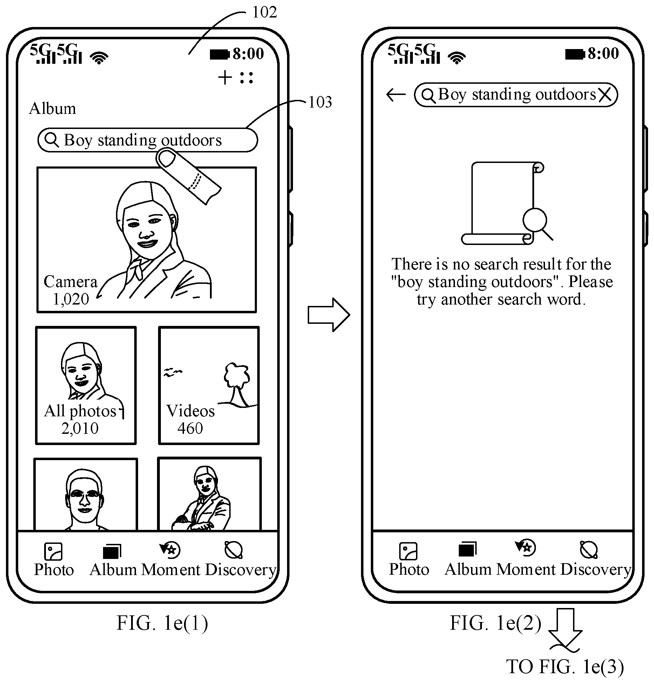

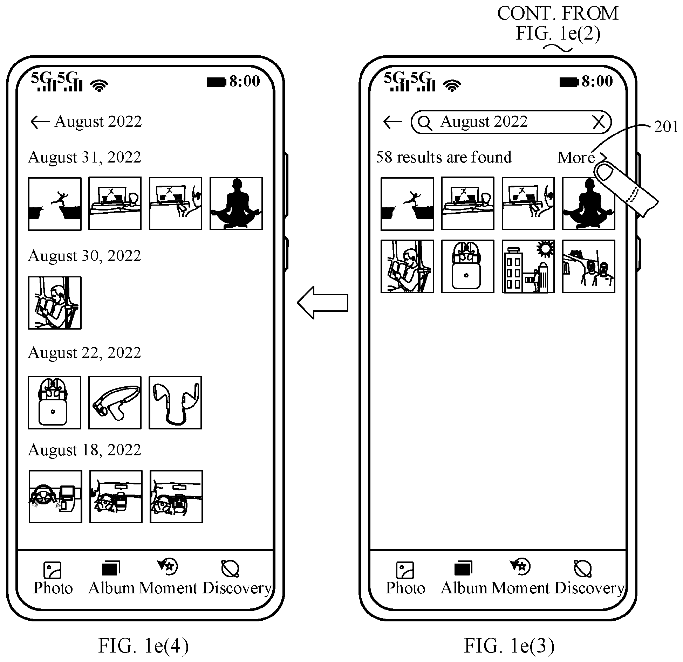

Moreover, in the related art, searching is mainly performed based on a shooting location or a shooting moment of an image, an attribute tag marked by the user for the image, or the like, and content that is not marked with an attribute tag cannot be found. Consequently, the search result is not accurate, and user experience is not desirable. For example, as shown in FIG. 1e(1), when the user enters a complex search text "boy standing outdoors" in the search box 103 of the album interface 102, even if the gallery includes an image or a video matching the search phrase (as shown in FIG. 1c(3)), the mobile phone cannot find a result, as shown in FIG. 1e(2). The user still needs to manually slide a scroll bar of the gallery for searching, which is complex and affects user experience.

In addition, in the related art, image searching is performed based on shooting time, a shooting moment, or the like, and search results are not sorted. If the user needs to find an image that meets an actual search intention from the search results, the user needs to open the search results for searching one by one, which is complex and brings poor search experience to the user. For example, if the user wants to search for an image related to the "boy standing outdoors", the image cannot be found through the process shown in FIG. 1e, and therefore, searching can only be performed by using shooting time or a shooting moment. Assuming that the image related to the "boy standing outdoors" is shot in August 2022, the user may continue to enter "August 2022" in the search box 103 in FIG. 1e(2). In response to the operation of the user, the mobile phone displays a search result, as shown in FIG. 1e(3). The search result includes 58 images. The user needs to tap a "more" option 201 to enter an interface shown in FIG. 1e(4), and searches for the image related to the "boy standing outdoors".

In view of this, an embodiment of this application provides a visual media search method. First, the method is not only applicable to images, but also applicable to videos, to provide more search results and more comprehensive search results for the user, thereby improving user experience. Second, in the method, searching and matching are performed based on semantic vectors. Therefore, the user may perform a fuzzy search based on a phrase. For example, the user may enter a search phrase such as a "woman doing yoga". The electronic device can perform searching based on the phrase, and can more accurately find visual media that meets an actual intention of the user, thereby improving search precision and improving user experience. Third, in the method, person relationship information in visual media can be recognized, and a correspondence between the visual media and a person relationship is established. In this way, when the user searches for a person relationship, an image and/or a video that have/has the person relationship with the user (for example, an owner of the machine) can be accurately presented to the user, so that a search manner in more dimensions is provided for the user, thereby improving user experience. Fourth, in the method, images and videos in a search result can be sorted together for presentation, to reflect matching degrees between the search phrase and different images or videos, which makes it easier for the user to find an image or a video that meets a search intention, thereby improving user experience.

The visual media search methods provided above may be applied to an electronic device. For ease of understanding, composition of the electronic device and a software structure of the electronic device are described below.

A type of the electronic device is not limited in this application. For example, the electronic device may be a device such as a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, or a smart watch. A specific form of the electronic device is not specifically limited in this application.

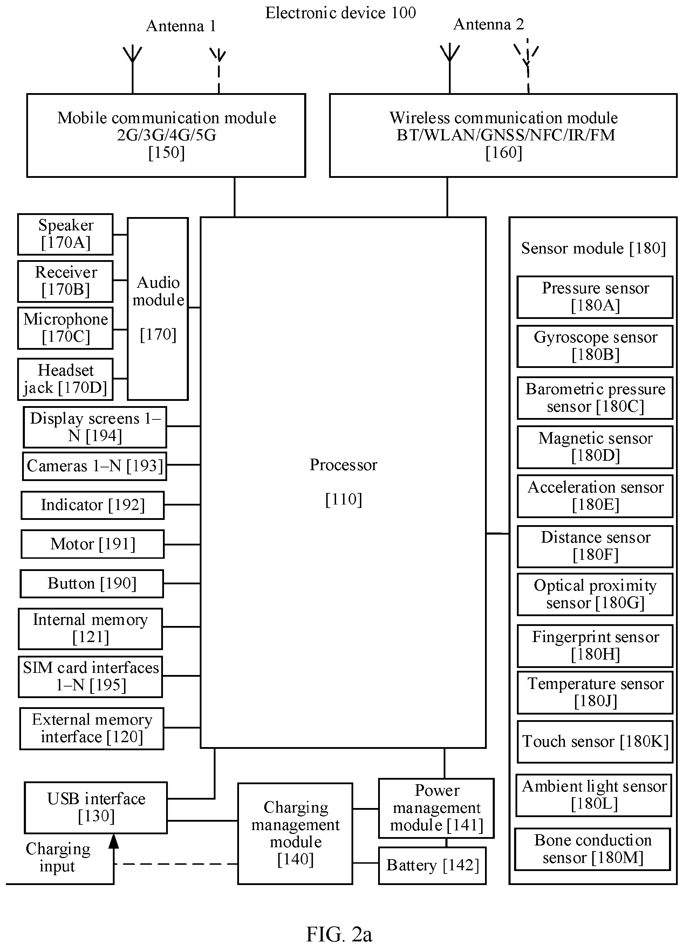

In this embodiment, as shown in FIG. 2a, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the schematic structure in this embodiment of this application does not constitute a specific limitation on the electronic device 100. In some other embodiments of this application, the electronic device 100 may include more or fewer components than those shown in the figure, or have some components combined, or have some components split, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be independent components, or may be integrated in one or more processors.

The controller may be a nerve center and a command center of the electronic device 100. The controller may generate an operation control signal based on instruction operation code and a timing signal, to control instruction fetching and instruction execution.

A memory may be further disposed in the processor 110, to store instructions and data. In some embodiments, the memory in the processor 110 is a cache. The memory may store instructions or data that has been just used or is cyclically used by the processor 110. If the processor 110 needs to use the instructions or the data again, the processor 110 may directly invoke the instructions or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that the schematic interfacing relationship between the modules in this embodiment of this application is merely an example for description, and does not constitute a limitation on the structure of the electronic device 100. In some other embodiments of this application, an interfacing manner different from that in the foregoing embodiment or a combination of a plurality of interfacing manners may alternatively be used for the electronic device 100.

The internal memory 121 may be configured to store computer-executable program code. The executable program code includes instructions. The processor 110 runs the instructions stored in the internal memory 121, to implement various functional applications and data processing of the electronic device.

The internal memory 121 may include a program storage area and a data storage area. The program storage area may store an operating system, an application required by at least one function (for example, a sound playback function during video playback, or an image playback function during video playback), and the like. The data storage area may store data (for example, video data) created when the electronic device is used, and the like.

In some embodiments, the internal memory 121 stores instructions for performing a visual media search method. The processor 110 may implement video searching by executing the instructions stored in the internal memory 121.

In some embodiments, the electronic device performs video searching in videos stored in a gallery application. The videos stored in the gallery application may be shot and stored by a user by using the electronic device. The electronic device may implement a shooting function by using the ISP, the camera 193, the video codec, the GPU, the display screen 194, the application processor, and the like.

The ISP is configured to process data fed back by the camera 193. In some embodiments, the ISP may be disposed in the camera 193. The camera 193 is configured to capture a static image or a video. The video codec is configured to compress or decompress a digital video. In this way, the electronic device can play or record videos in a plurality of encoding formats, for example, moving picture experts group (moving picture experts group, MPEG)1, MPEG2, MPEG3, and MPEG4.

With the NPU, intelligent cognition and other applications of the electronic device, such as image recognition, face recognition, voice recognition, and text understanding, can be implemented. In some embodiments, with the NPU, text understanding may be performed on a search text entered by the user in a search interface provided on the electronic device.

The electronic device implements a display function by using the GPU, the display screen 194, the application processor, and the like. The GPU is a microprocessor for image processing, and is connected to the display screen 194 and the application processor.

A series of graphical user interfaces (graphical user interface, GUI) may be displayed on the display screen 194 of the electronic device, and these GUIs are main screens of the electronic device. Generally, the display screen 194 of the electronic device includes displaying limited controls, and the user may interact with the controls through direct manipulation (direct manipulation), to read or edit related information of an application.

In some embodiments, the electronic device may include a gallery application. The display screen 194 of the electronic device may display an icon corresponding to the gallery application. After being triggered by the user, the display screen 194 of the electronic device may display a search interface of the gallery application. The search interface includes a search control. The user may perform an editing operation on the search control to enter a search text, and perform a trigger operation, so that the electronic device may search the gallery application based on the search text entered by the user, and present a search result to the user on the display screen 194.

In some embodiments, if the user triggers a video stored in the gallery application, the electronic device may implement an audio function during video playback by using the audio module 170, the speaker 170A, the headset jack 170D, the application processor, and the like.

The audio module 170 is configured to convert digital audio information into an analog audio signal for outputting, and convert an analog audio input into a digital audio signal. The user may listen to audio during video playback by using the speaker 170A of the electronic device. The headset jack 170D is configured to connect to a wired headset. The user may listen to audio during video playback by using the wired earphone connected to the headset jack 170D of the electronic device.

The charging management module 140 is configured to receive a charging input from a charger. The charger may be a wireless charger, or may be a wired charger. In some embodiments of wired charging, the charging management module 140 may receive a charging input of the wired charger through the USB interface 130. In some embodiments of wireless charging, the charging management module 140 may receive a wireless charging input by using a wireless charging coil of the electronic device 100. When charging the battery 142, the charging management module 140 may further supply power for the electronic device by using the power management module 141.

The electronic device 100 may implement a shooting function by using the ISP, the camera 193, the video codec, the GPU, the display screen 194, the application processor, and the like.

A wireless communication function of the electronic device 100 may be implemented by using the antenna 1, the antenna 2, the mobile communication module 150, the wireless communication module 160, the modem processor, the baseband processor, and the like.

The mobile communication module 150 may provide a wireless communication solution including 2G/3G/4G/5G or the like to be applied to the electronic device 100. In some embodiments, at least some functional modules of the mobile communication module 150 may be disposed in the processor 110. In some embodiments, at least some functional modules of the mobile communication module 150 may be disposed in a same component as at least some modules of the processor 110.

The wireless communication module 160 may provide wireless communication solutions including wireless local area networks (wireless local area networks, WLAN) (such as Wi-Fi networks), Bluetooth (bluetooth, BT), a global navigation satellite system (global navigation satellite system, GNSS), frequency modulation (frequency modulation, FM), near field communication (near field communication, NFC), infrared (infrared, IR), or the like to be applied to the electronic device 100.

In this embodiment of this application, the electronic device 100 may receive a picture or a video from another device by using the mobile communication module 150 or the wireless communication module 160, and store the received picture or video into the gallery.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation for graphics rendering. The processor 110 may include one or more GPUs that execute a program instruction to generate or change display information.

The display screen 194 is configured to display an image, a video, and the like. The display screen 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini-LED, a micro-OLED, a micro-OLED, a quantum dot light-emitting diode (quantum dot light-emitting diode, QLED), or the like.

In this embodiment of this application, the display screen 194 may be configured to display a user interface of the electronic device 100, for example, a desktop/home screen interface or an album display interface of the gallery.

The electronic device 100 may implement a shooting function by using the ISP, the camera 193, the video codec, the GPU, the display screen 194, the application processor, and the like.

The ISP is configured to process data fed back by the camera 193. For example, during photographing, when a shutter is opened, light is transferred to a photosensitive element of the camera through a lens, an optical signal is converted into an electrical signal, and the photosensitive element of the camera transfers the electrical signal to the ISP for processing, to convert the electrical signal into a visible image. The ISP may further perform algorithm optimization for noise, brightness, and complexion of the image. The ISP may further optimize parameters such as an exposure and a color temperature of a shot scene. In some embodiments, the ISP may be disposed in the camera 193.

The camera 193 is configured to capture a static image or a video. An optical image of an object is generated through the lens, and projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device may include one or N cameras 193. N is a positive integer greater than 1. In this embodiment of this application, the static image or the video captured by the camera 193 may be stored in the gallery.

The digital signal processor is configured to process a digital signal. In addition to a digital image signal, the digital signal processor may further process another digital signal. For example, when the electronic device selects a frequency, the digital signal processor is configured to perform Fourier transform or the like on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)1, MPEG2, MPEG3, and MPEG4.

The NPU is a neural-network (neural-network, NN) computing processor, which quickly processes input information by referring to a biological neural network structure, for example, referring to a mode of transfer between human brain neurons, and may further continuously perform self-learning. With the NPU, intelligent cognition and other applications of the electronic device, such as image recognition, face recognition, voice recognition, and text understanding, can be implemented.

The audio module 170 is configured to convert digital audio information into an analog audio signal for outputting, and convert an analog audio input into a digital audio signal. The audio module 170 may be further configured to encode and decode audio signals. In some embodiments, the audio module 170 may be disposed in the processor 110, or some functional modules of the audio module 170 are disposed in the processor 110.

The pressure sensor is configured to sense a pressure signal, and can convert the pressure signal into an electrical signal. In some embodiments, the pressure sensor may be disposed on the display screen 194. There are many types of pressure sensors, such as a resistive pressure sensor, an inductive pressure sensor, and a capacitive pressure sensor. The capacitive pressure sensor may include at least two parallel plates having a conductive material. When a force is applied to the pressure sensor, capacitance between electrodes changes. The electronic device 100 determines intensity of pressure based on the change of the capacitance. When a touch operation is performed on the display screen 194, the electronic device 100 detects intensity of the touch operation by using the pressure sensor. Moreover, the electronic device 100 may calculate a touch position based on a detected signal of the pressure sensor.

The touch sensor is also referred to as a "touch panel". The touch sensor may be disposed on the display screen 194, and the touch sensor and the display screen 194 constitute a touchscreen, also referred to as a "touch control screen". The touch sensor is configured to detect a touch operation performed on or near the touch sensor. The touch sensor may transfer the detected touch operation to the application processor to determine a touch event type. A visual output related to the touch operation may be provided on the display screen 194. In some other embodiments, the touch sensor may alternatively be disposed on a surface of the electronic device 100 at a different position from the display screen 194.

The electronic device 100 may detect an operation of the user on the display screen 194 by using the pressure sensor or the touch sensor. For example, the operation may be an operation of entering text information in a search box. For example, the operation is an upward or downward sliding operation. For example, the operation is an operation of tapping a control in a user interface.

In addition, the electronic device further runs an operating system above the foregoing components, for example, an iOS operating system developed by Apple Inc., an Android open source operating system developed by Google Inc., or a Windows operating system developed by Microsoft Corporation. An application may be installed and run in the operating system.

The operating system of the electronic device may be in a layered architecture, an event-driven architecture, a microkernel architecture, a microservice architecture, or a cloud architecture. In this embodiment of this application, an Android system in the layered architecture is used as an example to illustrate a software structure of the electronic device.

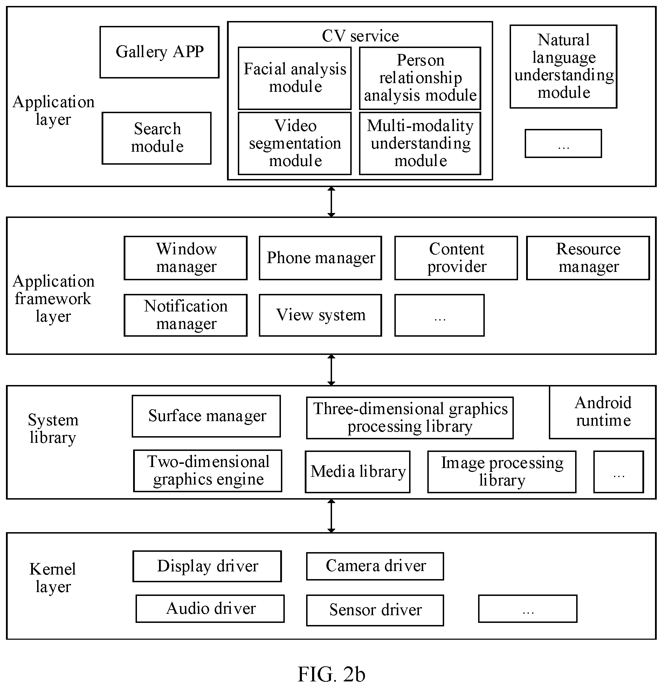

FIG. 2b is a block diagram of a software structure of an electronic device according to an embodiment of this application.

In the layered architecture, software is divided into several layers, and each layer has a clear role and task. The layers communicate with each other through a software interface. In some embodiments, the Android system is divided into four layers from top to bottom: an application layer, an application framework layer, Android runtime (Android runtime), a system library, and a kernel layer.

The application layer may include a series of application packages. As shown in FIG. 2b, the application packages may include a gallery APP, a video playback application, a search module, a natural language understanding module, a computer vision (computer vision, CV) service, and the like.

In addition, the search module, the natural language understanding module, the CV service, and the like may be all located at a same layer of the electronic device, or may be separately located at different layers of the electronic device, or may be located at a plurality of layers of the electronic device, to implement functions of the electronic device through a software interface between the layers.

The visual media search method provided in this embodiment of this application may be implemented based on interaction between the search module, the natural language understanding module, and the CV service. For a specific implementation, refer to detailed descriptions in the following embodiment.

A gallery service module stores pictures/videos obtained by the user through an operation such as shooting, downloading, screenshotting, or screen recording; stores information such as representative frames of video segments and visual semantic vectors of the representative frames; receives a search text entered by the user, so that the electronic device performs video search matching based on the search text entered by the user; and presents the pictures/videos obtained by the user through the operation such as shooting, downloading, screenshotting, or screen recording.

The gallery is also referred to as a gallery APP, a gallery service, a gallery service module, or the like, and is configured to provide the user with services such as storage, management, presentation, and recommendation of visual media such as an image and a video. Optionally, the gallery may have a database, which is referred to as a gallery database below. The gallery database is configured to store related data of the gallery, for example, images and attribute information of the images, videos and attribute information of the videos, visual semantic vectors, face clustering results, and person relationship information.

Optionally, the gallery APP may have a plurality of functions, such as an album function and a one-tap video editing function. Data in the gallery database may be used for each function of the gallery APP, and data returned by the search module to the gallery APP may also be used for any function of the gallery APP. This is not limited in this application.

The video playback application may be a native video playback application of the electronic device. In some embodiments, the video playback application may alternatively be a third-party video playback application.

The search module is configured to construct, based on information stored in the gallery service module, indexes corresponding to videos, perform a vector recall in a plurality of indexes based on a text semantic vector corresponding to a search text, perform an entity recall in the plurality of indexes based on an entity in the search text, and sort a vector recall result and an entity recall result to obtain a search result.

The search module is configured to search for visual media based on content entered by the user. Optionally, the search module may have a database, configured to store index data. An indexing manner of the index data may be inverted indexing. The database of the search module is referred to as an inverted index database below.

The natural language understanding module is configured to recognize an entity in a search text entered by the user.

The natural language understanding module is configured to understand information included in the text. In this embodiment of this application, the natural language understanding module may be configured to recognize a semantic subject, a person relationship, category information, and the like in the text. The category information is information representing a type to which an image or a video belongs. For example, the category information may be a person, a plant, an animal, a building, natural scenery, or the like.

In an embodiment, as shown in FIG. 2b, the CV service may include a facial analysis module, a person relationship analysis module, a video segmentation module, a multi-modality understanding module, and the like.

The facial analysis module is configured to perform facial analysis on visual media. The facial analysis includes, but is not limited to, face recognition, face clustering, gender recognition, age recognition, and the like.

The person relationship analysis module is configured to analyze a social relationship between persons included in visual media, to obtain person relationship information.

The video segmentation module is configured to perform segmentation processing on a video, to divide the video into a plurality of video segments based on semantic content, and extract a frame of image from each video segment as a representative frame (also referred to as a representative frame of image). The representative frame is used to represent a semantic meaning of the video segment.

The multi-modality understanding module is configured to: perform frame splitting processing on a video to obtain video frames, then perform segmentation processing on the video by using a video segmentation algorithm to obtain video segments, and then determine representative frames of the video segments and visual semantic vectors of the representative frames.

The multi-modality understanding module, also referred to as a multi-modal semantic understanding module, a multi-modal semantic understanding model, or the like, is configured to perform semantic understanding on one or more types of information in a plurality of modalities, such as a text, an image, a video, and audio. In this embodiment of this application, the multi-modality understanding module may be configured to perform semantic understanding on an image to obtain a visual semantic vector, and perform semantic understanding on a text (for example, a search text) to obtain a text semantic vector.

Optionally, the CV service may have a database, which is referred to as a CV database below. The CV database is configured to store data required for running the modules in the CV service, for example, store an image including a person, a face clustering result, and a person relationship analysis result.

Certainly, in addition to the modules or APPs shown in FIG. 2b, the application layer may further include applications (not shown in the figure) such as camera, call, map, Bluetooth, and SMS. This is not limited in this embodiment of this application.

The application framework layer provides an application programming interface (application programming interface, API) and a programming framework for the applications at the application layer. The application framework layer may include some predefined functions. As shown in FIG. 2b, the application framework layer may include a window manager, a phone manager, a content provider, a resource manager, a notification manager, a view system, and the like.

The window manager is configured to manage a window program. The content provider is configured to obtain and store data, and make the data accessible to applications. The data may include videos, images, and the like. The resource manager provides various resources to applications, such as localized strings, icons, pictures, layout files, and video files. The view system includes visual controls, such as a text display control and a picture display control. The view system may be configured to construct applications.

In some embodiments, each application package at the application layer may implement a related function of the gallery APP by invoking an algorithm or a module at the application framework layer. For example, during face clustering, the facial analysis module may cluster faces in images by invoking a face clustering algorithm module (not shown in the figure) at the application framework layer, to obtain a face clustering result. For another example, during person relationship analysis, the person relationship analysis module may invoke a social circle recognition algorithm module (not shown in the figure) at the application framework layer, to recognize a central person based on the face clustering result, and discover a social circle of the central person. Detailed implementation of the foregoing processes is further described in subsequent embodiments.

The Android runtime includes a core library and a virtual machine. The Android runtime is responsible for scheduling and managing the Android system. The core library includes two parts: one part is a performance function that needs to be invoked in a java language, and the other part is a core library of Android.

The system library may include functional modules such as a surface manager (surface manager), a media library (Media Libraries), a three-dimensional graphics processing library (for example, openGL ES), a two-dimensional graphics engine (for example, SGL), and an image processing library.

The surface manager is configured to manage a display subsystem, and provide fusion of 2D and 3D layers for a plurality of applications. The media library supports playback and recording of a plurality of commonly used audio and video formats, static image files, and the like. The three-dimensional graphics processing library is configured to implement three-dimensional graphics drawing, image rendering, composition, image layer processing, and the like. The 2D graphics engine is a drawing engine for 2D drawing.

The kernel layer is a layer between hardware and software. The kernel layer includes at least a display driver, a camera driver, an audio driver, and a sensor driver.

It should be noted that, although this embodiment of this application is described by using the Android system as an example, a basic principle thereof is also applicable to electronic devices based on iOS, Windows, and other operating systems.

To make persons skilled in the art understand technical solutions of this application more clearly, the following first describes application scenarios of the technical solutions of this application.

First, an application scenario 1 of video segmentation is described.

For example, the visual media search method provided in embodiments of this application may be implemented in a gallery search scenario of an electronic device.

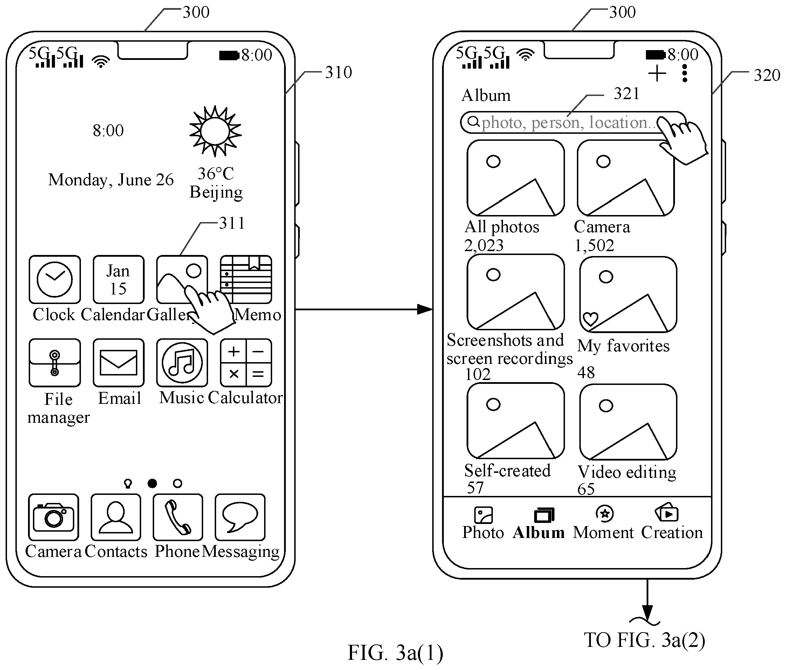

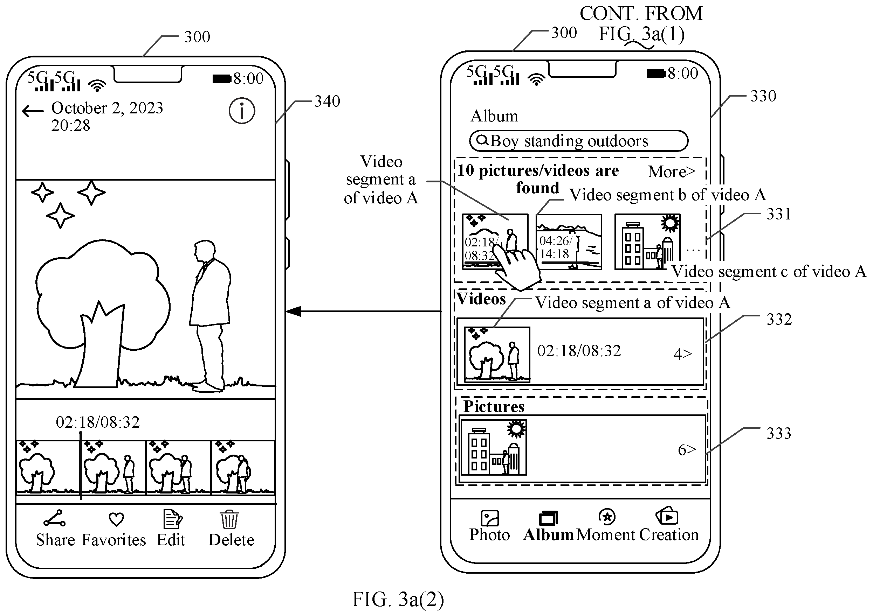

With reference to FIG. 3a(1) and FIG. 3a(2), the visual media search method provided in embodiments of this application is illustrated below by using an example that the electronic device is the mobile phone 300. In this scenario, the gallery of the mobile phone 300 may include a plurality of pictures and a plurality of videos. In some embodiments, the picture/video may be shot and stored in the gallery by the user by using the mobile phone 300, or may be downloaded and stored in the gallery by the user by using another application platform, or may be downloaded and stored in the gallery by the user after being sent from another electronic device to the mobile phone 300.

In the visual media search method, the mobile phone 300 may construct, in a charged or screen-off state, indexes for the video stored in the gallery. In an index construction process, the mobile phone 300 may perform frame splitting processing on the video to obtain frames, perform segmentation processing on the video based on the plurality of video frames by using a video segmentation algorithm to obtain video segments, then determine representative frames of the video segments and visual semantic vectors of the representative frames, and then construct indexes of the video segments based on the visual semantic vectors of the representative frames. For a specific implementation, refer to FIG. 5b and detailed descriptions in the following embodiment. It should be understood that, the frame splitting processing does not need to be performed on the picture stored in the gallery. Refer to the manner of constructing an index based on a representative frame of a video segment, to construct an index of the picture.

It is assumed that the user shoots a plurality of videos by using the mobile phone 300 during a tour on weekend, and stores the videos into the mobile phone 300. In leisure time, the user hopes to edit the videos shot during the tour. In this case, the user may perform searching by using a search function of the gallery of the mobile phone 300, so that the mobile phone 300 displays the videos shot during the tour.

As shown in FIG. 3a(1), the mobile phone 300 displays a home screen 310. The home screen 310 includes application icons of a plurality of applications such as an application icon 311 of the gallery. The user triggers the application icon 311 of the gallery. The mobile phone 300 starts the gallery in response to the trigger operation of the user, and displays an album display interface 320 of the gallery. The album display interface 320 includes a search box 321 and a plurality of albums. For example, the plurality of albums may include an "all photos" album, a "camera" album, a "my favorites" album, a "screenshots and screen recordings" album, a "my favorites" album, a "self-created" album, a "video editing" album, and the like shown in FIG. 3a(1).

In an example, the user may perform a trigger operation on the search box 321 included in the album display interface 320, and enter a search text "boy standing outdoors" in the search box 321. The mobile phone 300 converts the "boy standing outdoors" entered by the user into a text semantic vector, and then performs search matching based on the text semantic vector, indexes of videos, and indexes of pictures. The index of the video includes a visual semantic vector of a representative frame, and the index of the picture includes a visual semantic vector of the picture. Then, vector similarities between the text semantic vector and visual semantic vectors may be calculated, and a picture/video corresponding to a visual semantic vector whose vector similarity exceeds a vector similarity threshold is used as a first search result. Subsequently, the mobile phone 300 may display a first search result display interface 330 of the gallery. The first search result display interface 330 may display first search results corresponding to the "boy standing outdoors". The first search results may include a picture and a video.

An index of the video in the first search results includes a visual semantic vector of a representative frame. As described above, the representative frame may be used to represent a corresponding video segment. Therefore, a visual semantic meaning of the representative frame may represent visual semantic meanings of a plurality of video frames of the video segment. That is, the visual semantic vector of the representative frame is fully associated with the video segment.

When the user enters a complex search text based on image content presented in a video, in this application, search matching is performed based on a text semantic vector corresponding to the search text and visual semantic vectors of representative frames, so that fusion and interaction between the search text and image content presented in a video segment can be implemented, thereby improving accuracy of video searching and improving user experience.

In some embodiments, the first search results displayed on the mobile phone 300 may be sorted in descending order of degrees of correlation to the search text entered by the user.

As shown in FIG. 3a(2), the first search result display interface 330 displayed on the mobile phone 300 may include a first display area 331, a second display area 332, and a third display area 333. In the first display area 331, all the first search results are presented, including pictures and videos. In the second display area 333, a best matched video search result is presented, a quantity "4" of all video search results is presented, and a time point corresponding to the best matched video search result is enlarged and presented. In the third display area 332, a best matched picture search result is presented, and a quantity "6" of all picture search results is presented.

As shown in FIG. 3a(2), a thumbnail and a time point are displayed in the video search result in the first search result display interface 330. In some embodiments, the thumbnail corresponds to a video frame of a video segment in a video, and a visual semantic vector of a representative frame in the video segment matches the text semantic vector corresponding to the search text entered by the user. That is, a vector similarity between the two exceeds the vector similarity threshold. The time point of the video may be a time point of the video segment to which the video frame corresponding to the thumbnail belongs. For example, the time point may be a time point of the video frame corresponding to the thumbnail, or may be a time point of another video frame in the video segment.

A video search result, namely, a video segment a of a "video A", in the first display area 331 is used as an example. The "video A" is divided into a plurality of video segments, a thumbnail presented in the "video A" corresponds to a start frame of the video segment a of the "video A", and a vector similarity between a visual semantic vector of a representative frame of the video segment a and the text semantic vector of the "boy standing outdoors" exceeds the vector similarity threshold.

The second display area 332 includes two time points. The 1st time point is "02:18", indicating that the start frame of the video segment a starts to be displayed at "02:18". The 2nd time point indicates that total duration of the "video A" is "08:32". As shown in FIG. 3a(2), if the "video A" is a video needed by the user, the user may trigger the "video A", and the mobile phone 300 may display a video playback interface 340 in response to the trigger operation performed by the user on the "video A". In this interface, the mobile phone 300 adjusts a time progress of the "video A" to "02:18" to start playing, that is, starts playing from the start frame of the video segment a in the "video A".

It should be noted that the thumbnail and the time point that are presented in the "video A" are merely examples.

For example, the thumbnail may correspond to the representative frame of the video segment a in the "video A", and the representative frame may be the start frame, an end frame, an intermediate frame, an optimal frame, or any video frame of the video segment a. Alternatively, the start frame of the video segment a may be used as the thumbnail. This is not limited in this application.

For example, the 1st time point may be the same as a time point of the video frame corresponding to the thumbnail. For example, if the thumbnail corresponds to the representative frame of the video segment a, the 1st time point may be a time point corresponding to the representative frame. Alternatively, the 1st time point may be different from the time point corresponding to the thumbnail. For example, the thumbnail is the representative frame of the video segment a, and the representative frame is an intermediate frame of the video segment a, while the 1st time point may be a time point corresponding to the start frame of the video segment a. This is not limited in this application.

It should be noted that the foregoing manner of displaying the search box 321 in the album display interface 320 for the user to enter a search text is merely an example, and the search box may alternatively be displayed in another interface of the gallery.

In some embodiments, as shown in FIG. 3a(1), a "photo" control, a "time point" control, and a "creation" control are provided at a lowest part of the album display interface 320, and are respectively configured as entries to a photo display interface, a time point display interface, and a creation display interface of the gallery. The photo display interface, the time point display interface, and the creation display interface all include a search box. Search boxes of the three interfaces support the same search function as the search box 321 of the album display interface 320, and all support searching based on a search text entered by the user in pictures and videos included in the gallery. After the searching is completed, the first search result display interface 330 is also displayed, and included first search results are also the same.

It should be understood that if a vector similarity between a visual semantic vector of a representative frame of a video segment and a text semantic vector of a text exceeds a threshold, the video segment can be found when the user enters the text.

In some embodiments, a video includes a plurality of video segments, and a search text entered by the user may match an index of one or more video segments of the video.

For example, the search text "boy standing outdoors" entered by the user may match the video segment a, a video segment b, and a video segment c in the "video A". In this case, the video segment a, the video segment b, and the video segment c of the "video A" may be all displayed. A thumbnail presented in the video segment b of the "video A" may be a representative frame of the video segment b, and a thumbnail presented in the video segment c of the "video A" may be a start frame of the video segment c. As shown in the first display area 331 of the first search result display interface 330 in FIG. 3a(2), the video segment a, the video segment b, and the video segment c of the video A may be found based on the search text "boy standing outdoors" entered by the user. The video segment a, the video segment b, and the video segment c are sorted in an order of matching degrees with the search text, indicating that vector similarities between the text semantic vector of the "boy standing outdoors" and respective visual semantic vectors of representative frames of the three video segments all exceed the vector similarity threshold.

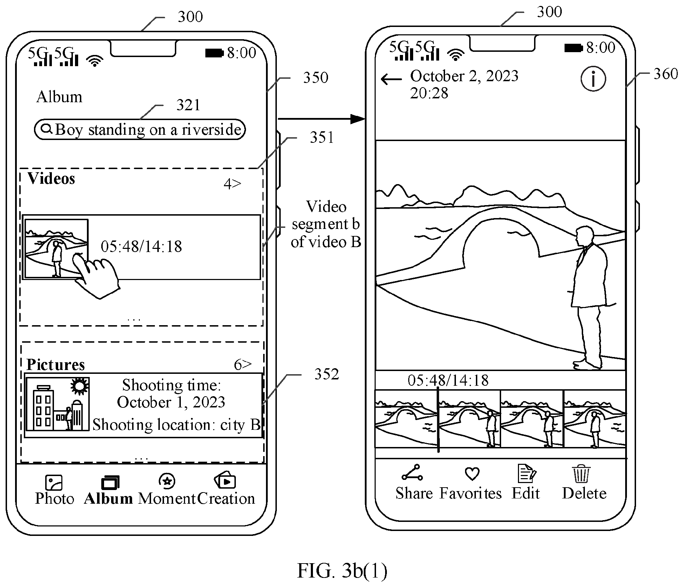

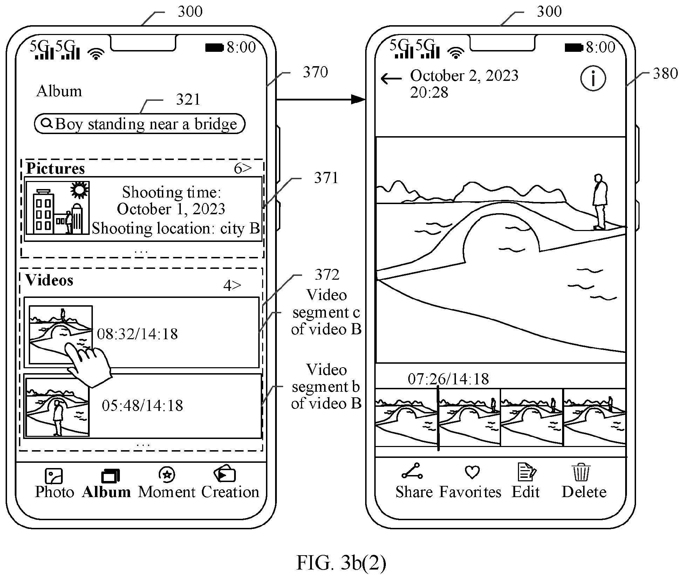

In some other embodiments, a same video segment may be found based on different search texts entered by the user. Next, descriptions are provided with reference to FIG. 3b(1) and FIG. 3b(2).

As shown in FIG. 3b(1), a first search result display interface 350 may include a first display area 351 and a second display area 352. All video search results are presented in the first display area 351. All picture search results are presented in the second display area 352, and on the right of each picture search result, shooting time and a shooting location of the picture may be displayed.

Assuming that the user enters a "boy standing on a riverside" in the input box, the first display area 351 may display a video search result matching the "boy standing on a riverside", including a video segment b of a "video B". The first display area 351 includes a thumbnail of a representative frame of the video segment b and two time points. The 1st time point is time "05:48" corresponding to a start frame of the video segment b. The 2nd time point represents total duration "14:18" of the "video B". If the user triggers the thumbnail of the representative frame of the video segment b, the mobile phone 300 may display a video playback interface 360. In this interface, the mobile phone 300 adjusts a time progress of the "video B" to "05:48" to start playing, that is, the mobile phone 300 starts playing from the start frame of the video segment b in the "video B".

Optionally, the 1st time point may alternatively be a time point of the representative frame of the video segment b of the video B. This is not limited in this solution herein.

It should be noted that FIG. 3b(1) is merely an example, and the first display area 351 may alternatively display other information of the "video B", for example, a shooting location, shooting time, a person name, and a person relationship that correspond to the "video B". The second display area 352 may alternatively display other information of the picture search result, for example, a person name and a person relationship that correspond to the image.

It should be noted that, after the user triggers the thumbnail of the representative frame of the video segment b, the mobile phone 300 adjusts the time progress of the "video B" to the 1st time point for playing. It should be understood that when the 1st time point is the time point of the representative frame of the video segment b of the video B, if an intermediate frame of the video segment b is the representative frame, the time progress of the video B may alternatively be adjusted to a time point corresponding to the intermediate frame to start playing. The time point corresponding to the intermediate frame is "07:09", and is later than the time "05:48" corresponding to the start frame.

As shown in FIG. 3b(2), a first search result display interface 370 may include a first display area 371 and a second display area 372. All picture search results are presented in the first display area 371. All video search results are presented in the second display area 372.

Assuming that the user enters a "boy standing near a bridge" in the input box, the second display area 372 may display video search results matching the "boy standing near a bridge", including a video segment c of the "video B" and the video segment b of the video "b". In combination with FIG. 3b(1), the video segment b of the "video B" is found when the user enters two different search texts, namely, the "boy standing on a riverside" and the "boy standing near a bridge", indicating that a vector similarity between a visual semantic vector of the representative frame of the video segment b of the "video B" and a text semantic vector of the "boy standing on a riverside" exceeds the vector similarity threshold, and a vector similarity between the visual semantic vector of the representative frame of the video segment b of the "video B" and a text semantic vector of the "boy standing near a bridge" also exceeds the vector similarity threshold. For a display form of the video segment b of the "video B", refer to descriptions of FIG. 3b(1). Details are not described herein again.

The first display area 372 includes a thumbnail of a representative frame of the video segment c and two time points. The 1st time point is time "08:32" corresponding to the representative frame of the video segment c. The 2nd time point represents total duration "14:18" of the "video B". If the user triggers the thumbnail of the representative frame of the video segment c, the mobile phone 300 may display a video playback interface 380. In this interface, the mobile phone 300 adjusts a time progress of the "video B" to "07:26" to start playing, that is, the mobile phone 300 starts playing from the start frame of the video segment b in the "video B". For display forms of the video search results and the picture search results shown in FIG. 3b(2), refer to descriptions in FIG. 3a(2) and FIG. 3b(1). Details are not described herein again.

It should be understood that recommendation information may be displayed in the search box of the gallery application, to help the user obtain related information of a picture/video stored in the gallery.

In some embodiments, the recommendation information displayed in the search box of the gallery is a phrase having a natural semantic meaning. The user may enter a text in the search box based on content and a format of the recommendation information, and use a phrase having a natural semantic meaning as a search text to be entered in the search box. The electronic device searches pictures/videos in the gallery based on the search text having the natural semantic meaning, so that a picture/video needed by the user can be found more accurately.

In an implementation, the electronic device may obtain attribute tags of the pictures/videos. In an example, the attribute tag includes at least one of time, a location, a classification tag, and an event.

In some embodiments, the "time" may be obtained based on shooting time of the picture/video. For example, the "time" may include "Thursday, November 9, 2023", "Friday, July 2, 2021", or the like.

The "location" may be obtained based on a shooting location of the picture/video, for example, may be obtained based on GPS positioning information obtained when the video is shot. For example, the "location" may include a city, a scenic spot, or the like.

The "classification tag" and the "event" may be obtained by performing semantic analysis on the picture/video. In an example, the electronic device may perform semantic analysis on the picture or a video frame in the video by using a computer vision service, and generate content of the "classification tag" and the "event" based on a semantic meaning of the picture/video.

For example, the "classification tag" may include a person, a plant, an animal, or the like, or may include a building, natural scenery, or the like, or may include street art, musical instrument, art exhibition, a competition game, a birthday, or the like. For example, the person may include a person name, an occupation name, a person age group name, or the like.

For example, the "event" may include a game, a sport, traveling, or the like.

It should be understood that, an attribute tag corresponding to a picture/video may include one or more of the time, the location, the classification tag, and the event. For example, for a picture downloaded from a network, the electronic device does not obtain shooting time of the picture. In this case, the attribute tag of the picture does not include the "time", or content of the "time" is null.

In an implementation, one or more attribute tags of the picture/video may be concatenated according to a preset rule to generate at least one piece of combined information. For example, the electronic device concatenates four attributes "time", "location", "classification tag", and "event" of the video, to generate one piece of combined information. For another example, the electronic device may alternatively generate one piece of combined information based on one attribute tag of the picture/video. For example, the attribute tag is the "time".

In an implementation, a fixed concatenating word may be concatenated with a piece of combined information to generate recommended content corresponding to the picture/video. For example, the fixed concatenating word may include "try to search for", "in/on/at", "shot", "video (of)", or the like.

Table 1 shows some examples of recommended content generated based on different quantities of attribute tags. It should be noted that when the recommended content is generated, corresponding mapping may be performed on content of an attribute tag. For example, specific time "Monday, October 1, 2023" is mapped to "today", "the day before yesterday", "August", "last month", "last year", "this year", "National Day", or the like.

**Table 1**

| Sequence number | Attribute tag | Recommended content |
|---|---|---|
| 1 | "classification tag", "time", and "location" | try to search for + video of + "Zhang San" + on + "riverside" + "the day before yesterday" |
| 2 | "time" and "classification tag" | try to search for + video of + "Zhang San" + "the day before yesterday" |
| 3 | "classification tag" and "location" | try to search for + video of + "Zhang San" + on + "riverside" |
| 4 | "time" and "location" | try to search for + video + on + "riverside" + "the day before yesterday" |
| 5 | "time" | try to search for + video shot + "the day before yesterday" |

As shown in Table 1, a plurality of pieces of concatenated content may be generated by using attribute tags of one video in concatenation manners shown in Table 1. For example, if the attribute tags of the video include the "classification tag", the "time", and the "location", five different pieces of concatenated content may be respectively generated in concatenation manners of sequence numbers 1 to 5 in Table 1.

In an implementation, the electronic device may determine any one of the plurality of pieces of concatenated content as recommended content corresponding to the picture/video.

In another implementation, the concatenation manners each correspond to a priority, and priorities of the concatenation manners sequentially descend in an order from top to bottom in Table 1. The electronic device generates the recommended content corresponding to the picture/video in a concatenation manner with a highest priority in the concatenation manners supported by the picture/video. As shown in Table 1, if the attribute tags of the video include the "classification tag", the "time", and the "location", a fixed concatenating word is concatenated with the "classification tag", the "time", and the "location" in the concatenation manner of the sequence number 1 in Table 1, to generate the recommended content corresponding to the picture/video.

In the visual media search method provided in this embodiment of this application, recommendation information in the search box may be generated based on recommended content corresponding to a picture/video in the gallery.

In an implementation, the electronic device may select recommended content corresponding to a first picture/-video in the gallery to generate the recommendation information in the search box. In an example, a first picture/video within a preset time period may be selected. For example, the preset time period is time more than one month from today. In an example, the electronic device updates the first picture/video once every day, and first pictures/videos selected within preset duration (for example, within one week) are different.

For example, on the 1st day, recommendation information displayed in the search box in the gallery of the electronic device is "try to search for a video of Zhang San walking on a riverside the day before yesterday"; on the 2nd day, recommendation information displayed in the search box in the gallery of the electronic device is "try to search for a picture on a seaside in August last year"... Within the preset duration (for example, within one week), a different first picture/video is selected by the electronic device every day. Correspondingly, different recommendation information is displayed in the search box in the gallery of the electronic device every day.

Based on the scenario example shown in FIG. 3a(1) and FIG. 3a(2), still using that the electronic device is the mobile phone 300 as an example, assuming that the user shoots a plurality of videos by using the mobile phone 300 during a tour on weekend, and stores the videos into the gallery of the mobile phone 300, the mobile phone may generate recommendation information in the search box based on recommended content corresponding to the videos.

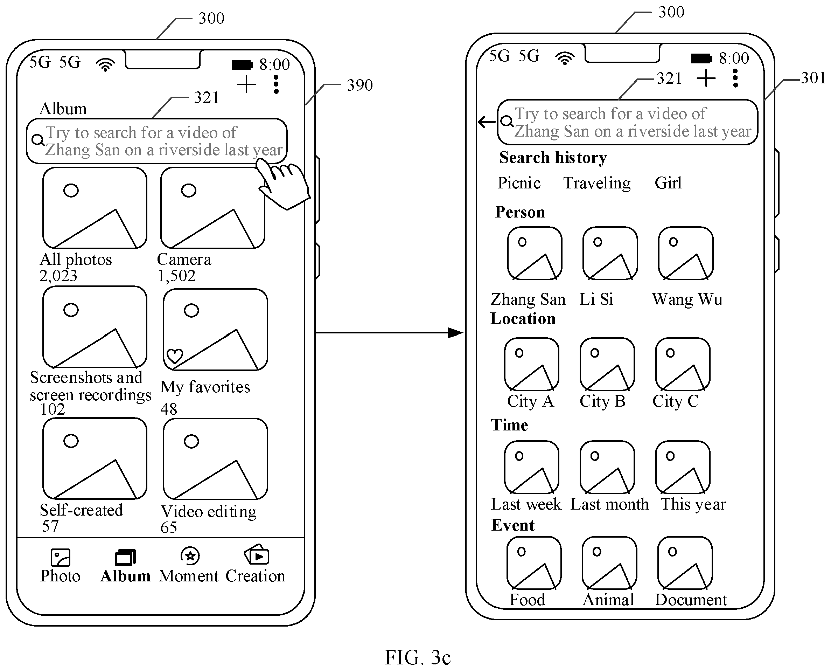

As shown in FIG. 3c, the mobile phone 300 displays an album display interface 390. The album display interface 390 includes the search box 321. In an example, recommendation information "try to search for a video of Zhang San on a riverside last year" is displayed in the search box 321. The recommendation information is used as an example of a search text to be entered by the user. The user may enter the search text in the search box based on content and a format of the recommendation information for searching.

With reference to FIG. 3c, after the user taps and triggers the search box 321, the mobile phone 300 displays a search interface 301. The search interface 301 includes the search box 321, and the user may enter a text in the search box 321. When detecting an operation of entering a text in the search box 321 by the user, the mobile phone 300 may search the gallery based on the search text in the search box 321.

For example, the recommendation information "try to search for a video of Zhang San on a riverside last year" is displayed in the search box 321. "Zhang San on a riverside last year" is a sentence having a natural semantic meaning, and a video that the user really needs to search for is found based on the sentence easier than a single tag "last year", "riverside", "Zhang San", or the like. For example, in the gallery, there are 7230 pictures/videos corresponding to the tag "last year", 1985 pictures/videos corresponding to the tag "riverside", and 1985 pictures/videos corresponding to the tag "Zhang San". A quantity of pictures/videos found by using a single tag is large, while a quantity of pictures/videos found in the gallery based on "Zhang San on a riverside last year" is obviously smaller. In this way, displaying a phrase having a natural semantic meaning as recommendation information helps to provide convenient and quick search experience for the user.

For another example, the visual media search method provided in embodiments of this application may be implemented in a global search scenario of an electronic device.

With reference to FIG. 4a(1) and FIG. 4a(2), the visual media search method provided in embodiments of this application is illustrated below by still using the example that the electronic device is the mobile phone 300. In this scenario, the gallery of the mobile phone 300 may include a plurality of pictures and a plurality of videos. For sources of the pictures/videos, refer to the foregoing example. Details are not described herein again.

With reference to FIG. 4a(1) and FIG. 4a(2), based on the scenario example shown in FIG. 3a(1) and FIG. 3a(2), it is still assumed that the user shoots a plurality of videos by using the mobile phone 300 during a tour on weekend, and stores the videos into the gallery of the mobile phone 300. As shown in FIG. 4a(1), the mobile phone 300 displays a home screen 410, the user may perform a rightward sliding operation on the home screen 410, and the mobile phone 300 may display a leftmost screen interface 420. The leftmost screen interface 420 can provide a global search function, to provide abundant online search services and a search service for local resources (that is, local files stored in the mobile phone 300) of the mobile phone for the user.

The leftmost screen interface 420 includes a search box 421. The user may enter a search text "boy standing outdoors" in the search box 421. The mobile phone 300 may perform an online search based on the search text entered by the user, and perform a local resource search in the local files included in the mobile phone 300. After the searches are completed, the mobile phone 300 displays a second search result display interface 430. The second search result display interface 430 may display a second search result corresponding to the entered "boy standing outdoors".

As shown in FIG. 4a(2), the second search result display interface 430 may include a first display area 431, a second display area 432, and a third display area 433. In some embodiments, the first display area 431 includes a second search result of the online search, the second display area 432 includes a second search result of searching in applications, and the third display area 433 includes a second search result about a local file.

In some embodiments, the second search result of searching in the applications includes a second search result of searching in the gallery application. For example, content displayed in the second display area 432 is content displayed in some areas of the first search result display interface 330 shown in FIG. 3a(2). The second search result included in the second display area 432 is pictures and videos stored in the gallery. For a thumbnail and a time point that are presented in the video, refer to the foregoing example. Details are not described herein again.

It should be noted that the foregoing content displayed in the second display area 432 is merely an example, and content displayed in another area of the first search result display interface 330 in FIG. 3a(2) may alternatively be displayed.

It should be noted that the foregoing manner of displaying the search box 421 in the leftmost screen interface 420 for the user to enter a search text to perform a global search is merely an example. In some embodiments, the user may alternatively perform a drop-down operation on the home screen of the mobile phone 300. The mobile phone 300 displays a main menu interface. The main menu interface includes a search box, where the global search function can also be provided, and a displayed search result is also the same as the second search result.

For still another example, the visual media search method provided in embodiments of this application may be implemented in a search scenario of a video playback application of an electronic device.

In this scenario, the visual media search method is implemented through interaction between the electronic device and a cloud server.

The example that the electronic device is the mobile phone 300 is still used. In this scenario, the mobile phone 300 includes a video playback application.

As shown in FIG. 4b(1), the mobile phone 300 displays a home screen 440. The home screen 440 includes application icons of a plurality of applications such as an application icon 441 of the video playback application. The user triggers the application icon 441 of the video playback application. The mobile phone 300 displays a first interface 450 of the video playback application. The first interface 450 includes a search box 451 and a search control 452. The user may enter a search text "documentary about a city B" in the search box 451, and trigger the search control 452. In response to the trigger operation performed by the user on the search control 452, the mobile phone 300 may search a plurality of videos in the cloud server based on the search text entered by the user. After the search is completed, the mobile phone 300 displays a third search result display interface 460 of the video playback application. The search result display interface includes a plurality of third search results. The third search result is a video. For a thumbnail and a time point that are presented in the video, refer to the foregoing example. Details are not described herein again.

In some embodiments, the third search result display interface 460 may further display a release time of the third search result, that is, time at which the third search result is stored in the cloud server. As shown in FIG. 4b(2), for example, for a "video C" is included in the third search result display interface 460, the third search result display interface 460 further displays a release time "2018-05-03" of the "video C", indicating that the "video C" is stored in the cloud server on May 3, 2018. For example, the user may upload the "video C" to the video playback application on May 3, 2018, so that the cloud server stores the "video C".

In some embodiments, as shown in FIG. 4b(2), the third search result display interface 460 includes the "video C", and the 1$^{st}$ time point of the "video C" is "05:48". If the "video C" is a video needed by the user, the user may trigger the "video C", and the mobile phone 300 may interact with the cloud server, to start playing from "05:48" of the "video B".

Then, an application scenario 2 of searching based on a person relationship is described.

In addition, if a plurality of video segments in a video are hit, one segment may be selected from the plurality of hit video segments, and information about the video segment is presented on a video cover in the foregoing manner. In an embodiment, the plurality of hit video segments may be sorted based on matching degrees with a search text, and information about a hit video segment having a highest matching degree with the search text is presented on the video cover in the foregoing manner.

In the method provided in embodiments, a search result may be presented in a plurality of manners. This is not limited in embodiments of this application.

An effect interface of the method provided in this embodiment of this application is described below by using an example that the search text includes a person relationship.

For example, FIG. 4c(1), FIG. 4c(2), FIG. 4c(3), and FIG. 4c(4) are diagrams of interface changing of another visual media search method example according to an embodiment of this application. As shown in FIG. 4c(1), the user enters a search text "traveling with family last year" in the search box 103 in the album interface 102 of the mobile phone. The "family" belongs to person relationship information. In response to the operation of the user, the mobile phone searches the gallery database for an image and a video matching the "traveling with family last year", and displays a search result in a search result interface 601, as shown in FIG. 4c(2). It can be learned that in this embodiment of this application, when the search text includes a person relationship, an image and/or a video meeting the person relationship can also be found, to meet a user expectation, thereby improving user experience.

In this embodiment, a display manner for the image and the video in the search result may be the same as that in the embodiment shown in FIG. 3a(2), and details are not described again.

As shown in FIG. 4c(2), for example, the search result includes a video 602. The user may tap the video 602. In response to the operation of the user, the mobile phone jumps to a video playback interface 603, as shown in FIG. 4c(3). The video playback interface 603 includes a playback control 604. The user taps the playback control 604. In response to the operation of the user, the mobile phone starts to play the video 602, as shown in FIG. 4c(4).

In an embodiment, the mobile phone may start to play the video from start time of a hit video segment. As shown in FIG. 4c(4), the video 602 starts to be played from the 26th second of the 2nd minute (02:26).

In another embodiment, the video may alternatively start to be played from playback time corresponding to a representative frame of the hit video segment.

In still another embodiment, the video may alternatively start to be played from start time (00:00) of the video 602.

In still another embodiment, when the video 602 includes a plurality of hit video segments, the hit video segments may be sequentially played in a chronological order of the video segments in the video 602, or the hit video segments may be sequentially played based on matching degrees with the search text. This is not limited in this embodiment of this application.

It may be understood that in FIG. 4c(1), FIG. 4c(2), FIG. 4c(3), and FIG. 4c(4), an effect of the visual media search method is described by using an example that the search text includes the person relationship information "family". It may be understood that the search text may alternatively include another person relationship, such as a "colleague", a "friend", a "classmate", a "son", a "daughter", or a "confidante".

Subsequently, an application scenario 3 of search result sorting is described.

For example, FIG. 4d is a diagram of interface changing of a visual media search method example according to an embodiment of this application. As shown in (a) in FIG. 4d, the album interface 102 of the gallery APP is displayed on a screen of the mobile phone. The album interface 102 includes the search box 103. The user enters a search text "boy standing outdoors" in the search box 103. In response to the operation of the user, the mobile phone searches the gallery database for an image and a video matching the "boy standing outdoors", and displays a search result, as shown in a search result interface 501 in (b) in FIG. 4d.

In an embodiment, when the search result is presented, the video and the image in the search result may be further sorted based on matching degrees with the search text. Optionally, a sorting rule may be as follows: A higher matching degree with the search text indicates a higher ranking during presentation. The matching degree between the image or the video and the search text may be represented by using a matching score. A higher matching score indicates a higher matching degree. For example, in (b) in FIG. 4d, the search result sequentially includes, from left to right and from top to bottom, a video 5051, an image 5052, a video 5053, an image 5054, an image 5055, an image 5056, an image 5057, and an image 5058. Matching scores of these videos or images sequentially decrease.

The matching degree between the video and the search text may be represented by using a hit video segment having a highest matching score in the video. For example, in (b) in FIG. 4d, the video 5051 includes three hit video segments. If a matching score of the 1st hit video segment is the highest, the matching score is used as a score of the video 5051 for comparison sorting with scores of other videos or images.

In addition, it may be understood that, when the user taps a "more" control 506, the electronic device displays all search results in response to the operation of the user. All the search results may also be sorted and presented based on matching degrees with the search text. Details are not described herein again.

A display form of the video in the search result is described below.

In an embodiment, a cover of the video may display related information of the video. For example, as shown in (b) in FIG. 4d, a cover of the video 5051 may display total duration of the video of 8 minutes and 32 seconds (08:32). A cover of the video 5053 may display total duration of the video of 14 minutes and 18 seconds (14:18).

In an embodiment, the cover of the video in the search result may further display start playback time (start time for short), end playback time (end time for short), intermediate playback time (intermediate time for short), or the like of a hit video segment. For example, when the video includes three hit video segments, the cover of the video may display start time of the 1st hit video segment.

In another embodiment, the video cover may alternatively display start time, end time, or intermediate time of a hit video segment having a highest matching score. As shown in (b) in FIG. 4d, for example, the hit video segment having the highest score in the video 5051 has start time of the 18th second of the 2nd minute (02:18), and end time of the 18th second of the 3rd minute (03:18). The cover of the video 5051 may display the start time of the 18th second of the 2nd minute (02:18), the end time of the 18th second of the 3rd minute (03:18), or an intermediate time of the 48th second of the 2nd minute (02:48).

In still another embodiment, after the video is divided into video segments, one frame of image may be selected from each video segment as a representative frame, and the cover of the video may alternatively display playback time corresponding to a representative frame of a hit video segment. For example, the playback time corresponding to the representative frame of the hit video segment is the $0^{th}$ second of the $2^{nd}$ minute (02:00), and the cover of the video may display the time.

In an embodiment, the cover of the video may be a thumbnail of any frame of image in the video, for example, the $1^{st}$ frame of image of the video, the $1^{st}$ frame of image of the hit video segment having the highest matching score, an intermediate frame of the hit video segment having the highest matching score, or the representative frame of the hit video segment having the highest matching score. For example, as shown in (b) in FIG. 4d, the cover of the video 5051 is the $1^{st}$ frame of image of the hit video segment having the highest matching score.

The foregoing embodiments are all described by using an example that the cover of the video in the search result displays information about one hit video segment. In some other embodiments, the cover of the video in the search result may alternatively display information about a plurality of hit video segments.

For example, FIG. 4e is a diagram of a search result interface example according to an embodiment of this application. As shown in FIG. 4e, the video cover may display a total quantity of hit video segments and a total quantity of video segments included in the video, so that the user clearly learns of the quantity of hit video segments in the video. For example, the video 5051 is divided into five video segments in total, and three of the video segments match the search phrase "boy standing outdoors". In other words, three hit video segments are included. In this case, the cover of the video 5051 may display information such as "3 segments hit/5 segments in total". The same is true of the video 5053, and details are not described again.

In another embodiment, the video cover may alternatively display one or more pieces of information such as start time, end time, intermediate time, or playback time corresponding to representative frames of the plurality of hit video segments, so that the user clearly learns of positions of the hit video segments in the video. For example, the start time of the plurality of hit video segments may be displayed, or the playback time corresponding to the representative frames of the plurality of hit video segments may be displayed.

It is assumed that the three hit video segments of the video 5051 are respectively the $1^{st}$ video segment, the $3^{rd}$ video segment, and the $5^{th}$ video segment. The $1^{st}$ video segment has start time of the $0^{th}$ second of the $2^{nd}$ minute (02:18), and end time of the $18^{th}$ second of the $3^{rd}$ minute (03:18), and playback time corresponding to a representative frame is the $10^{th}$ second of the $2^{nd}$ minute (02:10). The $3^{nd}$ video segment has start time of the $22^{nd}$ second of the $5^{th}$ minute (05:22), and end time of the $40^{th}$ second of the $6^{th}$ minute (06:40), and playback time corresponding to a representative frame is the $45^{th}$ second of the $5^{th}$ minute (05:40). The $5^{rd}$ video segment has start time of the $0^{th}$ second of the $8^{th}$ minute (08:00), and end time of the $32^{nd}$ second of the $8^{th}$ minute (08:32), and playback time corresponding to a representative frame is the $12^{th}$ second of the $8^{th}$ minute (08:12).

For example, FIG. 4f is a diagram of another search result interface example according to an embodiment of this application. Optionally, with reference to FIG. 4f, the cover of the video 5051 may display information such as "hit 02:18-03:18", "hit 05:22-06:40", and "hit 08:00-08:32". The same is true of the video 5053, and details are not described again.

For example, FIG. 4g is a diagram of still another search result interface example according to an embodiment of this application. Optionally, with reference to FIG. 4g, the cover of the video 5051 may display information such as "hit 02:10", "hit 05:40", and "hit 08:12". The same is true of the video 5053, and details are not described again.

It may be understood that when there are a large quantity of hit video segments, the video cover may display information about N video segments having higher matching scores. N may be, for example, 3 or 2. In this way, user experience can be prevented from being affected by excessive information blocking the video cover.

In an embodiment, the cover of the video may alternatively display frames of images in a plurality of hit video segments. For example, representative frames of the N video segments having higher matching scores may be stitched into one image as the cover of the video, so that the user can intuitively see content in the hit video segments, thereby improving user experience. For example, FIG. 4h is a diagram of still another search result interface example according to an embodiment of this application. With reference to FIG. 4h, representative frames of the $1^{st}$ hit video segment, the $2^{nd}$ hit video segment, and the $3^{rd}$ hit video segment of the video 5051 may be used as the cover of the video 5051 after being stitched. The same is true of the video 5053, and details are not described again.

In conclusion, in the method provided in this embodiment of this application, a search result may be presented in a plurality of manners. This is not limited in this embodiment of this application.

A playback process of the video in the search result is described below.

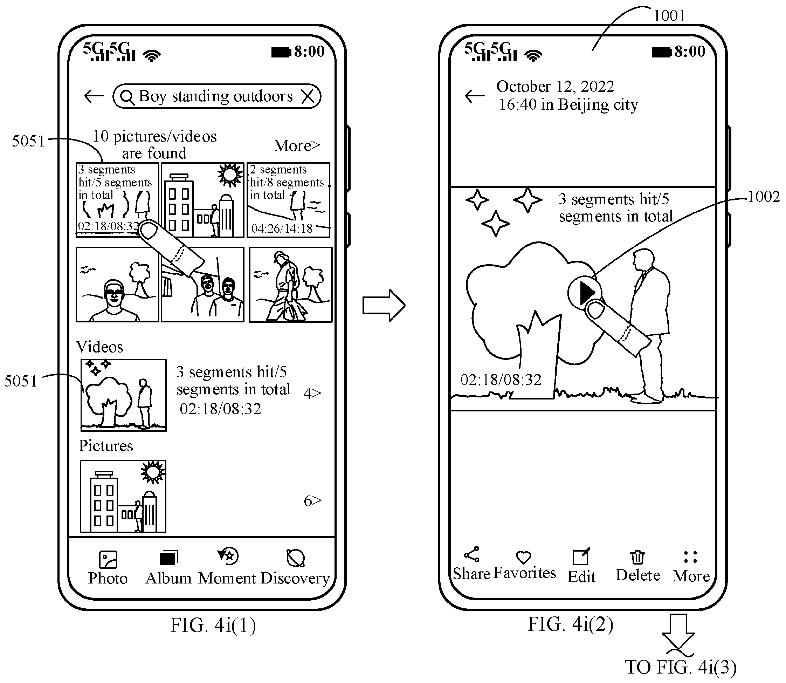

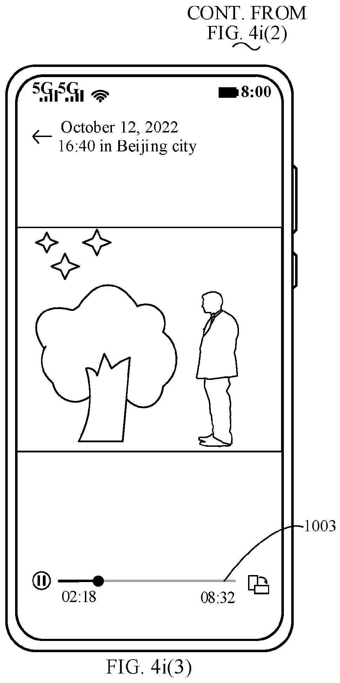

For example, FIG. 4i(1), FIG. 4i(2), and FIG. 4i(3) are diagrams of interfaces in a video playback process example according to an embodiment of this application. As shown in FIG. 4i(1), the user taps the video 5051 in the search result. In response to the operation of the user, a video playback interface 1001 is displayed. The video playback interface 1001 displays the video 5051 and a playback control 1002. The cover of the video 5051 may have the same cover display effect as that in the foregoing embodiment.

The user taps the playback control 1002. In response to the operation of the user, the mobile phone starts to play the video 5051. Optionally, the mobile phone may play the hit video segments at a time in a chronological order of playback time periods, that is, first play the 1$^{st}$ hit video segment (02: 18-03: 18), then play the 2$^{nd}$ hit video segment (05: 22-06: 40), and then play the 3$^{rd}$ hit video segment (08: 00-08: 32). After the playing of the three hit video segments is completed, the mobile phone stops playing. For example, the image displayed on the video cover is the 1$^{st}$ frame of image of the first hit video segment. After the user taps the playback control 1002, a playback interface of the video 5051 may be displayed, as shown in FIG. 4i(2). It can be learned that after the video starts to be played, a playback progress bar 1003 may be displayed in the interface. Currently, the video starts to be played from the 1$^{st}$ hit video segment. Therefore, playback time displayed in the playback progress bar 1003 is 02:18.

Optionally, the mobile phone may alternatively play the video in descending order of matching scores of the hit video segments. For example, assuming that a matching score of the 2$^{nd}$ hit video segment > a score of the 1$^{st}$ hit video segment > a score of the 3$^{rd}$ hit video segment, the 2$^{nd}$ hit video segment, the 1$^{st}$ hit video segment, and the 3$^{rd}$ hit video segment are sequentially played. After the playing of the three hit video segments is completed, the mobile phone stops playing.

In addition, it may be understood that when each hit video segment is played, the hit video segment may start to be played from the 1$^{st}$ frame of the hit video segment, or may start to be played from an intermediate frame of the hit video segment, or may start to be played from a representative frame of the hit video segment. The representative frame can most represent content of the video segment. Therefore, when the hit video segment starts to be played from the representative frame, the user can most directly see an image related to the search text in the video segment, thereby improving user experience.

For example, FIG. 4j is a diagram of interfaces in another video playback process example according to an embodiment of this application. In some embodiments, when the video is played, information about the hit video segments may be displayed in the playback progress bar 1003. For example, positions of the hit video segments in the video are displayed in the playback progress bar 1003. As shown in (a) in FIG. 4j, the hit video segments are shown in black strips. Optionally, corresponding texts may be further displayed above the playback progress bar 1003, to show the hit video segments. For example, digits "1", "2", and "3" are displayed to indicate the three hit video segments. Alternatively, a "matching degree ranking 1", a "matching degree ranking 2", a "matching degree ranking 3", and the like are displayed based on the matching scores, to show rankings of the matching degrees between the search text and the video segments.

In another embodiment, the matching scores of the hit video segments may alternatively be distinguished in different colors. For example, a hit video segment having a highest matching score is marked as red in the progress bar, a hit video segment having a second highest matching score is marked as pink in the progress bar, and a hit video segment having a lower matching score is marked as green in the progress bar, as shown in (b) in FIG. 4j. It should be noted that in (b) in FIG. 4j, different colors are indicated by using different fill patterns, which is merely used as an example, and does not represent an actual display effect.

For example, FIG. 4k is a diagram of interfaces in still another video playback process example according to an embodiment of this application. Optionally, mark information, such as video tags, may be further set at the hit video segments. As shown in (a) in FIG. 4k, the video tags are shown as black inverted triangles. The user taps a tag, and the video directly jumps to a corresponding hit video segment to start playing. As shown in (a) in FIG. 4k, when the video is played to 02:25, as the user taps a video tag of the 2$^{nd}$ hit video segment (05:22-06:40) having the highest matching score, the hit video segment starts to be played, as shown in (b) in FIG. 4k.

In this implementation, information such as a hit video segment and/or a matching degree ranking of the hit video segment is displayed in the playback progress bar of the video, so that the user intuitively learns of a position of content related to the search text in the video, thereby improving user experience. In addition, a video tag is inserted into the video at the hit video segment, so that the user can directly jump to the corresponding hit video segment by tapping the video tag, without dragging the playback progress bar to find related content, thereby facilitating user operations and further improving user experience.

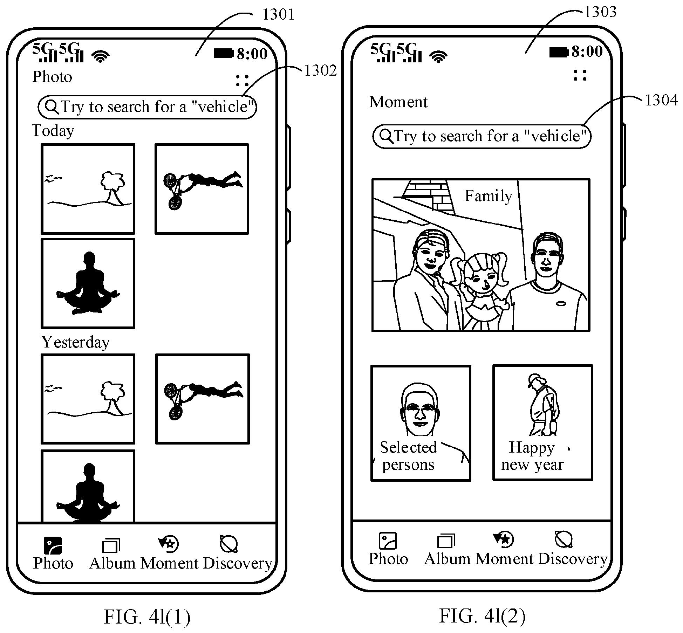

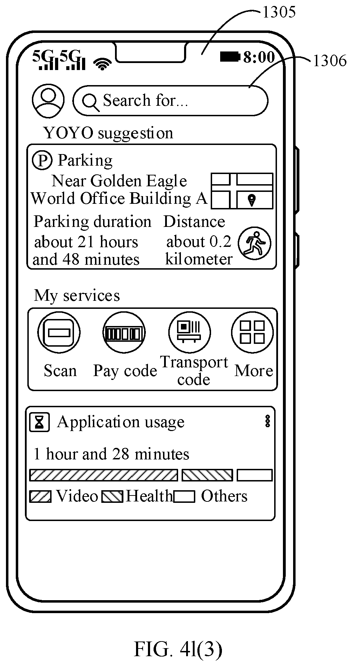

The foregoing embodiments are described by using searching in the album interface 102 in the gallery as an example. During actual application, searching may also be implemented in another interface of the gallery APP, or in another application or service interface. For example, with reference to FIG. 4l(1), content may be entered in a search box 1302 in a photo interface 1301 of the gallery, to implement a search. For another example, with reference to FIG. 4l(2), content may be entered in a search box 1304 in a moment interface 1303 of the gallery, to implement a search. For still another example, with reference to FIG. 4l(3), content may alternatively be entered in a global search box 1306 in a leftmost screen interface 1305 of the mobile phone, to implement a search. A search interface and a search entry are not limited in embodiments of this application.

Subsequently, an application scenario 4 of automatic searching is described.

An embodiment of this application provides a visual media search method, to support a user in entering a sentence having a natural semantic meaning and search a gallery for an image resource based on the sentence having the natural semantic meaning. An electronic device presents recommendation information to the user in a search box of the gallery. The recommendation information is used as an example of content to be entered by the user, to prompt the user of content and a format of text information to be entered in the search box.

The mobile phone 100 is still used as an example. For example, as shown in FIG. 4A, the mobile phone 100 displays a photo display interface 401, and the photo display interface 401 includes a search box 402 and a photo presentation page 403. The search box 402 is configured to trigger an image resource search interface to be displayed. The photo presentation page 403 is configured to present a thumbnail of an image resource (a picture or a video) in the gallery. In an implementation, as shown in FIG. 4A, image resource thumbnails on the photo presentation page 403 are arranged in a reverse chronological order of time of image resources.

In an example, recommendation information "try to search for a photo of walking on a seaside in August last year" is displayed in the search box 402. The recommendation information is used as an example of content to be entered by the user. The user may enter text information in the search box based on content and a format of the recommendation information for searching.

For example, as shown in FIG. 4A, in response to a tap operation performed by the user on the search box 402, the mobile phone 100 displays a search interface 201. The search interface 201 includes a search box 202. The user may enter text information in the search box 202. When detecting an operation of entering text information in the search box 202 by the user, the mobile phone 100 may search the gallery based on the text information in the search box 202. For example, the recommendation information "try to search for a photo of walking on a seaside in August last year" is displayed in the search box 202.

The "walking on a seaside in August last year" is a sentence having a natural semantic meaning, and an image resource that the user really needs to search for is hit based on the sentence easier than a single tag "seaside", "having dinner", or the like. For example, in the gallery, there are 7230 image resources corresponding to the tag "last year", 2651 image resources corresponding to the tag "August", and 1985 image resources corresponding to the tag "seaside". A quantity of image resources found by using a single tag is large, while a quantity of image resources found in the gallery based on the "walking on a seaside in August last year" is obviously smaller.

For example, as shown in FIG. 4B, the user enters the text "walking on a seaside in August last year" in the search box 202, and then taps the search box 202. The mobile phone 100 receives the text "walking on a seaside in August last year" entered by the user in the search box 202, and searches the gallery for an image resource consistent with the semantic meaning of the "walking on a seaside in August last year". As shown in FIG. 4B, the mobile phone 100 displays a search result interface 501. The search result interface 501 is configured to display an image resource found in the gallery based on the text information in the search box 202. For example, a total of 54 image resources consistent with the semantic meaning of the "walking on a seaside in August last year" are found in the gallery.

In the visual media search method provided in this embodiment of this application, recommendation information displayed in the search box of the gallery is a sentence having a natural semantic meaning. The user may enter text information in the search box based on content and a format of the recommendation information, and use a sentence having a natural semantic meaning as entered content of the search box. The mobile phone searches the gallery for an image resource based on the text information having the natural semantic meaning, so that a picture and a video that the user needs to search for can be more accurately hit.

In an implementation, the mobile phone may obtain a constituent element of the image resource. In an example, the constituent element includes at least one of time, a location, a person, a subject type, and an event.

The constituent element "time" may be obtained based on shooting time of the image resource. For example, the constituent element "time" includes "Thursday, November 9, 2023", "Friday, July 2, 2021", or the like.

The constituent element "location" may be obtained based on a shooting location of the image resource, for example, obtained based on GPS positioning information obtained when the image resource is shot. For example, the constituent element "location" may include a city name (for example, Beijing city) and/or a scenic spot name (for example, the Great Wall).

The constituent elements "person", "subject type", and "event" may be obtained by performing semantic analysis on the image resource. For example, the mobile phone may perform semantic analysis on an image in the picture or the video by using a semantic analysis algorithm, and generate content of the "person", the "subject type", and the "event" based on a semantic meaning of the image resource.

For example, the constituent element "person" may include:
a person name (such as Xiaohua, Xiaoming, Zhang San, or Li Si), an acrobat, an orchestra, a youth, a child, a baby, or the like.

For example, the constituent element "subject type" may include:
a musical instrument, calligraphy, a painting, an animal, a plant, a person, scenery, a beach, outdoors, a building, a birthday, or the like.

For example, the constituent element "event" may include:
a game, singing, dancing, a sport, a barbecue, walking, traveling, or the like.

It may be understood that, a constituent element corresponding to an image resource may include one or more of the time, the location, the person, the subject type, and the event. For example, for a picture downloaded from a network, the mobile phone does not obtain shooting time of the picture, and a constituent element of the picture does not include the "time", or content of the "time" is null. For example, for a scenery picture, no content of the "person" is obtained through semantic analysis, and a constituent element of the scenery picture does not include the "person", or content of the "person" is null.

In an implementation, constituent elements of the image resource may be concatenated according to a preset rule to generate at least one piece of combined information.

In an example, the mobile phone concatenates four constituent elements "time", "location", "person", and "event" of the image resource, to generate one piece of combined information.

In an example, the mobile phone concatenates three constituent elements of the image resource, to generate one piece of combined information. For example, the "location", the "person", and the "event" are concatenated; the "time", the "location", and the "person" are concatenated; the "time", the "location", and the "event" are concatenated; the "time", the "person", and the "event" are concatenated; or the "time", the "location", and the "subject type" are concatenated.

In an example, the mobile phone concatenates two constituent elements of the image resource, to generate one piece of combined information. For example, the "person" and the "event" are concatenated; the "location" and the "event" are concatenated; the "time" and the "event" are concatenated; the "location" and the "person" are concatenated; the "time" and the "person" are concatenated; the "location" and the "subject type" are concatenated; or the "time" and the "location" are concatenated.

In an example, the mobile phone may alternatively generate one piece of combined information based on one constituent element of the image resource. For example, the constituent element is the "time".

In an implementation, a fixed concatenating word may be concatenated with a piece of combined information to generate recommended content corresponding to the image resource. The fixed concatenating word includes "try to search for", "in/on/at", "shot", "photo (of)", or the like.

Table 2 shows some examples of recommended content generated based on different quantities of constituent elements. It should be noted that when the recommended content is generated, corresponding mapping may be performed on content of a constituent element. For example, specific time "Monday, August 7, 2023" is mapped to "today", "the day before yesterday", "August", "last month", "last year", "this year", or the like.

**Table 2**

| Sequence number | Constituent element | Recommended content |
|---|---|---|
| 1 | "person", "time", "location", and "event" | try to search for + photo of + "Xiaohua" + "traveling" + at + "the Great Wild Goose Pagoda" + "the day before yesterday" |
| 2 | "location", "person", and "event" | try to search for + photo of + "Xiaohua" + "traveling" + at + "the Great Wild Goose Pagoda" |
| 3 | "time", "person", and "event" | try to search for + photo of + "Xiaohua" + "traveling" + "the day before yesterday" |
| 4 | "time", "location", and "event" | try to search for + photo of + "traveling" + at + "the Great Wild Goose Pagoda" + "the day before yesterday" |
| 5 | "time", "location", and "person" | try to search for + photo of + "Xiaohua" + at + "the Great Wild Goose Pagoda" + "the day before yesterday" |
| 6 | "time", "location", and "subject type" | try to search for + photo of + "scenery" + shot + at + "the Great Wild Goose Pagoda" + "the day before yesterday" |
| 7 | "person" and "event" | try to search for + photo of + "Xiaohua" + "traveling" |
| 8 | "location" and "event" | try to search for + photo of + "traveling" + at + "the Great Wild Goose Pagoda" |
| 9 | "time" and "event" | try to search for + photo of + "traveling" + "the day before yesterday" |
| 10 | "location" and "person" | try to search for + photo of + "Xiaohua" + at + "the Great Wild Goose Pagoda" |
| 11 | "time" and "person" | try to search for + photo of + "Xiaohua" + "the day before yesterday" |
| 12 | "location", and "subject type" | try to search for + photo of + "animal" + shot + "zoo" |

(continued)

| Sequence number | Constituent element | Recommended content |
|---|---|---|
| 13 | "time" and "location" | try to search for + photo + at + "the Great Wild Goose Pagoda" + "today" |
| 14 | "time" | try to search for + photo shot + "today" |

A plurality of pieces of concatenated content may be generated by using constituent elements of one image resource in concatenation manners shown in Table 2. For example, if the constituent elements of the image resource include the "person", the "time", the "location", and the "event", 14 different pieces of concatenated content may be respectively generated in concatenation manners of sequence numbers 1 to 14 in Table 2. If the constituent elements of the image resource include the "location", the "person", and the "event", four different pieces of concatenated content may be respectively generated in concatenation manners of sequence numbers 2, 7, 8, and 10 in Table 2.

In an implementation, the mobile phone determines any one of the plurality of pieces of concatenated content as recommended content corresponding to the image resource.

In another implementation, the concatenation manners each correspond to a priority, and priorities of the concatenation manners sequentially descend in an order from top to bottom in Table 2. The mobile phone generates the recommended content corresponding to the image resource in a concatenation manner with a highest priority in the concatenation manners supported by the image resource. For example, if constituent elements of an image resource include the "location", the "person", and the "event", but does not include the "time", a fixed concatenating word is concatenated with the "location", the "person", and the "event" in the concatenation manner of the sequence number 2 in Table 2, to generate recommended content corresponding to the image resource.

In the visual media search method provided in this embodiment of this application, recommendation information in the search box is generated based on recommended content corresponding to an image resource in the gallery. For example, recommended content corresponding to an image resource is try to search for + photo of + "Xiaohua" + "traveling" + at + "the Great Wild Goose Pagoda" + "the day before yesterday", and recommendation information generated based on the recommended content is try to search for a photo of Xiaohua travelling at the Great Wild Goose Pagoda the day before yesterday.

In an implementation, the mobile phone selects recommended content corresponding to a first image resource in the gallery to generate the recommendation information in the search box. In an example, the first image resource is an image resource within a preset time period. For example, the preset time period is time more than one month from today. In an example, the mobile phone updates the first image resource once every day, and first image resources selected within preset duration (for example, within one week) are different.

For example, on the 1st day, recommendation information displayed in the search box in the gallery of the mobile phone is "try to search for a photo of Xiaohua travelling at the Great Wild Goose Pagoda the day before yesterday"; on the 2nd day, recommendation information displayed in the search box in the gallery of the mobile phone is "try to search for a photo of walking on a seaside in August last year"; on the 3rd day, recommendation information displayed in the search box in the gallery of the mobile phone is "try to search for a photo of an animal shot in a zoo... Within the preset duration (for example, within one week), a different first image resource is selected by the mobile phone every day. Correspondingly, different recommendation information is displayed in the search box in the gallery of the mobile phone every day.

It should be noted that, the visual media search method provided in this embodiment of this application is applicable to a search box in any user interface in the gallery. FIG. 4A shows an example that the photo display interface 401 includes the search box 402 for description, and does not constitute a limitation on application scenarios of this embodiment of this application. For example, as shown in FIG. 4C(1), the mobile phone 100 displays a home screen interface. The home screen interface includes the application icon 101 of the gallery. In response to a tap operation performed by the user on the application icon 101, the mobile phone 100 displays the album display interface 102 of the gallery. The album display interface 102 includes the search box 103. The recommendation information "try to search for a photo of walking on a seaside in August last year" is displayed in the search box 103. The recommendation information is used as an example of text information to be entered by the user. The user may enter text information in the search box based on content and a format of the recommendation information for searching. For example, in response to a tap operation performed by the user on the search box 103, the mobile phone 100 displays the search interface 201. The search interface 201 includes the search box 202, and the recommendation information "try to search for a photo of walking on a seaside in August last year" is displayed in the search box 202.

With reference to FIG. 4B, the user enters the text "walking on a seaside in August last year" in the search box 202, and then taps the search box 202. The mobile phone 100 receives the text "walking on a seaside in August last year" entered by the user in the search box 202, and searches the gallery for an image resource consistent with the semantic meaning of the "walking on a seaside in August last year". As shown in FIG. 4B, the mobile phone 100 displays a search result interface 501. The search result interface 501 is configured to display an image resource found in the gallery based on the text information in the search box 202. For example, a total of 54 image resources consistent with the semantic meaning of the "walking on a seaside in August last year" are found in the gallery.

In some embodiments, the mobile phone performs, in advance, data analysis on image resources stored in the gallery, to obtain recommended content corresponding to each image resource in the gallery, and stores the recommended content corresponding to each image resource in the gallery. For example, when a processor is idle, the mobile phone performs data analysis on the image resources stored in the gallery, to generate the recommended content corresponding to each image resource in the gallery. For example, each time an image resource in the gallery is changed (for example, added, deleted, or edited), the mobile phone performs data analysis on the image resources stored in the gallery, to generate the recommended content corresponding to each image resource in the gallery. Before the mobile phone displays the search box (for example, in the scenario shown in FIG. 4C(1), after the mobile phone 100 receives the tap operation performed by the user on the application icon 101), the mobile phone selects a first image resource from the gallery based on a preset condition (for example, shooting time of the image resource is more than one month from today; or for example, recommended content is not repeated within one week), and then obtains recommended content corresponding to the first image resource from the recommended content stored in the mobile phone. The mobile phone generates first recommendation information based on the recommended content corresponding to the first image resource, and displays the first recommendation information in the search box.

In this implementation, the mobile phone generates, in advance in idle time, the recommended content corresponding to each image resource, and when recommendation information needs to be displayed, the mobile phone searches for recommended content corresponding to a selected image resource, to generate the recommendation information. When the recommendation information is generated, an image of the image resource does not need to be analyzed to obtain the recommended content, but the recommended content is directly read from the stored information, so that recommendation information generation is efficient, and a latency is small.

In some other embodiments, before the mobile phone displays the search box (for example, in the scenario shown in FIG. 4C(1), after the mobile phone 100 receives the tap operation performed by the user on the application icon 101), the mobile phone selects a first image resource from the gallery based on a preset condition (for example, shooting time of the image resource is more than one month from today; or for example, recommended content is not repeated within one week), and performs data analysis on the first image resource, to generate recommended content corresponding to the first image resource. The mobile phone generates first recommendation information based on the recommended content corresponding to the first image resource, and displays the first recommendation information in the search box.

In this implementation, when recommendation information needs to be displayed, an image resource is selected, semantic recognition is performed on the selected image resource to obtain recommended content and generate the recommendation information, so that there is no need to store a large amount of recommended content, thereby saving storage space.

In the visual media search method provided in this embodiment of this application, the electronic device presents the recommendation information to the user in the search box of the gallery. The recommendation information is a sentence generated based on the first image resource in the gallery and having a natural semantic meaning. The user may enter text information based on content and a format of the recommendation information for searching. For example, the user may perform searching by using the recommendation information as text information in the search box. Because the recommendation information is generated based on the first image resource in the gallery, the electronic device can find, in the gallery based on the text information, the first image resource and all image resources whose content is similar to that of the first image resource, thereby improving a hit rate of searching. In addition, because the recommendation information is a sentence having a natural semantic meaning, the recommendation information can express a search objective of the user more accurately, thereby narrowing a range of search results, and helping the user find a needed picture or video more conveniently.

In some scenarios, the user may not quickly find a search box for searching, but manually searches for a picture or a video. In this case, search efficiency is low. In a visual media search method provided in an embodiment of this application, a method for quickly entering a search interface is provided to guide a user to conveniently and quickly enter a search interface provided on an electronic device, so that the user can enter information in a search box of the search interface, to automatically search for an image resource.

An example that the electronic device displays a photo display interface is still used for description. As shown in FIG. 4D(1) and FIG. 4D(2), the mobile phone 100 displays a photo display interface 401, and the photo display interface 401 includes a search box 402 and a photo presentation page 403. The search box 402 is configured to trigger an image resource search interface to be displayed. The photo presentation page 403 is configured to present a thumbnail of an image resource (a picture or a video) in the gallery. The user may slide upward or downward on the photo presentation page 403. In an example, an upward sliding gesture of the user is received on the photo presentation page 403. In response to the upward sliding gesture of the user, the mobile phone 100 displays a photo display interface 404, and the search box is not displayed on the photo display interface 404. For example, the photo display interface 404 includes a photo presentation page 405. The photo presentation page 405 is configured to present a thumbnail of an image resource (a picture or a video) in the gallery. In an implementation, the user continuously performs an upward sliding gesture on the photo presentation page 405. In response to the upward sliding gesture of the user on the photo presentation page 405, the image resource thumbnail presented on the photo presentation page 405 correspondingly scrolls upward. For example, as shown in FIG. 4D(1) and FIG. 4D(2), image resource thumbnails on the photo presentation page 403 are arranged in a reverse chronological order of time of image resources. Image resources shot on November 9, 2023 and image resources shot on October 30, 2023 are displayed on the photo presentation page 403. In response to the upward sliding gesture of the user, image resources shot on October 30, 2023 and image resources shot on September 17, 2023 are displayed on the photo presentation page 405.

Still with reference to FIG. 4D(1) and FIG. 4D(2), in some embodiments, if it is detected that the upward sliding gesture on the photo presentation page 405 has not stopped, that is, when the user continuously performs the upward sliding gesture on the photo presentation page 405, the mobile phone 100 displays a prompt button 406, and prompt information "try the search function to find a photo" is displayed on the prompt button 406. The prompt information displayed on the prompt button 406 is used to prompt the user to tap the prompt button 406, to trigger the image resource search interface to be displayed. Optionally, the mobile phone 100 displays the prompt button 406 on the photo presentation page 405. It should be noted that in this embodiment of this application, continuously performing the upward sliding gesture means that the mobile phone detects a next upward sliding gesture within specific duration (for example, 0.5 second) after detecting that one upward sliding gesture ends. If no next upward sliding gesture is detected within the specific duration (for example, 0.5 second) after one upward sliding gesture ends, it is determined that the upward sliding gesture stops.

The user may tap the prompt button 406 to trigger the image resource search interface to be displayed. For example, as shown in FIG. 4D(2), in response to the tap operation performed by the user on the prompt button 406, the mobile phone 100 displays a search interface 201. The search interface 201 includes a search box 202, and the user may enter text information in the search box 202. When detecting an operation of entering text information in the search box 202 by the user, the mobile phone 100 may search the gallery for a corresponding image resource based on the text information in the search box 202.

In this way, when manually searching for a photo or a video, the user can conveniently enter the search interface by tapping the button according to the prompt information, and enter text information in the search box of the search interface, to trigger the mobile phone to automatically search the gallery for an image resource.

In an implementation, recommendation information is displayed in the search box of the search interface. The recommendation information is information that is generated by the mobile phone based on recommended content corresponding to a first image resource in the gallery and that has a natural semantic meaning. For example, as shown in FIG. 4D(2), recommendation information "try to search for a photo of walking on a seaside in August last year" is displayed in the search box 202. The mobile phone 100 receives a text "walking on a seaside in August last year" entered by the user in the search box 202, and searches the gallery for an image resource consistent with a semantic meaning of the "walking on a seaside in August last year".

With reference to FIG. 4E(1) and FIG. 4E(2), in some embodiments, the mobile phone 100 determines that the upward sliding gesture on the photo presentation page 405 stops. In an example, the mobile phone 100 detects no upward sliding gesture within the specific duration (for example, 0.5 second), and determines that the upward sliding gesture on the presentation page 405 stops. The image resource thumbnail presented on the photo presentation page 405 stops scrolling upward. As shown in FIG. 4E(1) and FIG. 4E(2), the mobile phone 100 displays a photo display interface 407, and the photo display interface 407 includes a search box 408 and a photo presentation page 409. The search box 408 is configured to trigger an image resource search interface to be displayed. The photo presentation page 409 is configured to present a thumbnail of an image resource (a picture or a video) in the gallery.

In an implementation, recommendation information is displayed in the search box 408. The recommendation information is information that is generated by the mobile phone based on recommended content corresponding to a first image resource in the gallery and that has a natural semantic meaning. For example, as shown in FIG. 4E(1), recommendation information "try to search for a photo of walking on a seaside in August last year" is displayed in the search box 408.

The user may tap the search box 408 to trigger the image resource search interface to be displayed. For example, as shown in FIG. 4E(2), in response to the tap operation performed by the user on the search box 408, the mobile phone 100 displays a search interface 201. The search interface 201 includes a search box 202, and the user may enter text information in the search box 202. When detecting an operation of entering text information in the search box 202 by the user, the mobile phone 100 may search the gallery for a corresponding image resource based on the text information in the search box 202.

In this way, after the user stops manually searching for a photo or a video, the mobile phone displays the search box, to prompt the user that text information may be entered to implement an automatic search. The user conveniently enters the search interface by tapping the search box, and enters text information in the search box of the search interface, to trigger the mobile phone to automatically search the gallery for an image resource.

In an implementation, recommendation information is displayed in the search box of the search interface. The recommendation information is information that is generated by the mobile phone based on recommended content corresponding to a first image resource in the gallery and that has a natural semantic meaning. For example, as shown in FIG. 4E(2), recommendation information "try to search for a photo of walking on a seaside in August last year" is displayed in the search box 202. The mobile phone 100 receives a text "walking on a seaside in August last year" entered by the user in the search box 202, and searches the gallery for an image resource consistent with a semantic meaning of the "walking on a seaside in August last year".

It should be noted that this embodiment of this application is described by using an example that the mobile phone detects an upward sliding gesture of the user in the photo display interface, and the example should not be construed as a limitation on applicable scenarios of this embodiment of this application. In some other embodiments, the applicable scenarios of this embodiment of this application further include: The mobile phone detects an upward sliding gesture on another page configured to display an image resource thumbnail to the user in the gallery, or detects a downward sliding gesture on another page configured to display an image resource thumbnail to the user. For specific implementations of these scenarios, refer to the implementations shown in FIG. 4D(1) and FIG. 4D(2), and FIG. 4E(1) and FIG. 4E(2) in which an upward sliding gesture is detected in the photo display interface. The implementations are similar, and are not shown one by one in this embodiment of this application.

In the visual media search method provided in this embodiment of this application, when the user slides upward or downward to search for a picture or a video, the mobile phone displays a prompt button and prompt information, to prompt the user to trigger the mobile phone to display a search interface, so that the mobile phone automatically searches for an image resource based on text information entered by the user in a search box. After the user ends sliding upward or downward to search for a picture or a video, the mobile phone displays a search box and recommendation information, to prompt the user to trigger the mobile phone to display a search interface, so that the mobile phone automatically searches for an image resource based on text information entered by the user in the search box. The mobile phone prompts the user in various manners to automatically search for an image resource by using the mobile phone more conveniently, making it more convenient for the user to search the gallery for an image resource.

The mobile phone receives, in a search box in a user interface of the gallery, text information entered by the user, and searches, based on the text information, for image resources corresponding to the text information. These image resources may include pictures and videos.

In an implementation, semantic understanding is performed, by using a text analysis algorithm, on the text information entered by the user, to obtain a constituent element corresponding to the text information, including at least one of time, a location, a person, a subject type, and an event.

For a picture, shooting time and a shooting location of the picture may be obtained based on picture information stored in the mobile phone. Semantic analysis may be further performed on an image in the picture by using a semantic analysis algorithm, and content of one or more of the person, the subject type, and the event included in the picture is obtained based on a semantic meaning of the picture. In this way, constituent elements of the picture can be obtained.

If it is determined that the constituent element included in the text information is the same as a constituent element included in a picture, it is determining that the picture is an image resource corresponding to the text information.

It may be understood that a video includes some image frames. In an implementation, if it is determined that a video includes N image frames corresponding to the text information, the video is determined as an image resource corresponding to the text information. N is a preset value, for example, N=1 or N=24.

The mobile phone determines, based on the text information, a picture and a video that correspond to the text information, and may present a search result to the user, for example, display thumbnails of the picture and the video in a user interface of the gallery.

For example, as shown in FIG. 4F, the mobile phone 100 displays a search interface 201, and the search interface 201 includes a search box 202. The user enters a text "walking on a seaside in August last year" in the search box 202, and then taps the search box 202. The mobile phone 100 receives the text "walking on a seaside in August last year" entered by the user in the search box 202, and searches the gallery for an image resource consistent with a semantic meaning of the "walking on a seaside in August last year". As shown in FIG. 4F, the mobile phone 100 displays a search result interface 501. The search result interface 501 is configured to display an image resource found in the gallery based on the text information in the search box 202. For example, a total of 54 image resources consistent with the semantic meaning of the "walking on a seaside in August last year" are found in the gallery. Optionally, in an example, the search result interface 501 includes a page 502, a page 503, and a page 504. The page 502 is configured to present a picture and a video that correspond to the text information entered by the user. The page 503 is configured to present the picture corresponding to the text information entered by the user. The page 504 is configured to present the video corresponding to the text information entered by the user.

In some embodiments, the video corresponding to the text information includes an image frame corresponding to the text information and an image frame not corresponding to the text information. For example, as shown in FIG. 4G, a video A is a video that is found by the mobile phone 100 and that corresponds to the "walking on a seaside in August last year". The video A includes many image frames. Image frames of the 0th second of the 0th minute to the 17th second of the 2nd minute do not correspond to the "walking on a seaside in August last year". For example, the image frames of the 0th second of the 0th minute to the 17th second of the 2nd minute are image frames corresponding to "playing volleyball on a seaside in August last year". Image frames of the 18th second of the 2nd minute to the 21st second of the 6th minute are image frames corresponding to the "walking on a seaside in August last year". Image frames of the 22nd second of the 6th minute to the 32nd second of the 8th minute do not correspond to the "walking on a seaside in August last year". For example, the image frames of the 22nd second of the 6th minute to the 32nd second of the 8th minute are image frames corresponding to "running on a seaside in August last year".

In an implementation, a video thumbnail image displayed in the search result interface by the mobile phone is a first image frame in the video. The first image frame is one of image frames corresponding to the text information.

In an example, the first image frame is any one of the image frames corresponding to the text information.

In another example, the first image frame is the 1st one of the image frames corresponding to the text information. In an implementation, the mobile phone performs determining frame by frame in a chronological order of the image frames in the video, and when finding the 1st image frame corresponding to the text information, the mobile phone determines the 1st image frame corresponding to the text information as the first image frame. Through frame by frame determining, the 1st image frame corresponding to the text information can be accurately determined.

In another example, each video is divided into one or more video segments based on a preset condition. For example, the preset condition is obtaining one video segment every 0.5 second through division based on playback duration, or obtaining one video segment every M (for example, M=12) frames through division. Each video segment includes a representative frame, which may be used to represent the video segment. For example, the representative frame is the 1st frame in the video segment, or the representative frame is the last frame in the video segment, or the representative frame is a frame with a highest pixel in the video segment, or the representative frame is an optimal frame in the video segment, or the representative frame is any frame in the video segment. If a representative frame of a video segment is an image frame corresponding to the text information, it is determined that the video segment is a video segment corresponding to the text information. In an implementation, the first image frame is a frame of image in the 1st video segment corresponding to the text information (for example, the frame of image is a representative frame in the video segment). For example, the 276th video segment to the 762nd video segment in the video A are video segments corresponding to the text information. A representative frame of the 276th video segment in the video A is a first image frame. For example, the representative frame of the 276th video segment may be the 1st frame of the 276th video segment, the last frame of the 276th video segment, a frame with a highest pixel in the 276th video segment, or the like.

For example, as shown in FIG. 4F, a thumbnail 5021 presented on the page 502 is a thumbnail of the video A corresponding to the "walking on a seaside in August last year", and an image of the thumbnail 5021 is the first image frame in the video A.

For example, as shown in FIG. 4F, a thumbnail 5041 presented on the page 504 is a thumbnail of the video A corresponding to the "walking on a seaside in August last year", and an image of the thumbnail 5041 is the first image frame in the video A.

In some embodiments, the mobile phone displays a position of the first image frame in the video in the search result interface. For example, the position of the first image frame in the video may be reflected by using playback time corresponding to the first image frame and total playback duration of the video. In this way, the user can conveniently find content that needs to be searched for, without manually searching for a needed image frame in the video.

For example, playback time of the first image frame is the 18th second of the 2nd minute, and total playback duration of the video A is 8 minutes and 32 seconds. As shown in FIG. 4F, "02:18/08:32" is overlaid and displayed on the image of the thumbnail 5021, indicating that the image of the thumbnail 5021 is a frame of image at the 18th second of the 2nd minute in a video having the total playback duration of 8 minutes and 32 seconds. "02:18/08:32" is displayed at a corresponding position (beside the thumbnail 5041) of the thumbnail 5041, indicating that the image of the thumbnail 5041 is a frame of image at the 18th second of the 2nd minute in a video having the total playback duration of 8 minutes and 32 seconds.

In the visual media search method provided in this embodiment of this application, the search result interface displays the position of the first image frame in the video, so that the user can conveniently find the position in the video and corresponding to the text information entered by the user. For example, in FIG. 4F, the text information entered by the user is the "walking on a seaside in August last year", the playback time of the first image frame corresponding to the "walking on a seaside in August last year" is the 18th second of the 2nd minute, the time point (the 18th second of the 2nd minute) is displayed on the thumbnail of the video A displayed in the search result interface, and the image of the thumbnail of the video A displayed in the search result interface is an image frame (the first image frame) corresponding to the 18th second of the 2nd minute. In another example, as shown in FIG. 4H, text information entered by the user in the input box 202 is "running on a seaside in August last year", and playback time of a first image frame corresponding to the "running on a seaside in August last year" is the 21st second of the 6th minute. In response to receiving the "running on a seaside in August last year" entered by the user, the mobile phone 100 displays a search result interface 505. The search result interface 505 is configured to display an image resource found in the gallery based on the text information in the search box 202. For example, a total of 68 image resources consistent with a semantic meaning of the "running on a seaside in August last year" are found in the gallery. Optionally, in an example, the search result interface 505 includes a page 506, a page 507, and a page 508. The page 506 is configured to present a picture and a video that correspond to the text information entered by the user. The page 507 is configured to present the picture corresponding to the text information entered by the user. The page 508 is configured to present the video corresponding to the text information entered by the user. A thumbnail 5061 presented on the page 506 is a thumbnail of the video A corresponding to the "running on a seaside in August last year", and an image of the thumbnail 5061 is the first image frame that is in the video A and that is determined based on the "running on a seaside in August last year". A thumbnail 5081 presented on the page 508 is a thumbnail of the video A corresponding to the "running on a seaside in August last year", and an image of the thumbnail 5081 is the first image frame that is in the video A and that is determined based on the "running on a seaside in August last year". For example, the playback time of the first image frame corresponding to the "running on a seaside in August last year" in the video A is the $21^{st}$ second of the $6^{th}$ minute, and the total playback duration of the video A is 8 minutes and 32 seconds. As shown in FIG. 4H, "06:21/08:32" is overlaid and displayed on the image of the thumbnail 5061, indicating that the image of the thumbnail 5061 is a frame of image at the $21^{st}$ second of the $6^{th}$ minute in a video having the total playback duration of 8 minutes and 32 seconds. "06:21/08:32" is displayed at a corresponding position (beside the thumbnail 5081) of the thumbnail 5081, indicating that the image of the thumbnail 5081 is a frame of image at the $21^{st}$ second of the $6^{th}$ minute in a video having the total playback duration of 8 minutes and 32 seconds.

In some embodiments, in response to a tap operation performed by the user on any video thumbnail in the search result interface, the mobile phone plays a video corresponding to the video thumbnail. In an implementation, the mobile phone starts to play the video corresponding to the video thumbnail from a position of an image frame (a first image frame) corresponding to an image of the video thumbnail.

For example, as shown in FIG. 4J, the mobile phone 100 displays a search result interface 501. The search result interface 501 is configured to display an image resource that is in the gallery and that corresponds to text information "walking on a seaside in August last year" entered by the user. The search result interface 501 includes a page 502, a page 503, and a page 504. The page 502 includes a thumbnail 5021 of a video A, and an image of the thumbnail 5021 is a first image frame in the video A. Playback time of the first image frame is the $18^{th}$ second of the $2^{nd}$ minute, and total playback duration of the video A is 8 minutes and 32 seconds.

In response to a tap operation performed by the user on the thumbnail 5021, the mobile phone 100 plays the video A, and displays a playback interface 601 of the video A. In an implementation, the mobile phone starts to play the video A from the first image frame. For example, as shown in FIG. 4J, in response to the tap operation performed by the user on the thumbnail 5021, the mobile phone 100 displays the playback interface 601 of the video A. The playback interface 601 includes a progress bar 602. For example, the $18^{th}$ second of the $2^{nd}$ minute is directly positioned in the progress bar 602, and the mobile phone 100 starts to play the video A from the $18^{th}$ second of the $2^{nd}$ minute.

In the method, the mobile phone starts to play the video from the image frame (the first image frame) corresponding to the text information entered by the user, so that content that the user needs to search for can be directly positioned, which is convenient and quick, and improves user experience.

In some embodiments, a video includes a plurality of video segments corresponding to text information entered by the user. For example, as shown in FIG. 4K, the video A includes two video segments corresponding to the text information "walking on a seaside in August last year". The $1^{st}$ video segment includes image frames of the $18^{th}$ second of the $2^{nd}$ minute to the $21^{st}$ second of the $6^{th}$ minute. The $2^{nd}$ video segment includes image frames of the $3^{rd}$ second of the $7^{th}$ minute to the $32^{nd}$ second of the $8^{th}$ minute.

Correspondingly, a start position of each video segment corresponding to the text information entered by the user is marked on the progress bar 602 in the playback interface 601. For example, as shown in FIG. 4K, the progress bar 602 includes a mark point 603 and a mark point 604. A position indicated by the mark point 603 is a start moment of the $1^{st}$ video segment corresponding to the "walking on a seaside in August last year" in the video A, and a position indicated by the mark point 604 is a start moment of the $2^{nd}$ video segment corresponding to "walking on a seaside in August last year" in the video A. In this way, the user can see, at a glance, start moments of both video segments that are in the video A and that correspond to the text information entered by the user.

In an implementation, the mobile phone starts to play the video A from the start moment of the $1^{st}$ video segment that is in the video A and that corresponds to the text information entered by the user. For example, as shown in FIG. 4K, the mobile phone 100 starts to play the video A from the position indicated by the mark point 603.

In an implementation, the mobile phone receives a tap operation performed by the user on either one of the mark points on the progress bar 602, and the mobile phone 100 starts to play the video A from a position indicated by the mark point. For example, with reference to FIG. 4K, if the mobile phone 100 receives a tap operation performed by the user on the mark point 604, the mobile phone 100 starts to play the video A from the position indicated by the mark point 604.

In the method, in a video, all video segments corresponding to the text information entered by the user can be marked in a video playback progress bar, so that the user can conveniently learn of start moments of all the video segments corresponding to the text information entered by the user. Further, the user may tap any mark point, so that the mobile phone starts to play the video from a position corresponding to the mark point. The user can conveniently view a video segment that needs to be searched for.

An implementation process of the visual media search method provided in embodiments of this application is described below with reference to interaction diagrams and corresponding to the foregoing interface changing.

The visual media search method provided in this application is described below in detail with reference to FIG. 5a. As shown in FIG. 5a, the visual media search method includes an index construction stage and a search stage.

At the index construction stage, in some embodiments, an index may be constructed for each video frame of a video.

In some embodiments, if this solution is implemented on a terminal device, when an index is constructed for each video frame of a video, matching needs to be performed frame by frame at the search stage, which increases a latency required for searching, and reduces user experience. Optionally, in some embodiments, the video may be segmented, and video indexes are constructed in segments.

For example, as shown in FIG. 5a, frame splitting processing is first performed on the video, to obtain a plurality of video frames of the video. Then, segmentation processing is performed on the video based on the plurality of video frames of the video by using a video segmentation algorithm, to obtain a plurality of video segments such as a video segment 1 and a video segment 2. Subsequently, a representative frame may be selected from a plurality of video frames in the video segment, where scores of a plurality of video frames in each video segment are evaluated, and a video frame having a highest score is determined as a representative frame of the video segment. The representative frame is input into an image encoder of a CLIP model, to output a visual semantic vector of the representative frame. An index is constructed based on the visual semantic vector corresponding to the representative frame, and an inverted index database is obtained based on the constructed index.

It should be noted that the foregoing manner of selecting a representative frame is merely an example. Alternatively, a start frame, an intermediate frame, an end frame, or a random video frame of the video segment may be selected as the representative frame. For specific implementations, refer to descriptions in the following embodiment. At the search stage, a user enters a search text in a search interface; the search text is input into a text encoder of the CLIP model, to output a text semantic vector corresponding to the search text; a vector recall is performed from the inverted index database based on the text semantic vector corresponding to the search text; the search text is sent to a natural language understanding module; the natural language understanding module performs entity recognition on the search text, to obtain an entity in the search text; an entity recall is performed from the inverted index database based on the entity in the search text; a vector recall result and an entity recall result are returned from the inverted index database based on the vector recall and the entity recall; the vector recall result and the search result are sorted to obtain a search result; and the search result is displayed in the search interface.

In some embodiments, the image encoder of the CLIP model and the text encoder of the CLIP model may be obtained through training in a training manner based on contrastive learning.

The visual media search method provided in embodiments of this application is described below in detail in FIG. 5b still showing the example that the electronic device is the mobile phone 300 with reference to the gallery service module, the search module, the multi-modality understanding module, and the natural language understanding module that are presented in the system library in FIG. 2b.

As shown in FIG. 5b, the visual media search method provided in embodiments of this application may be divided into the following two stages: an index construction stage and a search stage.

First, steps included at the index construction stage are described in detail with reference to FIG. 5b.

S501: A gallery service module 510 receives an addition operation or a modification operation performed by a user on a video.

The addition operation on the video is an operation of storing the video into a gallery application by the user. For example, the addition operation performed by the user on the video may be an operation of shooting the video, downloading the video, or recording a screen of the mobile phone 300 by the user by using the mobile phone 300. The modification operation on the video is an operation of modifying, by the user, the video already stored in the gallery application. For example, the modification operation performed by the user on the video may be an operation, such as clipping, stitching, adding a special effect, or adding a subtitle, performed by the user on the video.

In some embodiments, that the gallery service module 510 receives the addition operation or the modification operation performed by the user on the video includes: The gallery service module 510 receives an addition operation or a modification operation performed by the user on an attribute tag of the video.

For example, the attribute tag of the video may include a video obtaining location (for example, a location at which the video is shot, or a source from which the video is downloaded); video obtaining time (for example, shooting time, downloading time, or screen recording time); a person name, a classification tag, or an event added or modified by the user for the video; or the like. The classification tag may indicate a category of an object presented in the video. For example, the classification tag may be a person, a plant, an animal, a building, natural scenery, or the like. The event may indicate what the object presented in the video does. For example, the event may be a game, a sport, or the like.

In some embodiments, the classification tag may be manually configured by the user, or may be obtained by the electronic device by automatically classifying the video.

S502: The gallery service module 510 stores the video.

The gallery service module 510 stores the video into the mobile phone 300 in response to the addition operation or the modification operation performed by the user on the video. For example, the video may be stored as a local file of the mobile phone 300, and the user may view the video in a plurality of ways such as a local folder and the gallery application of the mobile phone 300. For another example, in response to an authorization operation of the user, the video may be stored at a cloud end for backup, to reduce internal memory pressure of the mobile phone 300.

In some embodiments, in response to the addition operation or the modification operation performed by the user on the attribute tag of the video, the gallery service module 510 may store the attribute tag of the video.

S503: The gallery service module 510 invokes a multi-modality understanding module 530 to determine representative frames of the video.

It may be understood that, one video usually includes a plurality of video frames. Assuming that a corresponding visual semantic vector is determined for each video frame, and is stored as an index, one video corresponds to a large quantity of indexes, which needs a large quantity of computing resources and a large amount of storage space, resulting in waste. In addition, noise information may exist in the large quantity of indexes, which makes it time-consuming to perform search matching, and easily affects a video search result.

Therefore, in this embodiment of this application, segmentation processing is first performed on the video by using the multi-modality understanding module 530, to determine a corresponding representative frame from each video segment, so that in a subsequent step, a corresponding visual semantic vector is determined for the representative frame, and is stored as an index, thereby greatly reducing a quantity of indexes corresponding to the video. In this way, representative frames respectively corresponding to a plurality of video segments can completely represent a video semantic meaning of the video, and costs can also be reduced.

In some embodiments, the gallery service module 510 may invoke a computer vision service provided by the multi-modality understanding module 530 to determine the representative frames of the video. The computer vision service means that the multi-modality understanding module 530 performs video semantic understanding on the video, and then the multi-modality understanding module 530 determines the representative frames of the video.

The video semantic understanding means enabling the mobile phone to understand a meaning expressed by content presented in the video, for example, understand information such as categories, quantities, positions, or relationships between objects in the video.

In some embodiments, the computer vision service provides services such as performing frame splitting processing on a video, performing segmentation processing on a video by using a video segmentation algorithm, and determining representative frames of video segments. In this case, a process of determining the representative frames of the video may be mainly subdivided into the following step 1 to step 3:

Step 1: The multi-modality understanding module 530 performs frame splitting processing on the video by using the computer vision service.

It may be understood that the video includes a plurality of video frames, and each video frame is a still image in the video, that is, each video frame may be used as one image. The frame splitting processing means that the multi-modality understanding module 530 decomposes the video into video frames by using the computer vision service.

In some embodiments, when the multi-modality understanding module 530 performs frame splitting processing on the video, a frame identifier and a time point may be marked for each obtained video frame. One frame identifier is used to uniquely mark one video frame, and different video frames may be distinguished based on frame identifiers. The time point is time at which the video frame occurs in the video.

In some embodiments, when the multi-modality understanding module 530 performs frame splitting processing on the video by using the computer vision service, a classification tag of each video frame may be recognized. The classification tag may indicate a category to which an object presented in the video frame belongs. For example, the classification tag may be a person, a plant, an animal, or the like presented in the video frame. For another example, the classification tag may be a building, natural scenery, or the like presented in the video frame.

It should be noted that a quantity of classification tags of the video frame is not limited. For example, as shown in FIG. 3a(2), a classification tag of the thumbnail of the "video A" included in the first search result display interface 330 may include a "boy", a "star", "sky", a "tree", and the like.

Step 2: The multi-modality understanding module 530 performs segmentation processing on the video by using the computer vision service.

The segmentation processing means dividing the video into a plurality of video segments by using a video segmentation algorithm provided by the computer vision service.

It may be understood that when a video is played, content presented in the video constantly changes as video frames are played sequentially, but changes to different degrees. Therefore, similar video frames (at a small change degree) may be classified into one video segment.

In some embodiments, a change degree of a video frame relative to its adjacent video frame may be measured based on classification tags of the video frames and image parameters of the video frames, to perform segmentation processing on the video. For example, the image parameter of the video frame may include a jitter degree, a definition, a pixel value, and the like of the video frame. This is not limited in this application.

Jitter of the video frame is a phenomenon that content presented in the video frame jitters or shakes in a video playback process. For example, the user is holding the mobile phone 300 and shooting, and when the user wants to shoot another scene and moves the mobile phone 300, obvious jitter may occur. The definition of the video frame is a clarity degree of each detailed shadow pattern and its boundary in the video frame. The pixel of the video frame may represent brightness of the video frame.

It may be understood that, a value corresponding to a jitter degree, a change degree of another image parameter, and a change degree of a classification tag of a video frame relative to its adjacent video frame are positively correlated to a change degree of content presented in the video. That is, a larger value or a smaller value corresponding to the jitter degree, a more obvious change degree of the image parameter, and a more obvious change degree of the classification tag indicate a more obvious change of the content presented in the video.

In some embodiments, the video segmentation algorithm may be expressed by using the following Formula 1. A segmentation score of a video frame is calculated based on a classification tag and an image parameter of the video frame with reference to the following Formula 1, and then whether the video frame is determined as a start frame or an end frame of a video segment is determined based on the segmentation score of the video frame. Formula 1 is shown as follows:

$$y = \alpha \times \text{frame}_A + \beta \times \text{frame}_B + \gamma \times \text{frame}_Y + \delta \times \text{frame}_T$$

y represents the segmentation score of the video frame, frame, represents a jitter degree score of the video frame, $\text{frame}_g$ represents a definition change score of the video frame, $\text{frame}_y$ represents a tag change score of the video frame, $\text{frame}_r$ represents a pixel change score of the video frame, and $\alpha$, $\beta$, $\gamma$, and $\delta$ respectively represent coefficients of $\text{frame}_A$, $\text{frame}_B$, $\text{frame}_Y$, and framer. In some embodiments, $\alpha$, $\beta$, $\gamma$, and $\delta$ may be values manually preset based on degrees of impact of a jitter degree, a definition change, a tag change, and a pixel change of the video frame on the segmentation score of the video frame.

It should be noted that the foregoing process of determining a segmentation score of a video frame based on a classification tag and a plurality of image parameters is merely an example. Alternatively, the segmentation score of the video frame may be determined based on one or more of the classification tag and the plurality of image parameters. This is not limited in this application.

In some embodiments, jitter degrees of the plurality of video frames in the video may be detected by using a video jitter detection method such as an optical flow method based on an image displacement, a feature point matching method, and a method based on an image grayscale distribution feature. Then, jitter degree scores of the video frames are determined based on a preset correspondence between a jitter degree range and a jitter degree score.

In some embodiments, definitions of the plurality of video frames in the video may be determined by using a definition detection tool, and then the definition of the video frame is compared with a definition of an adjacent video frame, to determine a definition change value of the video frame. Subsequently, a definition change score of the video frame is determined based on a preset correspondence between a definition change value range and a definition change score. For example, the video quality detection tool may be open source software such as FFmpeg or Video Quality Measurement Tool.

In some embodiments, a classification tag of a video frame may be compared with a classification tag of an adjacent video frame, and a comprehensive tag change of the video frame is determined based on a change in a quantity of classification tags of the video frame and a change in content of the classification tag. For example, a union set and an intersection set of a classification tag of a video frame and a classification tag of its adjacent video frame may be calculated, where a change in a quantity of classification tags in the union set may reflect a change in a quantity of classification tags of the video frame, and a change in a quantity of classification tags in the intersection set may reflect a change in content of the classification tag. When the quantity of classification tags in the union set or the quantity of classification tags in the intersection set changes, a tag change score of the video frame may be determined based on a preset correspondence between a classification tag quantity change range and a tag change score.

In some embodiments, pixels of the plurality of video frames in the video may be determined by using a pixel detection tool, and then the pixel of the video frame is compared with a pixel of an adjacent video frame, to determine a pixel change value of the video frame. Subsequently, a pixel change score of the video frame is determined based on a preset correspondence between a pixel change value range and a pixel change score. For example, the pixel detection tool may be a plug-in such as PixelStick, MeasureIt, or Guides.

In some embodiments, a change degree of content presented in two adjacent video frames in the video may be positively correlated to segmentation scores of the video frames. That is, a larger segmentation score of a video frame indicates a more obvious change degree of content presented in the video frame relative to that in an adjacent video frame.

For example, a video frame may be compared with its previous video frame, a segmentation score threshold is preset, and a video frame whose segmentation score exceeds the segmentation score threshold is determined as a start frame of a video segment. With reference to the foregoing Formula 1, a higher jitter degree of the video frame indicates a larger value corresponding to $frame_A$; a larger definition change of the video frame relative to the previous video frame indicates a larger value corresponding to $frame_B$; a larger tag change of the video frame relative to the previous video frame indicates a larger value corresponding to $frame_Y$; a larger tag change of the video frame relative to the previous video frame indicates a larger value corresponding to $frame_Y$; and a larger pixel change of the video frame relative to the previous video frame indicates a larger value corresponding to $frame_T$.

For another example, a video frame may be compared with its next video frame, a segmentation score threshold is preset, and a video frame whose segmentation score exceeds the segmentation score threshold is determined as an end frame of a video segment.

In some embodiments, a change degree of content presented in two adjacent video frames in the video may alternatively be negatively correlated to segmentation scores of the video frames. That is, a lower segmentation score of a video frame indicates a more obvious change degree of content presented in the video frame relative to that in an adjacent video frame. That is, a lower segmentation score of a video frame indicates a higher possibility of determining the video frame as a start frame of a video segment or an end frame of a video segment.

For example, a video frame may be compared with its previous video frame, a segmentation score threshold is preset, and a video frame whose segmentation score is lower than the segmentation score threshold is determined as a start frame of a video segment. With reference to the foregoing Formula 1, a higher jitter degree of the video frame indicates a smaller value corresponding to $frame_A$; a larger definition change of the video frame relative to the previous video frame indicates a smaller value corresponding to $frame_B$; a larger tag change of the video frame relative to the previous video frame indicates a smaller value corresponding to $frame_Y$; a larger tag change of the video frame relative to the previous video frame indicates a smaller value corresponding to $frame_Y$; and a larger pixel change of the video frame relative to the previous video frame indicates a smaller value corresponding to $frame_T$.

Step 3: The multi-modality understanding module 530 determines, by using the computer vision service, a representative frame corresponding to each video segment.

After obtaining the plurality of video segments, the multi-modality understanding module 530 determines, from each video segment, a representative frame that can represent a video semantic meaning of the video segment.

In some embodiments, the representative frame may be a start frame, an end frame, an intermediate frame, or a random frame in the video segment.

For example, assuming that a video segment includes 99 video frames, the 1st video frame (a start frame), the 99th video frame (an end frame), or the 50th video frame (an intermediate frame) in the 99 video frames in a chronological order may be used as a representative frame of the video segment, or a video frame (a random frame) may be randomly selected from the 99 video frames as the representative frame of the video segment.

In some embodiments, an optimal frame may be determined from a video segment as a representative frame based on a preset rule related to image parameters and classification tags of video frames.

For example, scores of the video frames may be calculated based on the image parameters and the classification tags of the video frames. A larger quantity of tags of the video frame indicates a higher score of the video frame, a lower jitter degree of the video frame indicates a higher score of the video frame, a higher definition of the video frame indicates a higher score of the video frame, and a smaller pixel change of a pixel of the video frame relative to a pixel of a previous video frame indicates a higher score of the video frame. Finally, a video frame having a highest score (that is, the optimal frame) in the video segment may be determined as the representative frame.

Next, a process of determining a representative frame in a video is described in detail with reference to FIG. 6.

As shown in FIG. 6, the video includes 120 video frames, a video frame is compared with a previous video frame, segmentation scores respectively corresponding to the 120 video frames are calculated with reference to the foregoing Formula 1, and a video frame whose segmentation score exceeds a segmentation score threshold is used as a start frame of a video segment.

In some embodiments, the 120 video frames are divided into three video segments: a video segment 1, a video segment 2, and a video segment 3, and an intermediate frame of each video segment is determined as a representative frame corresponding to the video segment. The video segment 1 includes 40 video frames, the video segment 2 includes 51 video frames, and the video segment 3 includes 29 video frames. That is, the 20th video frame in the video segment 1 is used as a representative frame corresponding to the video segment 1, the 26th video frame in the video segment 2 is used as a representative frame corresponding to the video segment 2, and the 15th video frame in the video segment 3 is used as a representative frame corresponding to the video segment 3.

It should be noted that, the quantity of video frames in the video segment 1 is 40, which is an even number. The

20th video frame and the 21st video frame are both intermediate frames, and either one of the intermediate frames may be determined as the representative frame corresponding to the video segment 1. This is not limited in this application.

S504: The multi-modality understanding module 530 returns the representative frames of the video and related information of the representative frames to the gallery service module 510.

The related information of the representative frame includes, but is not limited to, a time point corresponding to a start frame, a time point corresponding to an end frame, and a time point corresponding to the representative frame in the video segment corresponding to the representative frame, a classification tag of the video segment, and the like. The time points respectively corresponding to the start frame, the end frame, and the representative frame in the video segment help to jump to a corresponding video frame when a video search result is subsequently displayed to the user, thereby improving user experience. The classification tag of the video segment helps to display a more accurate video search result when a video search is performed subsequently.

In some embodiments, the classification tag of the video segment may indicate a category of an object presented in the video segment. For example, a union set of classification tags respectively corresponding to a plurality of video frames included in the video segment may be obtained as the classification tag of the video segment.

In addition, the related information of the representative frame may further include a person name and a person relationship that correspond to the video segment. In some embodiments, after the representative frame is determined, a person name and a person relationship that correspond to a person in the representative frame may be recognized based on a preset person name and person relationship.

S505: The gallery service module 510 stores the representative frames of the video and the related information of the representative frames.

After receiving the representative frames and the related information of the representative frames that are returned by the multi-modality understanding module 530, the gallery service module 510 may store the representative frames and the related information of the representative frames. In some embodiments, the gallery service module 510 is configured with a database, and the gallery service module 510 may store the representative frames of the video and the related information of the representative frames into the database.

S506: The gallery service module 510 invokes the multi-modality understanding module 530 to determine visual semantic vectors corresponding to the representative frames.

In some embodiments, the gallery service module 510 invokes the computer vision service provided by the multi-modality understanding module 530 to determine the visual semantic vectors corresponding to the representative frames. One video includes a plurality of video segments, and each video segment corresponds to one representative frame. Therefore, one video corresponds to a plurality of visual semantic vectors. The gallery service module 510 invokes the computer vision service provided by the multi-modality understanding module 530 to perform video semantic understanding on the video, so as to further determine visual semantic vectors respectively corresponding to the plurality of representative frames in the video.

In some embodiments, the computer vision service may provide a CLIP model. The representative frames may be input into an image encoder of the CLIP model, to obtain the visual semantic vectors corresponding to the representative frames.

In some embodiments, the image encoder of the CLIP model may be trained by using image training samples. The image training samples may include picture training samples and video frame training samples. For a training process of the image encoder of the CLIP model, refer to the following embodiment.

S507: The multi-modality understanding module 530 returns the visual semantic vectors corresponding to the representative frames to the gallery service module 510.

S508: The gallery service module 510 stores the visual semantic vectors corresponding to the representative frames.

The gallery service module 510 receives the visual semantic vectors returned by the multi-modality understanding module 530 and corresponding to the representative frames, and may store the visual semantic vectors corresponding to the representative frames. For example, the gallery service module 510 is configured with a database, and the gallery service module 510 may store the visual semantic vectors corresponding to the representative frames into the database.

S509: The gallery service module 510 sends the representative frames of the video, the related information of the representative frames, and the visual semantic vectors of the representative frames to a search module 520.

S510: The search module 520 constructs indexes corresponding to the video.

One index is an index corresponding to one video segment in a video. One video includes a plurality of video segments. Therefore, one video corresponds to a plurality of indexes, and different indexes correspond to different video segments in the video.

The search module 520 may combine a visual semantic vector of a representative frame, related information of the representative frame, and an attribute tag of a video segment to construct an index of the video segment corresponding to the representative frame. As described in the foregoing example, an index of a video segment may include a visual semantic vector of a representative frame of the video segment; a time point corresponding to a start frame, a time point corresponding to an end frame, and a time point corresponding to the representative frame in the video segment; a classification tag of the video segment; an attribute tag (for example, video obtaining time, a video obtaining location, and a video storage path) of the video segment; and the like.

It should be noted that the foregoing content included in the index of the video segment is merely examples, and the index of the video segment may include any information in the visual semantic vector of the representative frame, related information of the representative frame, and the attribute tag of the video segment. This is not limited in this application.

For example, the search module 520 may include an index database, and the search module 520 may store the indexes corresponding to the video into the index database, so that search matching may be performed based on the index database subsequently.

It may be understood that during actual application, a quantity of videos stored in the mobile phone 300 may be very large, and that one video corresponds to a plurality of indexes indicates that the index database may include a large quantity of indexes. In some embodiments, to improve search efficiency, searching may be performed through inverted indexing.

For example, after constructing the indexes corresponding to the video, the search module 520 performs vector clustering on visual semantic vectors included in indexes in the index database, to obtain a plurality of clusters. That is, vector spaces corresponding to all the indexes are divided into a plurality of vector areas, one vector area includes one cluster, each vector area includes a plurality of indexes having a high vector similarity, and each vector area may be replaced with one cluster center point. For example, the clustering may be performed by using a method such as K-means or hierarchical clustering. This is not limited in this application.

In this way, when search matching is performed based on a text semantic vector of a search text, the mobile phone 300 may first perform matching with cluster center points, and then perform matching with a visual semantic vector in a vector area to which a determined cluster center point belongs. Not all the indexes in the index database need matching, so that computing resources are saved, and time consumed for search matching is greatly reduced, thereby reducing a search latency, improving efficiency of video searching, and further improving user experience.

In some embodiments, the search module 520 may store the received representative frames, related information of the representative frames, and visual semantic vectors of the representative frames, to facilitate searching during index construction, thereby accelerating index construction.

For example, a visual semantic vector of a representative frame corresponding to a video segment and related information of the representative frame may be stored in a document. A video segment 1 is used as an example. A visual semantic vector of a representative frame corresponding to the video segment 1 and related information of the representative frame may be stored in a sub-document 1. For information stored in the sub-document 1, refer to the following Table 3:

**Table 3**

| Information name | Information content |
|---|---|
| segments.media-vector | [bd de d1 b4 3c 8c 9c] |
| segments.startTime | 0 |
| segments.endTime | 91666 |
| segments.startFrame | 0 |
| segments.endFrame | 2750 |
| segments.tag-name | person\|scenery\|building |

As shown in Table 3, segments.media-vector represents the visual semantic vector of the representative frame in the video segment 1. During actual application, a vector usually includes an array. In this embodiment of this application, hexadecimal sequence processing is performed on the visual semantic vector, to obtain a visual semantic vector in a form such as [bd de d1 b4 3c 8c 9c]. A hexadecimal floating-point number can enable the mobile phone 300 to perform storage in less storage space, thereby saving storage space. segments.startTime represents start time 0 ms of the video segment 1 (that is, a time point corresponding to a start frame in the video segment 1). segments.endTime represents end time 91666 ms of the video segment 1 (that is, a time point corresponding to an end frame in the video segment 1). segments.start-Frame and segments.endFrame indicate that there are a total of 2750 video frames in the video segment 1 from the start frame to the end frame. segments.tag-name represents a classification tag of the video segment 1, including a "person", "scenery", and a "building".

In some embodiments, an attribute tag of the video segment 1 may be further stored in the sub-document 1. The attribute tag of the video segment 1 is the attribute tag of the video stored in step S502. For example, the video segment 1 is a video segment in a video shot by the user. The attribute tag of the video segment 1 may include shooting time, a shooting location, a storage path in the mobile phone 300, and the like of the video segment 1.

In some embodiments, the attribute tag of the video segment 1 may be further stored in a document 1. It may be understood that, an attribute tag of a video is fixed, that is, attribute tags respectively corresponding to a plurality of video segments in the video are the same. Therefore, the attribute tag of the video may be further stored in the document 1, and an attribute tag of each video segment of the video may be obtained from the document 1, to reduce content pressure of the mobile phone 300 and reduce storage costs.

For example, a video D includes the video segment 1, and further includes a video segment 2 and a video segment 3. The visual semantic vector of the representative frame corresponding to the video segment 1 and the related information of the representative frame are stored in the sub-document 1. A visual semantic vector of a representative frame corresponding to the video segment 2 and related information of the representative frame may be stored in a sub-document 2. A visual semantic vector of a representative frame corresponding to the video segment 1 and related information of the representative frame may be stored in a sub-document 3. In this case, for information stored in the document 1, refer to the following Table 4:

**Table 4**

| Information name | Information content |
| --- | --- |
| file_path | pictures/video |
| shooting-time | 2023.09.30 |
| location | city B |
| segments | sub-document 1, sub-document 2, and sub-document 3 |

As shown in Table 4, file_path represents a storage path of the video D in the mobile phone 300. shooting-time represents shooting time of the video D. location represents a shooting location of the video D. segments indicate sub-documents respectively corresponding to the plurality of video segments included in the video D. Based on the foregoing Table 3 and Table 4, the attribute tag of the video segment 1 may be obtained from the document 1, and the related information of the representative frame and the like of the video segment 1 may be obtained from the sub-document 1. Similarly, attribute tags of the video segment 2 and the video segment 3 may also be obtained from the document 1.

It should be noted that because video semantic understanding may need to occupy a large quantity of computing resources, to avoid impact such as stalling during use of the user, steps S503 to S510 may be performed when the mobile phone 300 is in a charged and screen-off state.

In the visual media search method provided in this application, search matching is performed based on a search text entered by a user and an index corresponding to a video, to obtain a search result. The index corresponding to the video is an index of a video segment in the video, and the index of the video segment includes at least a visual semantic vector of a representative frame in the video segment. The visual semantic vector of the representative frame may indicate a meaning expressed by image content presented in the representative frame, and may represent a video semantic meaning of the video segment. Therefore, the visual semantic vector of the representative frame is fully associated with the video semantic meaning of the video segment in the video. Search matching is performed based on the visual semantic vector of the representative frame, so that fusion and interaction between the search text and the image content presented in the representative frame can be implemented, thereby improving accuracy of a video search result and improving user experience.

Next, steps included at the search stage of the visual media search method provided in this application continue to be described in detail with reference to FIG. 5b.

S511: The gallery service module 510 receives an operation of entering a search text by the user.

The user may enter the search text in a search interface provided on the mobile phone 300. For example, the user may enter the search text in the search box 321 included in the album display interface 320 shown in FIG. 3a(1). For another example, the user may enter the search text in the search box 421 included in the leftmost screen interface 420 shown in FIG. 4a(1).

The search text is a text in which the user describes a characteristic of a video required by the user. For example, the search text may include video obtaining time, a video obtaining location, image content presented in the video, and the like. For example, the search text may be "scenery shot last week". This is not limited in this application.

S512: The gallery service module 510 sends the search text to the search module 520.

S513: The search module 520 invokes the multi-modality understanding module 530 to determine a text semantic vector corresponding to the search text.

The search module 520 invokes the multi-modality understanding module 530 to perform text semantic understanding on the search text, so as to obtain the text semantic vector corresponding to the search text.

The text semantic understanding means enabling the mobile phone to understand a meaning expressed by the text, and is a key technology of a natural language processing (NLP) technology.

In some embodiments, the multi-modality understanding module 530 provides the CLIP model, and the search text may be input into a text encoder of the CLIP model, to obtain the text semantic vector corresponding to the search text.

In some embodiments, the text encoder of the CLIP model may be trained by using text training samples. For a training process of the text encoder of the CLIP model, refer to the following embodiment.

S514: The multi-modality understanding module 530 returns the text semantic vector corresponding to the search text to the search module 520.

S515: The search module 520 performs a vector recall in the index database based on the text semantic vector corresponding to the search text.

The vector recall means recalling, in the index database, an index matching the text semantic vector corresponding to the search text.

In some embodiments, vector similarities between the text semantic vector corresponding to the search text and visual semantic vectors respectively included in the plurality of indexes in the index database may be calculated to obtain vector similarity calculation results respectively corresponding to the plurality of indexes, and N indexes having higher vector similarities in the plurality of vector similarity calculation results may be used as vector recall results. N is an integer greater than 0. For example, N may be a preset quantity of vector recall results, for example, 5, 8, or 10.

The vector similarity is a similarity degree between two vectors, and may be calculated by using a plurality of methods. For example, the similarity degree may be determined by calculating a cosine similarity between the two vectors, or another method may be used. This is not limited in this application.

In some embodiments, as described above, the vector space in the index database includes a plurality of vector areas, and each vector area includes a plurality of indexes having a high vector similarity. In this embodiment of this application, distances between the text semantic vector corresponding to the search text and cluster center points of the plurality of vector areas in the index database may be calculated, to determine a cluster center point at a shortest distance. Then, vector similarities between the text semantic vector and visual semantic vectors respectively included in a plurality of indexes in a vector area to which the cluster center point belongs are calculated. The indexes are sorted in descending order of the vector similarities, to obtain an inverted zipper corresponding to the cluster center point. For example, the first N indexes in the inverted zipper may be used as vector recall results. For another example, an index whose vector similarity exceeds a vector similarity threshold may be used as a vector recall result.

The following describes the vector recall process in detail with reference to FIG. 7.

As shown in FIG. 7, the inverted index database includes a plurality of cluster center points such as a cluster center point 1. Distances between the text semantic vector corresponding to the search text and the cluster center points of the plurality of vector areas in the index database are first calculated, and the cluster center point 1 is determined as a cluster center point at a shortest distance. Then, vector similarities between the text semantic vector and visual semantic vectors of a plurality of indexes in a vector area to which the center 1 belongs are calculated, the indexes are sorted in descending order of the vector similarities to obtain an inverted zipper 1 corresponding to the cluster center point 1, and the top N indexes are selected from the inverted zipper 1 corresponding to the cluster center point 1 as vector recall results.

In the inverted zipper 1, a distance between a visual semantic vector corresponding to an index 1 and the cluster center point 1 is the shortest, and a distance between an index 2 and the cluster center point 1 and a distance between an index 3 and the cluster center point 1 gradually become longer. Therefore, the selection of the top N indexes is sequential backward selection starting from the index 1. N may be any integer greater than 0. This is not limited in this application.

S516: The search module 520 invokes a natural language understanding module 540 to recognize an entity in the search text.

The search module 520 invokes the natural language understanding module 540 to recognize an entity included in the search text.

For example, an entity having a specific meaning in the search text may be recognized by using a named entity recognition (Named Entity Recognition, NER) technology. The entity may include, but is not limited to, time, a location, a person name, an organization name, and a proper noun. For example, the search text is the "scenery shot last week". The entity in the search text includes "last week" and "scenery".

S517: The natural language understanding module 540 returns the entity in the search text to the search module 520.

S518: The search module 520 performs an entity recall in the index database based on the entity in the search text.

The entity recall means recalling, in the index database, an index matching the entity in the search text.

In some embodiments, an index may include related information of a representative frame in a video segment and an attribute tag of the video segment, where an entity is included. For example, video obtaining time, a video obtaining location, a classification tag of the video segment, and the like may all include an entity. For example, the search text is "scenery shot in a city B last week". In the search text, there are an entity "city B" that is a location, an entity "last week" that is time, and an entity "scenery" related to image content presented in a video. In this case, matching may be performed in entities respectively corresponding to the plurality of indexes, to obtain an index matching the entities in the search text as an entity recall result.

S519: The search module 520 sorts the vector recall result and the entity recall result.

In some embodiments, an intersection result or a union result of the vector recall result and the entity recall result may be sorted.

For example, the sorting may be performed based on a vector similarity between the vector recall result and the search text and an entity matching degree between the entity recall result and the search text. For example, weighted summation may be performed on a vector similarity between the text semantic vector of the search text and a visual semantic vector of a recall result (the vector recall result or the entity recall result) and a matching degree between the entity in the search text and an entity in the recall result, to obtain a comprehensive matching degree corresponding to the recall result, and sorting is performed in descending order of comprehensive matching degrees respectively corresponding to recall results (including the vector recall result and the entity recall result).

In this way, based on the search text entered by the user, in addition to search matching based on the text semantic vector, search matching based on the entity in the search text is performed, and an order of final displayed results is obtained based on comprehensive matching degrees of search results, to ensure that a video presented to the user is a result that better matches the search text of the user, thereby further improving user experience.

S520: The search module 520 returns a search result to the gallery service module 510.

The search module 520 returns sorted search results to the gallery service module 510.

S521: The gallery service module 510 presents the search result to the user.

It may be understood that during actual application, the mobile phone 300 usually stores pictures and videos into the gallery application. Therefore, when searching is performed in a search interface provided in the gallery application, both a picture search result and a video search result are displayed. That is, in addition to indexes corresponding to video segments, the index database further includes indexes corresponding to the pictures.

In some embodiments, the index corresponding to the picture may include, but is not limited to, a picture semantic vector, an attribute tag of the picture, and the like. For example, as described above, a video frame may be used as an image, and a picture is also an image. Therefore, the picture semantic vector corresponding to the picture may be generated by using the image encoder of the CLIP model provided by the multi-modality understanding module 530, and is returned to the gallery service module 510. For example, first, the attribute tag of the picture may be obtained by receiving, by the gallery service module 510, an addition operation or a modification operation performed by the user on the attribute tag of the picture and storing the attribute tag of the picture. Then, the search module 520 receives the picture semantic vector and the attribute tag of the picture that are sent by the gallery service module 510, and constructs, based on the picture semantic vector and the attribute tag of the picture, the index corresponding to the picture.

For example, as shown in the first search result display interface 330 in FIG. 3a(2), the first search results including a video search result and a picture search result are displayed.

In some embodiments, the search results may be presented based on a plurality of sorted indexes. As described above, an index corresponding to a video includes a visual semantic vector of a representative frame, related information of the representative frame, and an attribute tag of a video segment; and an index corresponding to a picture includes a picture semantic vector, an attribute tag of the picture, and the like.

For example, in the first search result display interface 330 in FIG. 3a(2), the picture search result in the first display area 331 presents a picture, and the video search result presents a thumbnail and a time point. Information corresponding to the thumbnail and the time point is information included in an index corresponding to the video search result. The "video A" in FIG. 3a(2) is used as an example. The thumbnail of the "video A" is the start frame of the video segment a included in the index, the $1^{st}$ time point of the "video A" is the time point "02:18" corresponding to the start frame of the video segment a included in the index, and the $2^{nd}$ time point of the "video A" is the total duration "08:32" of the video included in the index.

For another example, the video search result and the picture search result may further present respective corresponding attribute tags. For example, the video search result may present video shooting time, a video shooting location, and the like. As shown in FIG. 3b(2), the picture search result includes shooting time "October 1, 2023" of the picture and a shooting location "city B" of the picture.

For still another example, the video search result may alternatively display other content in the corresponding index, for example, a person relationship and a person name. This is not limited in this application.

It should be noted that, the gallery service module, the search module, the multi-modality understanding module, and the natural language understanding module may alternatively be located in a cloud server. That is, the cloud server implements, through interaction between the four modules, the steps included at the index construction stage. At the search stage, the steps included at the search stage may be implemented based on interaction between the electronic device such as the mobile phone 300 and the cloud server.

In some embodiments, the mobile phone 300 may send a search text entered by the user to the gallery service module of the cloud server, so that the gallery service module of the cloud server interacts with another module to implement the steps included at the search stage. Then, the gallery service module of the cloud server sends a search result to the mobile phone 300, so that the mobile phone 300 presents the search result to the user.

In some embodiments, it is assumed that a video E has total duration of 2 minutes, and is shot at a frame rate of 30, that is, 30 images are shot in one second. When the cloud server stores the video E, the multi-modality understanding module in the cloud server may perform frame splitting processing on the video E to decompose the video E into video frames, so that 3600 video frames may be obtained. The multi-modality understanding module then performs segmentation processing on the video E, where the video E is segmented in a time unit of 1s into 120 video segments, and each video segment includes 30 video frames (that is, 30 images shot in one second). The multi-modality understanding module scores the 30 video frames in each video segment, and uses a video frame having a highest score as a representative frame of the video segment. For example, the scoring may be performed based on jitter degrees, definitions, pixels, and the like of the video frames. This is not limited in this application.

Subsequently, the search module of the cloud server uses a visual semantic vector of the representative frame as an index of the corresponding video segment, to subsequently perform matching with the representative frame of each video segment of the video E based on the search text. If the search text successfully matches the 50th video segment of the video E, a thumbnail of the video returned to the user is a representative frame of the 50th video segment, and a returned time point is 50s. For a specific implementation of the foregoing embodiment, refer to FIG. 5b and descriptions of the foregoing embodiment. Details are not described herein again.

It should be noted that the multi-modality understanding module 530 of the mobile phone 300 may also perform, in the time unit of 1s, segmentation processing on the videos stored in the gallery. This is not limited in this application.

For example, FIG. 8 is a principle diagram of another visual media search method example according to an embodiment of this application.

Specific implementation processes of the two stages are separately described below.

1. Index construction stage

FIG. 9A, FIG. 9B, and FIG. 9C are an interaction flowchart of a visual media search method example according to an embodiment of this application. As shown in FIG. 9A, FIG. 9B, and FIG. 9C, the index construction stage of the method may include the following steps.

S101: A gallery APP stores, into a gallery database in response to a user adding and/or modifying visual media, incremental visual media added and/or modified by the user and attribute information of the incremental visual media.

Optionally, the user may add visual media through shooting, downloading, screenshotting, or the like. In addition, the user may further modify existing visual media to obtain new visual media. The modification includes, but is not limited to, operations such as beautification, editing, customized addition of a person name, and addition of a watermark.

The attribute information of the visual media may include, but is not limited to, identification information, an obtaining location, obtaining time, a person name, and a tag (also referred to as a classification tag). Optionally, the identification information of the visual media may be represented by using an identity (identity document, ID) (for example, a hash ID), or may be represented by using a name, a path, or the like. This is not limited in this application. In the following embodiment, an example that the identification information of the visual media is represented by using the ID is used for description.

The obtaining location is a location at which the visual media is obtained. The obtaining time is time at which the visual media is obtained. For a shot video or image, the obtaining location may be a shooting location, and the obtaining time may be shooting time. In an embodiment, for a shot video or image, the attribute information may further include information about a camera used for shooting (for example, whether a front-facing camera is used for shooting). For a screenshot, the obtaining location may be a screenshotting location, and the obtaining time may be screenshotting time. For a downloaded video or image, the obtaining location may be a downloading location, and the obtaining time may be downloading time.

The person name is a name added by the user to a person in an image or a video. The tag is information representing a type or an attribute of an image or a video. For example, the tag may be a person, a plant, an animal, a building, natural scenery, or the like.

For target visual media added by the user and attribute information of the target visual media, the gallery APP stores the added visual media and the attribute information of the visual media into the gallery database. For visual media modified by the user and attribute information of the visual media, the gallery APP synchronously modifies the visual media and the attribute information of the visual media that are stored in the gallery database.

In some other embodiments, the gallery APP may store the added visual media and the attribute information of the visual media at a cloud end, to reduce local storage pressure of an electronic device.

For ease of description, in the following embodiment, the visual media added and/or modified by the user is referred to as incremental visual media or target visual media, a video in the visual media added and/or modified by the user is referred to as an incremental video or a target video, and an image in the visual media added and/or modified by the user is referred to as an incremental image or a target image.

S 102: The gallery APP synchronizes the incremental visual media and an attribute of the incremental visual media to a CV database of a CV service.

When the user adds and/or modifies visual media, the gallery APP may synchronize incremental visual media and an attribute of the incremental visual media to the CV database, to make it convenient for each module of the CV service to subsequently obtain data as required.

S103: When the electronic device is in a charged state and a screen is in a screen-off state, the gallery APP sends a segmentation request to a video segmentation module of the CV service.

The segmentation request is used to request to perform segmentation processing on the incremental video, and obtain representative frames of video segments. Optionally, the segmentation request may carry the incremental video or an ID of the incremental video.

Optionally, the gallery APP may subscribe to a charger plug status from a related module in the electronic device. When the charger plug status changes, the module sends a notification to the gallery APP. In this way, the gallery APP can learn, in real time, whether the charger is in a plugged-in state, that is, learn whether the electronic device is in the charged state. Similarly, the gallery APP may subscribe to a screen status from a related module in the electronic device, and when the screen status changes, the module sends a notification to the gallery APP. In this way, the gallery APP can learn, in real time, whether the screen is in the screen-off state.

In another embodiment, the gallery APP may alternatively send the segmentation request to the video segmentation module when the electronic device is in the charged state, the screen is in the screen-off state, and a current moment is within a preset time period. Optionally, the preset time period may be, for example, 00:00 to 07:00 every day. In this way, disturbance to the user can be reduced, and user experience can be improved.

S104: The video segmentation module performs segmentation processing on the incremental video in response to the segmentation request, to obtain a plurality of video segments and attribute information of the plurality of video segments, and extracts representative frames from the video segments.

Specifically, the video segmentation module may invoke a preset video segmentation algorithm to perform segmentation processing on each incremental video. The video segmentation performed by using the video segmentation algorithm mainly includes three processes: The 1st process is to perform frame splitting processing on the incremental video, to split the incremental video into a plurality of frames of images. The 2nd process is to perform, based on a semantic meaning of the video, segmentation in the plurality of frames of images obtained through frame splitting. Each video segment obtained through segmentation may represent one scene, and frames of images in each video segment are associated with each other to some extent. The 3rd process is to extract a frame of image from each video segment as a representative frame.

The representative frame is used to represent a semantic meaning of the video segment. In an embodiment, the 1st frame of image, the last frame of image, or an intermediate frame of image of the video segment may be used as the representative frame. In another embodiment, the representative frame may alternatively be determined by calculating jitter degree, definition, tag, and pixel change degrees and other parameters of the frames of image in the video segment. A method for determining the representative frame is not specifically limited in this embodiment of this application.

Optionally, the attribute information of the video segment may include identification information, start time, end time, a tag union set, and the like of the video segment. The identification information of the video segment may be, for example, an ID of the video segment. The tag union set is a union set of tags (referred to as frame tags) of frames of images in the video segment.

A specific implementation of step S104 is further described in a subsequent embodiment.

S105: The video segmentation module returns the video segments, the attribute information of the video segments, and the representative frames to the gallery APP.

S106: The gallery APP stores the video segments, the attribute information of the video segments, and the representative frames into the gallery database.

S107: The gallery APP sends a facial analysis request to a facial analysis module in the CV service.

The facial analysis request is used to request to perform facial analysis on an incremental image including a face (referred to as an incremental face image or a target face image below) and a representative frame including a face (referred to as a face representative frame below). The facial analysis may include face recognition, face clustering, and the like.

Optionally, the facial analysis request carries the incremental face image and the face representative frame. Alternatively, the facial analysis request may carry identification information of the incremental face image and identification information of the face representative frame.

S108: The facial analysis module performs facial analysis on the incremental face image and the face representative frame in response to the facial analysis request, to obtain a facial analysis result, where the facial analysis result includes a face clustering result.

Specifically, the facial analysis module may perform face recognition on the incremental face image and the face representative frame by using a face recognition algorithm. Optionally, face information may be represented by using a face ID (face ID).

Then, the facial analysis module may analyze a person gender, a person age, and the like based on recognized face data.

In addition, the facial analysis module clusters recognized face information in the incremental face image and the face representative frame together with historical face information based on a face clustering algorithm, to obtain a plurality of classes, and then updates a face clustering result obtained through analysis within a historical time period.

A historical face is a face recognized from an image within the historical time period. It may be understood that the CV database may store the historical face information. The facial analysis module may perform face clustering based on face recognition results of the incremental face image and the face representative frame in combination with the historical face information in the CV database. The face clustering is clustering faces with similar features into one class. In this way, at least one class is obtained, and each class may correspond to one person. Optionally, the facial analysis module may identify each person, for example, may number persons, to set an ID corresponding to each person. In other words, each person may be represented by using one person ID. The person ID is also referred to as tag_ID.

It should be noted that when the facial analysis module performs face clustering, a clustering failure may occur. That is, for a face, there is no other faces whose features are close to a feature of the face. In this case, in the face clustering algorithm, a person ID corresponding to the face may be set to a preset identifier, for example, set to -1. In other words, if a person ID is -1, it indicates that there is no corresponding class. In a subsequent operation process of the algorithm, a person whose person ID is the preset identifier may be removed from an operation range, and only a person whose person ID is not the preset identifier is considered. In this way, accuracy of person relationship recognition can be improved, and user experience can be improved.

For example, Table 5 shows a face clustering result example according to an embodiment of this application.

**Table 5**

| Sequence number | Image ID | Face ID | Person ID |
|---|---|---|---|
| 1 | 42d8166356c2d1ff9875f602e97ea293 | 0 | -1 |
| 2 | 42d8166356c2dlff9875f602e97ea293 | 1 | ser_246762133257613 |
| 3 | b4a0d50b46f4f8ff86a25916c2cedece | 0 | ser_112952351578583 |
| 4 | 2b869431a9182637d2a12c8444e352ec | 0 | -1 |
| 5 | 2586222e6dac13d5630edac4a8662208 | 0 | ser_111346622209036 |
| 6 | b320cc0aca977684063b4e3069f6fa08 | 0 | -1 |
| 7 | c65dbc73589744489502964155ad4cac0 | 0 | ser_275636865923451 |
| 8 | c65dbc73589744489502964155ad4cac0 | 1 | ser_246762133257613 |
| 9 | 26fe24ebd66f90b540cc79637efdc46d | 0 | ser_136254524879543 |
| 10 | 26fe24ebd66f90b540cc79637efdc46d | 1 | ser_246762133257616 |
| 11 | 261e24ebd66190b540cc79637efdc46d | 2 | ser_112952351578583 |

| Sequence number | Image ID | Face ID | Person ID |
|---|---|---|---|
| 12 | 261e24ebd66190b540cc79637efded6d | 3 | ser_275636865923451 |

Clustering results numbered 9, 10, 11, and 12 in Table 5 are used as examples for description. It can be learned that an image whose image ID is "26fe24ebd66f90b540cc79637efdc46d" includes four faces in total, and face IDs corresponding to the four faces are respectively 0, 1, 2, and 3. The four faces are clustered to obtain classes to which the four faces belong, that is, obtain person IDs corresponding to the four face IDs: "ser_136254524879543", "ser_246762133257616", "ser_112952351578583", and "ser_275636865923451".

It should be noted that, Table 5 is merely used as an example of the face clustering result, and does not constitute any limitation on this application. During actual application, the face clustering result may include more or less content than that in Table 5, or may be in another expression form.

S109: The facial analysis module returns the facial analysis result to the gallery APP.

S110: The facial analysis module stores the incremental face image and the face representative frame into the CV database, and updates a face image set in CV data.

It may be understood that each time a facial analysis request is received, the facial analysis module stores an incremental face image and a face representative frame in the facial analysis request that request to be analyzed and attribute information of the incremental face image and the face representative frame into the CV database. In this way, the CV database may store all images including a face and all representative frames including a face in the gallery database. These images or representative frames may be stored in a form of a set. This facilitates subsequent processing such as person relationship analysis based on the face image set. An image in the face image set is also referred to as a face image.

In addition, after each facial analysis, the facial analysis module also stores a facial analysis result (including a face clustering result, a person age, a person gender, and the like) into the CV database. This also facilitates subsequent processing such as person relationship analysis.

S111: The gallery APP stores the facial analysis result into the gallery database.

S112: The gallery APP sends a person relationship analysis request to a person relationship analysis module in the CV service.

The person relationship analysis request is used to request to analyze person relationship information of the incremental face image and the face representative frame. The person relationship information is used to represent a type of a relationship between a person included in an image and a central person. A person relationship may be, for example, a family, a son, a daughter, a parent, a colleague, or a friend. The central person is a person at a central position in social relationships. Generally, the central person may be considered as an owner of the machine or a person having a high-intimacy relationship with the owner of the machine.

Optionally, the person relationship analysis request may carry the identification information of the incremental face image and the face representative frame.

S113: The person relationship analysis module performs person relationship analysis based on the face clustering result and the face image set in the CV database in response to the person relationship analysis request, to obtain the person relationship information of the incremental face image and the face representative frame.

The person relationship analysis is also referred to as social relationship analysis, person relationship discovery, or the like.

Optionally, the person relationship analysis module may obtain person relationship information actively added by the user for a person. In addition, the person relationship analysis module may invoke a social circle recognition algorithm to recognize, based on the face clustering result, a central person in persons included in the face image set, and recognize, based on the central person, a social circle formed by the persons in the face image set and a type of the social circle. The social circle of persons is a set of persons having a social relationship. The type of the social circle is used to represent a relationship between a person in the social circle and the central person. Optionally, the type of the social circle may include a family, a son, a daughter, a parent, a colleague, a friend, or the like. In other words, the type of the social circle may be used as person relationship information.

S114: The person relationship analysis module returns the person relationship information of the incremental face image and the face representative frames to the gallery APP.

It may be understood that each time the person relationship analysis module performs person relationship analysis based on a face clustering result and a face image set, person relationship information of all images in the face image set is obtained. The person relationship analysis module may store the person relationship information, and return the person relationship information corresponding to the incremental face image and the face representative frames to the gallery APP.

S115: The gallery APP stores the person relationship information of the incremental face image and the face representative frame into the gallery database.

S116: The gallery APP sends an image semantic understanding request to a multi-modality understanding module in the CV service.

The image semantic understanding request is used to request to perform semantic understanding on the incremental image and the representative frame.

Optionally, the image semantic understanding request may carry the incremental image and the representative frame, or carry identification information of the incremental image and the representative frame.

S117: The multi-modality understanding module performs semantic understanding on the incremental image and the representative frames in response to the image semantic understanding request, to obtain visual semantic vectors.

Specifically, the multi-modality understanding module may include a pre-trained image semantic understanding model, and corresponding semantic vectors may be obtained by inputting each incremental image and representative frame into the image semantic understanding model. In embodiments, a semantic vector corresponding to an image is referred to as a visual semantic vector.

S118: The multi-modality understanding module returns the visual semantic vectors of the incremental image and the representative frames to the gallery APP.

S119: The gallery APP stores the visual semantic vectors of the incremental image and the representative frames into the gallery database.

It may be understood that, a visual semantic vector of each representative frame is used to represent a semantic meaning of a video segment to which the representative frame belongs, and has a unique correspondence with the video segment. Therefore, the visual semantic vector of the representative frame is a visual semantic vector of the video segment.

S120: The gallery APP sends attribute information, person relationship information, and visual semantic vectors of the incremental image and each video segment in the incremental video to a search module.

S121: The search module constructs, based on the attribute information, the person relationship information, and the visual semantic vectors of the incremental image and each video segment in the incremental video, inverted indexes corresponding to the incremental visual media, and stores the inverted indexes into an inverted index database.

It may be understood that when constructing indexes, the search module may alternatively construct forward indexes. In this embodiment, constructing the inverted indexes can improve efficiency of subsequent searching.

Specifically, the attribute information, the person relationship information, the visual semantic vectors, and the like are collectively referred to as information. For the incremental image, the search module may directly establish a correspondence between the incremental image and information about the incremental image.

For the incremental video, the search module may establish a correspondence between a video segment and information about the video segment, and establish a correspondence between each video segment, an incremental video to which the video segment belongs, and attribute information of the incremental video to which the video segment belongs. Person relationship information and a visual semantic vector in the information about the video segment may be represented by such information of a representative frame. In other words, person relationship information of the representative frame is used as person relationship information of the video segment, and a visual semantic vector of the representative frame is used as a visual semantic vector of the video segment.

In an embodiment, a relationship between the incremental video and information about the incremental video is represented in the following Table 6. Optionally, the attribute information of the incremental video may be stored in a document, and the document may be referred to as a parent document. Information about each video segment included in the incremental video may be stored in a document, and the document may be referred to as a sub-document. An association relationship between the parent document and the sub-document is established.

**Table 6**

| Parent document | | Sub-document | |
|---|---|---|---|
| Name of the parent document | Attribute information of a video | Name of the sub-document | Information about a video segment |
| Parent document 1 (video 1) | Video ID: ID 1; Obtaining time: 2022.10.1; Obtaining location: L1; Person name: N1; Tag: Tar1 | Sub-document a1 (video segment a1) | Start time: 0; End time: T11; Representative frame: Fa1; Tag union set: {Tara11, Tara12, Tara13, Tara14, Tara15...} <br><br> Person relationship information: son; <br><br> Visual semantic vector: vector-a1 |
| | | Sub-document b1 (video | Start time: T11; End time: T12; |

(continued)

| Parent document | | Sub-document | |
|---|---|---|---|
| Name of the parent document | Attribute information of a video | Name of the sub-document | Information about a video segment |
| | | segment b1) | Representative frame: Fb1; Tag union set: {Tarb11, Tarb12, Tarb13, Tarb14, Tarb15...} Person relationship information: parent; Visual semantic vector: vector-b1 |
| | | ... | ... |
| | | Sub-document n1 (video segment n1) | Start time: T1n-1; End time: T1n; Representative frame: Fn1; Tag union set: {Tarn11, Tarn12, Tarn13, Tarn14, Tarn15...} Person relationship information: daughter; Visual semantic vector: vector-n1 |
| Parent document 2 (video 2) | Video ID: ID 2; Obtaining time: T2; Obtaining location: L2; Person name: N2; Tag: Tar2 | Video segment a2 | Start time: 0; End time: T21; Representative frame: Fa2; Tag union set: {Tara21, |
| | | | Tara22, Tara23, Tara24, Tara25...} Person relationship information: classmate; Visual semantic vector: vector-a2 |
| | | Video segment b2 | Start time: T21; End time: T22; Representative frame: Fb2; Tag union set: {Tarb21, Tarb22, Tarb23, Tarb24, Tarb25...} Person relationship information: /; Visual semantic vector: vector-b2 |
| | | ... | ... |
| | | Video segment n2 | Start time: T2n-1; End time: T2n; Representative frame: Fn2; Tag union set: {Tarn21, Tarn22, Tarn23, Tarn24, Tarn25...} Person relationship information: classmate; Visual semantic vector: vector-n2 |
| ... | ... | ... | ... |

It should be noted that, Table 6 is merely used as an example for solution understanding, and does not represent actual data or a representation form of the actual data.

It may be understood that each time the user adds or modifies visual media, the process shown in step S101 to step S121 is performed. In this way, the inverted index database may include indexes of all visual media stored in the gallery database. In addition, when the user deletes visual media or attribute information from the gallery database, the gallery APP deletes the visual media or the attribute information, and notifies the CV service. The search module in the CV service may delete a corresponding index from the inverted index database. In this way, data of the inverted index database is updated. A data deletion process is not described in detail herein. In short, index data in the inverted index database is maintained consistent with visual media in the gallery database. In this way, an accurate search function can be provided for the gallery APP.

2. Search stage

For example, FIG. 10 is an interaction flowchart of another visual media search method example according to an embodiment of this application. As shown in FIG. 10, the search stage of the method includes the following steps.

S201: In response to an operation of entering a search text by a user, a gallery APP sends the search text to a search module.

With reference to FIG. 7, for example, the user may enter a search text "traveling with family last year" in a search box. After receiving the text entered by the user, the gallery APP sends the text to the search module.

S202: After receiving the search text, the search module sends a language understanding request to a natural language understanding module.

The language understanding request is used to request to perform natural language understanding on the search text. Optionally, the language understanding request may carry the search text.

S203: The natural language understanding module performs natural language understanding on the search text in response to the language understanding request, to recognize a semantic subject, a person relationship, category information, and the like included in the search text.

Optionally, the natural language understanding module may recognize the semantic subject, the person relationship, and the category information based on a natural language understanding model and/or a named entity recognition (named entity recognition, NER) technology.

In this embodiment, natural language understanding is performed on the search text "traveling with family last year", and a semantic subject "last year" and a person relationship "family" may be recognized.

S204: The natural language understanding module returns the recognized semantic subject, person relationship, and category information to the search module.

S205: The search module sends a text semantic understanding request to a multi-modality understanding module.

The text semantic understanding request is used to request to perform semantic understanding on the search text.

Optionally, the text semantic understanding request may carry the search text.

S206: The multi-modality understanding module performs semantic understanding on the search text in response to the text semantic understanding request, to obtain a text semantic vector.

Specifically, the multi-modality understanding module may include a pre-trained text semantic understanding model, and a corresponding semantic vector may be obtained by inputting the search text into the image semantic understanding model. In embodiments, a semantic vector corresponding to a text is referred to as a text semantic vector.

S207: The multi-modality understanding module returns the text semantic vector to the search module.

S208: The search module performs a plurality of recalls in an inverted index database based on the semantic subject, the person relationship, the category information, and the text semantic vector, to obtain a plurality of recall results.

Specifically, the search module may perform a semantic subject recall (also referred to as an entity recall) in the inverted index database based on the semantic subject, that is, search the inverted index database for a video segment or an image matching the semantic subject, to obtain a semantic subject recall result; perform a person relationship recall in the inverted index database based on the person relationship, that is, search the inverted index database for a video segment or an image whose person relationship information matches the person relationship in the search text, to obtain a person relationship recall result; perform a category information recall in the inverted index database based on the category information, that is, search the inverted index database for a video segment or an image whose tag matches the category information, to obtain a category information recall result; and perform a semantic vector recall (a vector recall for short) in the inverted index database based on the text semantic vector, that is, search the inverted index database for a video segment or an image whose visual semantic vector matches the text semantic vector, to obtain a vector recall result.

It should be noted that the "matching" may mean being consistent, or may mean that a similarity satisfies a preset condition.

The vector recall is used as an example. In some embodiments, vector similarities between the text semantic vector and visual semantic vectors corresponding to images or video segments in the inverted index database may be calculated. Optionally, an image or a video segment whose vector similarity is greater than a preset threshold may be selected and recalled. Optionally, the plurality of obtained vector similarities may be sorted, and N indexes having higher vector similarities are selected as vector recall results. N is an integer greater than 0. For example, N may be a preset quantity of vector recall results, for example, 5, 8, or 10.

The vector similarity is a similarity degree between two vectors, and may be calculated by using a plurality of methods. For example, the similarity degree may be determined by calculating a cosine similarity between the two vectors, or another method may be used. This is not limited in this application.

Optionally, if a hit object is an image, the plurality of recall results may be represented by using an ID of the image. If the hit object is a video segment, the plurality of recall results may be represented by using an ID of the video segment and an ID of a video to which the video segment belongs.

Optionally, during a recall, the search module may relax a recall condition to some extent, that is, appropriately relax a search range, to obtain more comprehensive recall results.

S209: The search module filters the plurality of recall results based on the search text.

As described above, a recall condition may be relaxed during the vector recall, and therefore the recall results may include many results that do not match the search phrase. In addition, during the plurality of recalls, for each recall, a recall condition of another recall may not be considered, and therefore the recall results may also include many results that do not match the search phrase. In view of this, the search module may perform time filtering, space filtering, person relationship filtering, and the like on the plurality of recall results, to improve accuracy of a final search result.

Specifically, the search module may filter out, based on time included in the search text, a result that does not match the time in the plurality of recall results. For example, the time in the search text is "last year", and a result whose obtaining time does not overlap with the "last year" in the plurality of recall results may be filtered out. For example, a recall result whose obtaining time is January 1 this year is filtered out.

The search module may filter out, based on a location included in the search text, a result that does not match the location in the plurality of recall results. For example, the location in the search text is "Haidian District, Beijing city", and a recall result whose location is "Xicheng District, Beijing city" in the plurality of recall results may be filtered out.

The search module may filter out, based on a person relationship included in the search text, a result that does not match the person relationship in the plurality of recall results. For example, the person relationship in the search text is "I and son", and a recall result in which person relationship information includes only "I" and a recall result in which person relationship information includes only the "son" in the plurality of recall results may be filtered out.

S210: The search module sorts the plurality of recall results, to obtain a search result.

In some embodiments, an intersection set or a union set of the plurality of recall results may be sorted.

For example, each recall result may include a scoring result. The scoring result represents a matching degree between the recall result and the search text. Weighted fusion and sorting may be performed on the plurality of recall results based on scoring results. Optionally, the plurality of recall results may be sorted in descending order of the scoring results. A higher scoring result indicates better matching the search text.

S211: The search module returns the search result to the gallery APP.

The search module returns sorted search results to the gallery APP.

S212: The gallery APP presents the search result.

The search result may be presented in, for example, the first search result display interface 330 shown in FIG. 3a(2), or the search result interface 601 shown in FIG. 4c(2).

In this embodiment, natural language understanding is performed on search content entered by a user, to recognize a semantic subject, a person relationship, category information, and the like in the search content, and semantic understanding is performed on the search content, to obtain a text semantic vector. Then, a plurality of recalls are performed based on the semantic subject, the person relationship, the category information, and the text semantic vector. In this way, matching is performed with the search text in a plurality of dimensions, that is, an all-round search is performed in a plurality of dimensions, so that a matching degree between a search result and the search text is greatly improved, thereby improving user experience. In addition, a plurality of recall results are sorted, so that the user can preferentially see visual media having a high matching degree with the search text, thereby improving user experience.

Examples of the visual media search method provided in embodiments of this application are described in detail above. It may be understood that, to implement the foregoing functions, the electronic device includes corresponding hardware and/or software modules for performing the functions. Persons skilled in the art should easily be aware that, with reference to units and algorithm steps of the examples described in embodiments disclosed in this specification, this application can be implemented by hardware or a combination of hardware and computer software. Whether a function is performed by hardware or computer software driving hardware depends on particular applications and design constraints of the technical solutions. Persons skilled in the art may use different methods to implement the described functions for each specific application with reference to embodiments. However, it should not be considered that the implementation goes beyond the scope of this application.

In embodiments of this application, the electronic device may be divided into functional modules based on the foregoing method examples. For example, functional modules, such as a detection unit, a processing unit, and a display unit, may be obtained through division based on the functions, or two or more functions may be integrated into one module. The integrated module may be implemented in a form of hardware or a software functional module. It should be noted that, module division in embodiments of this application is an example, and is merely a logical function division. In actual implementation, another division manner may be used.

It should be noted that, all related content of the steps in the foregoing method embodiments may be quoted to functional descriptions of corresponding functional modules. Details are not described herein again.

An embodiment of this application further provides a computer-readable storage medium. The computer-readable storage medium stores a computer program, and when the computer program is executed by a processor, the processor is enabled to perform the visual media search method in any one of the foregoing embodiments.

An embodiment of this application further provides a computer program product. When the computer program product runs on a computer, the computer is enabled to perform the foregoing related steps, to implement the visual media search method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the visual media search method in the foregoing method embodiments.

The electronic device, the computer-readable storage medium, the computer program product, and the chip provided in embodiments may be configured to perform the corresponding method provided above. Therefore, for beneficial effects that can be achieved by them, refer to the beneficial effects of the corresponding method provided above. Details are not described herein again.

**Claims**

1. A visual media search method, comprising:

   displaying a first interface of a gallery application, wherein the first interface comprises an input box, and the input box comprises a first text, wherein
   the first interface comprises a first thumbnail of a first video, and the first thumbnail comprises a first time point;
   starting to play the first video from the first time point in response to a trigger operation performed by a user on the first thumbnail;
   displaying a second interface of the gallery application, wherein the second interface comprises the input box, and the input box comprises a second text, wherein
   the second interface comprises a second thumbnail of the first video, and the second thumbnail comprises a second time point; and
   starting to play the first video from the second time point in response to a trigger operation performed by the user on the second thumbnail, wherein the second time point is later than the first time point.

2. The method according to claim 1, wherein the first text is different from the second text, the first video matches the first text, and the first video matches the second text.

3. The method according to claim 2, wherein the first video comprises a first video frame and a second video frame; and that the first video matches the first text and that the first video matches the second text comprise:
   the first text matches the first video frame corresponding to the first thumbnail, the second text matches the second video frame corresponding to the second thumbnail, and the second video frame is after the first video frame.

4. The method according to claim 3, wherein starting to play the first video from the first time point in response to the trigger operation performed by the user on the first thumbnail comprises:

   starting to play the first video from the first video frame or a first start frame; and
   starting to play the first video from the second time point in response to the trigger operation performed by the user on the second thumbnail comprises:

   starting to play the first video from the second video frame or a second start frame, wherein
   the first start frame is before the first video frame, the second start frame is before the second video frame, and the second start frame is after the first video frame.

5. The method according to any one of claims 1 to 4, further comprising:

displaying a third interface of the gallery application, wherein the third interface comprises the input box, the input box comprises a third text, the third text is different from the first text, and the third interface comprises the first thumbnail; and

starting to play the first video from the first time point in response to a trigger operation performed by the user on the first thumbnail.

6.  The method according to any one of claims 1 to 4, wherein the first interface further comprises a third thumbnail of the first video, and the third thumbnail comprises a third time point; and the method further comprises:

starting to play the first video from the third time point in response to a trigger operation performed by the user on the third thumbnail, wherein the first text matches a third video frame corresponding to the third thumbnail, and the third time point is later than the second time point.

7.  The method according to claim 6, wherein starting to play the first video from the third time point comprises:

starting to play the first video from the third video frame or a third start frame, wherein the third start frame is before the third video frame, and the third start frame is after the second video frame.

8.  The method according to any one of claims 1 to 7, wherein the first interface further comprises a fourth thumbnail of a second video, and the fourth thumbnail comprises a fourth time point; and the method further comprises:

starting to play the second video from the fourth time point in response to a trigger operation performed by the user on the fourth thumbnail, wherein the first text matches a fourth video frame corresponding to the fourth thumbnail, and the second video is different from the first video.

9.  The method according to claim 1, further comprising:

receiving a first operation of entering a fourth text in the input box by the user;

performing a search in response to the first operation, to obtain a plurality of hit results matching the fourth text, wherein the plurality of hit results comprise at least one hit image and at least one hit video segment, and the at least one hit video segment is a video segment in at least one target video;

determining a matching score of each hit result, wherein the matching score represents a matching degree between the hit result and the fourth text;

sorting the at least one hit image and the at least one target video based on the matching score of each hit result, to obtain a first sorting result; and

displaying the at least one hit image and the at least one target video based on the first sorting result.

10. The method according to claim 9, wherein sorting the at least one hit image and the at least one target video based on the matching score of each hit result, to obtain the first sorting result comprises:

for a first target video, using a highest score in matching scores of all first hit video segments as a matching score of the first target video, wherein the first target video is any one of the at least one target video, and the first hit video segment is a hit video segment in the first target video; and

sorting the at least one hit image and the at least one target video based on matching scores, to obtain the first sorting result.

11. The method according to claim 9, wherein there are a plurality of first hit video segments, and the method further comprises:

sorting the plurality of first hit video segments based on matching scores, to obtain a second sorting result.

12. The method according to claim 11, wherein after the at least one hit image and the at least one target video are displayed based on the first sorting result, the method further comprises:

receiving a second operation of playing the first target video by the user; and

playing the plurality of first hit video segments sequentially based on the second sorting result in response to the second operation.

13. The method according to any one of claims 9 to 11, wherein displaying the at least one hit image and the at least one target video comprises:

displaying a thumbnail of each hit image and a thumbnail of each target video, wherein

a thumbnail of the first target video is a thumbnail of a frame of image in a second hit video segment, and the second hit video segment is a video segment having the highest matching score in all the first hit video segments; and

one or more of the following data is displayed in the thumbnail of the first target video: a start playback moment of the second hit video segment, an end playback moment of the second hit video segment, an intermediate playback moment of the second hit video segment, a total quantity of the first hit video segments, and a total quantity of video segments comprised in the first target video.

14. A visual media search method, comprising:

displaying a first user interface of a gallery application, wherein the first user interface comprises thumbnails of a plurality of image resources in the gallery application, and the image resource comprises a picture or a video; moving, in response to a sliding gesture of a user in the first user interface, positions of the thumbnails of the plurality of image resources along a direction of the sliding gesture, wherein a first button is displayed in the first user interface; and

displaying a search interface in response to a tap/click operation performed by the user on the first button, wherein the search interface comprises a first search box, the first search box is configured to receive text information entered by the user, and the text information is used to search for an image resource.

15. The method according to claim 14, further comprising:
displaying a second user interface after the sliding gesture performed by the user in the first user interface stops, wherein the second user interface comprises a second search box.

16. The method according to claim 15, further comprising:
determining that the sliding gesture performed by the user in the first user interface stops if a next sliding gesture is not detected within first duration after the sliding gesture is detected.

17. The method according to claim 14 or 15, further comprising:
displaying the search interface in response to a tap/click operation performed by the user on the second search box.

18. The method according to any one of claims 14 to 17, wherein displaying the first user interface of the gallery application comprises:

displaying a third user interface of the gallery application, wherein the third user interface comprises thumbnails of a plurality of image resources in the gallery application; and

displaying the first user interface of the gallery application in response to a sliding gesture of the user in the third user interface, wherein the image resources comprised in the first user interface are different from the image resources comprised in the third user interface.

19. The method according to claim 18, wherein the third user interface comprises the second search box, and the method further comprises:
hiding the second search box in response to the sliding gesture of the user in the third user interface.

20. The method according to any one of claims 14 to 19, further comprising:

displaying a first search result interface in response to receiving first text information entered by the user in the first search box, wherein the first search result interface comprises a first thumbnail of a first video, and the first thumbnail comprises a first time point; and

displaying a second search result interface in response to receiving second text information entered by the user in the first search box, wherein the second search result interface comprises a second thumbnail of the first video, the second thumbnail comprises a second time point, and the second time point is later than the first time point.

21. The method according to claim 20, wherein an image of the first thumbnail is an image frame corresponding to the first time point in the first video, and an image of the second thumbnail is an image frame corresponding to the second time point in the first video.

22. The method according to claim 20 or 21, further comprising:

starting to play the first video from the first time point in response to a tap/click operation performed by the user on the first thumbnail; and

starting to play the first video from the second time point in response to a tap/click operation performed by the user on the second thumbnail.

23. The method according to claim 20 or 21, further comprising:

displaying a first playback interface of the first video in response to a tap/click operation performed by the user on the first thumbnail, wherein the first playback interface comprises a plurality of mark points, and the mark point indicates a start position of a video segment corresponding to the first text information in the first video.

24. The method according to any one of claims 20 to 23, wherein the first text information is different from the second text information, the first video comprises a first image frame and a second image frame, the first text information matches the first image frame corresponding to the first thumbnail, the second text information matches the second image frame corresponding to the second thumbnail, and the second image frame is after the first image frame.

25. An electronic device, comprising a memory, a display screen, and a processor, wherein

the memory is coupled to the processor, the memory is configured to store computer program code, the computer program code comprises computer instructions, the display screen provides a display function, and the processor invoke the computer instructions to enable the electronic device to perform the visual media search method according to any one of claims 1 to 13 or the visual media search method according to any one of claims 14 to 24.

26. A computer-readable storage medium, wherein the computer-readable storage medium stores a computer program, and when the computer program is executed by a processor, the visual media search method according to any one of claims 1 to 13 or the visual media search method according to any one of claims 14 to 24 is implemented.

FIG. 1a

FIG. 1b

101

Clock  Calendar  Gallery  Memo

File
manager  Email  Music  Calculator

Camera  Contacts  Phone  Messaging

FIG. 1c(1)

102

Album

Beijing

Camera
1,020

All photos
2,010

Videos
460

Photo    Album  Moment  Discovery

FIG. 1c(2)

TO FIG. 1c(3)

CONT. FROM
FIG. 1c(2)

FIG. 1c(3)

(a)

(b)

FIG. 1d

102

103

5G 5G 📶 ■8:00

+ ::

Album

Q Boy standing outdoors

Camera
1,020

All photos
2,010

Videos
460

Photo  Album Moment Discovery

FIG. 1e(1)

5G 5G 📶 ■8:00

← Q Boy standing outdoors X

There is no search result for the
"boy standing outdoors". Please
try another search word.

Photo  Album Moment Discovery

FIG. 1e(2)

TO FIG. 1e(3)

CONT. FROM
FIG. 1e(2)

201

FIG. 1e(4)

FIG. 1e(3)

Electronic device 100

Antenna 1

Antenna 2

| Mobile communication module 2G/3G/4G/5G [150] | Wireless communication module BT/WLAN/GNSS/NFC/IR/FM [160] |

Speaker [170A]

Receiver [170B]

Microphone [170C]

Headset jack [170D]

Audio module [170]

Display screens 1–N [194]

Cameras 1–N [193]

Indicator [192]

Motor [191]

Button [190]

Internal memory [121]

SIM card interfaces 1–N [195]

External memory interface [120]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 2a

| Application layer | Gallery APP | CV service | | Natural language understanding module |
| | | Facial analysis module | Person relationship analysis module | |
| | Search module | Video segmentation module | Multi-modality understanding module | ... |

| Application framework layer | Window manager | Phone manager | Content provider | Resource manager |
| | Notification manager | View system | ... | |

| System library | Surface manager | Three-dimensional graphics processing library | Android runtime |
| | Two-dimensional graphics engine | Media library | Image processing library | ... |

| Kernel layer | Display driver | Camera driver | |
| | Audio driver | Sensor driver | ... |

FIG. 2b

FIG. 3a(1)

TO FIG. 3a(2)

EP 4 752 699 A1

CONT. FROM FIG. 3a(1)

300

330

Album

Q Boy standing outdoors   More>

**10 pictures/videos are found**

Video segment a of video A

Video segment b of video A

331

......

Video segment c of video A

**Videos**

Video segment a of video A

332

02:18/08:32   4>

**Pictures**

333

6>

Photo   **Album** Moment Creation

Video segment a of video A

300

340

October 2, 2023
20:28

02:18/08:32

Share Favorites Edit Delete

FIG. 3a(2)

74

FIG. 3b(1)

FIG. 3b(2)

FIG. 3c

FIG. 4a(1)

TO FIG. 4a(2)

CONT. FROM
FIG. 4a(1)

— 300

5G 5G 📶 ■ 8:00

— 430

🔍 Boy standing outdoors

— 431

**Online search** ∨

○

○

○

— 432

**Gallery** ∨

02:18/ 04:26/
08:32 14:18

...

Searching in
applications

— 433

**Local files** ∨

FIG. 4a(2)

FIG. 4b(1)

TO FIG. 4b(2)

CONT. FROM
FIG. 4b(1) — 300

460

Documentary about city B  Q

All  Movies and    Short    Music
     TV series     videos

Video C

05:48/22:32
Release time:
2018-05-03

01:40/15:50
Release time:
2023-04-23

03:27/13:17
Release time:
2019-07-16

02:55/21:04
Release time:
2020-05-11

...

FIG. 4b(2)

FIG. 4c(1)

FIG. 4c(2)

TO FIG. 4c(3)

CONT. FROM
FIG. 4c(2)

FIG. 4c(4)

FIG. 4c(3)

FIG. 4d

5052

5051

Boy standing outdoors

10 pictures/videos are found                    More>

5053

3 segments hit/5
segments in total

02:18/08:32

2 segments hit/8
segments in total

04:26/14:18

Videos

5051

3 segments hit/5 segments in
total                                          4>

02:18/08:32

Pictures

6>

Photo          Album          Moment          Discovery

FIG. 4e

FIG. 4f

FIG. 4g

FIG. 4h

FIG. 4i(1)

FIG. 4i(2)

TO FIG. 4i(3)

FIG. 4i(3)

EP 4 752 699 A1

(a)

(b)

FIG. 4j

(a)

(b)

FIG. 4k

FIG. 4l(1)

FIG. 4l(2)

FIG. 4l(3)

FIG. 4A

EP 4 752 699 A1

FIG. 4B

EP 4 752 699 A1

**FIG. 4C(1)** TO FIG. 4C(2)

EP 4 752 699 A1

— 100

— 202

—201

5G 5G  📶  8:00

🔍 Try to search for a photo of walking on a seaside in August last year

**Search history**                    Clear

Picnic   Girl   Seaside

**Person**

**Location**

| Beijing city | Xi'an city | Chengdu city | Shenzhen city |

**Time**

| Children's Day | Last week | Last month | This year |

**Event**

| Food | Animal | Document |

FIG. 4C(2)

EP 4 752 699 A1

Photo

402 — Try to search for a photo of walking on a seaside in August last year

November 9, 2023
Xi'an city

October 30, 2023
Beijing city

Photo — Album — Moment — Creation

100 — 401 — 403

Upward
sliding
gesture

Photo

October 30, 2023
Beijing city

September 17, 2023
Chengdu city

**Try the search function to find a photo**

July 25, 2023

Photo — Album — Moment — Creation

100 — 404 — 405 — 406

The upward
sliding gesture
has not stopped

TO FIG.
4D(2)

FIG. 4D(1)

EP 4 752 699 A1

CONT. FROM
FIG. 4D(1)

FIG. 4D(2)

EP 4 752 699 A1

FIG. 4E(1)          TO FIG. 4E(2)

— 100

201

202

Try to search for a photo of walking on a seaside in August last year

**Search history**                     Clear

Picnic     Girl     Seaside

**Person**

**Location**

| Beijing city | Xi'an city | Chengdu city | Shenzhen city |

**Time**

| Children's Day | Last week | Last month | This year |

**Event**

| Food | Animal | Document |

FIG. 4E(2)

EP 4 752 699 A1

FIG. 4F

Video
A

Playing volleyball on a seaside in August last year

Walking on a seaside in August last year

Running on a seaside in August last year

0
02:18
06:21
08:32
t

...

FIG. 4G

FIG. 4H

EP 4 752 699 A1

**Left phone (501):**

Walking on a seaside in August last year

| | |
|---|---|
| 📍 Qingdao city | 54 |
| 📍 Weihai city | 17 |
| 📍 Dalian city | 8 |

More ⌄

**54 photos/videos are found**          View all>

5021          02:18

**Photos**          48>

**Videos**          02:18/08:32          6>

**Right phone (601):**

February 5, 2022
3:18 PM

‖ 02:18 ●————————— 08:32          602

Share  Favorites  Edit  Delete  More

FIG. 4J

EP 4 752 699 A1

FIG. 4K

FIG. 5a

User

Mobile phone 300

| Gallery service module 510 | Search module 520 | Multi-modality understanding module 530 | Natural language understanding module 540 |

Index construction

S501: Addition operation or modification operation on a video

S502: Store the video

Charged and screen-off state

S503: Determine representative frames of the video

S504: Return the representative frames of the video and related information of the representative frames

S505: Store the representative frames of the video and the related information of the representative frames

S506: Determine visual semantic vectors corresponding to the representative frames

S507: Return the visual semantic vectors corresponding to the representative frames

S508: Store the representative frames of the video and the related information of the representative frames

S509: Send the representative frames, the related information of the representative frames, and the visual semantic vectors of the representative frames

S510: Construct indexes corresponding to the video

Search

S511: Enter a search text

S512: Send the search text

S513: Determine a text semantic vector corresponding to the search text

S514: Return the text semantic vector corresponding to the search text

S515: Vector recall

S516: Recognize an entity in the search text

S517: Return the entity in the search text

S518: Entity recall

S519: Sort the vector recall result and the entity recall result

S520: Return a search result

S521: Present the search result

FIG. 5b

Representative frames

Video
segment 1

Video
segment 2

Video
segment 3

FIG. 6

Calculate distances
between the text
semantic vector
corresponding to
the search text and
the plurality of
cluster center
points in the index
database

Determine
that the
cluster
center
point 1 is
at a
shortest
distance

Cluster
center point 1

Inverted index database

Index 1    Index 2    Index 3    Inverted zipper 1

Select the top N
from the inverted
zipper 1

Vector recall
result

Index 1

Index 2

Index 3

FIG. 7

FIG. 8

EP 4 752 699 A1

User | Gallery APP | Gallery database | Search module | CV service

CV service: CV database | Facial analysis module | Person relationship analysis module | Video segmentation module | Multi-modality understanding module

Index construction

Add and/or modify visual media

S101: Store incremental visual media and an attribute of the incremental visual media

S102: Synchronize data

Charged and screen-off

S103: Send a segmentation request

S104: Perform segmentation processing on an incremental video, to obtain a plurality of video segments and attribute information of the plurality of video segments, and extract representative frames from the video segments

S105: Return the video segments, the attribute information of the video segments, and the representative frames

S106: Store the video segments, the attribute information of the video segments, and the representative frames

TO FIG. 9B

FIG. 9A

TO FIG. 9B

S107: Send a facial analysis request

S108: Perform facial analysis on an incremental face image and a face representative frame, to obtain a facial analysis result, where the facial analysis result includes a face clustering result

S109: Return the facial analysis result

S110: Store the incremental face image and the face representative frame, and update a face image set

S111: Store the facial analysis result

S112: Send a person relationship analysis request

S113: Perform person relationship analysis based on the face clustering result and the face image set, to obtain person relationship information of the incremental face image and the face representative frame

S114: Return the person relationship information of the incremental face image and the face representative frame

FIG. 9B

EP 4 752 699 A1

CONT. FROM FIG. 9B　　　　　　　　　　CONT. FROM FIG. 9B

S115: Store the person relationship information of the incremental face image and the face representative frame

S116: Send an image semantic understanding request

S117: Perform semantic understanding on an incremental image and the representative frames, to obtain visual semantic vectors

S118: Return the visual semantic vectors of the incremental image and the representative frames

S119: Store the visual semantic vectors of the incremental image and the representative frames

S120: Send attribute information, person relationship information, and visual semantic vectors of the incremental image and each video segment in the incremental video

S121: Construct inverted indexes corresponding to the incremental visual media

FIG. 9C

EP 4 752 699 A1

FIG. 10

## INTERNATIONAL SEARCH REPORT

| | International application No. |
|---|---|
| | **PCT/CN2024/126082** |

**A.    CLASSIFICATION OF SUBJECT MATTER**

G06F 3/04842(2022.01)i

According to International Patent Classification (IPC) or to both national classification and IPC

**B.    FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS, VEN, CNTXT, USTXT, EPTXT, WOTXT, CNKI, IEEE: 视频, 图像, 图片, 音频, 媒体, 搜索, 检索, 查询, 时间, 进度, 播放, 滑动, 拖拽, 帧, 匹配, 相似, video, image, audio, media, search, retrieval, time, progress, play, slid+, drag, frame, match, similar

**C.    DOCUMENTS CONSIDERED TO BE RELEVANT**

| Category* | Citation of document, with indication, where appropriate, of the relevant passages | Relevant to claim No. |
|---|---|---|
| X | CN 116431855 A (HONOR TERMINAL CO., LTD.) 14 July 2023 (2023-07-14) description, paragraphs [0079]-[0309], and figures 1-22 | 1-13, 25-26 |
| Y | CN 116431855 A (HONOR TERMINAL CO., LTD.) 14 July 2023 (2023-07-14) description, paragraphs [0079]-[0309], and figures 1-22 | 14-24 |
| Y | CN 113553447 A (ALIBABA GROUP HOLDING LTD.) 26 October 2021 (2021-10-26) description, paragraphs [0066]-[0170] | 14-24 |
| A | CN 115935007 A (BEIJING DAJIA INTERNET INFORMATION TECHNOLOGY CO., LTD.) 07 April 2023 (2023-04-07) entire document | 1-26 |
| A | US 2014195513 A1 (CORTICA, LTD.) 10 July 2014 (2014-07-10) entire document | 1-26 |
| A | US 2014195911 A1 (LG ELECTRONICS INC.) 10 July 2014 (2014-07-10) entire document | 1-26 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 January 2025** | **09 January 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/126082**

| Patent document cited in search report | | | Publication date (day/month/year) | Patent family member(s) | | | Publication date (day/month/year) |
|---|---|---|---|---|---|---|---|
| CN | 116431855 | A | 14 July 2023 | None | | | |
| CN | 113553447 | A | 26 October 2021 | None | | | |
| CN | 115935007 | A | 07 April 2023 | None | | | |
| US | 2014195513 | A1 | 10 July 2014 | US | 10380164 | B2 | 13 August 2019 |
| US | 2014195911 | A1 | 10 July 2014 | US | 9600170 | B2 | 21 March 2017 |
| | | | | WO | 2014109449 | A1 | 17 July 2014 |
| | | | | KR | 20140090768 | A | 18 July 2014 |
| | | | | KR | 102081927 | B1 | 26 February 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311544834
- CN 202311580640X
- CN 202311580872
- CN 202311589348